(19)

Europäisches
Patentamt

European
Patent Office

Office européen
des brevets

(11) **EP 4 676 027 A1**

(12) **EUROPEAN PATENT APPLICATION**

(43) Date of publication:
**07.01.2026 Bulletin 2026/02**

(21) Application number: **25187320.4**

(22) Date of filing: **03.07.2025**

(51) International Patent Classification (IPC):
*H04N 19/103* (2014.01)    *H04N 19/11* (2014.01)
*H04N 19/176* (2014.01)    *H04N 19/593* (2014.01)

(52) Cooperative Patent Classification (CPC):
**H04N 19/11; H04N 19/103; H04N 19/176;
H04N 19/593**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **03.07.2024 US 202463667220 P**

(71) Applicant: **Comcast Cable Communications, LLC
Philadelphia, PA 19103 (US)**

(72) Inventors:
• **BLESTEL, Médéric
Philadelphia, 19103 (US)**
• **ANDRIVON, Pierre Jean
Philadelphia, 19103 (US)**

(74) Representative: **V.O.
P.O. Box 87930
2508 DH Den Haag (NL)**

(54) **SIMILARITY EVALUATION FOR DIVERSIFYING INTRA CODING MODES**

(57) Predictor generation for a first prediction sub-mode may substantially be the same as another prediction sub-mode. Similarities between the two prediction sub-modes may be evaluated by comparing parameters derived in sub-mode selection. A coder may, based on evaluation results, modify or replace one of the prediction sub-modes for processing a current block of content.

FIG. 26

**Description**

CROSS-REFERENCE TO RELATED APPLICATIONS

This application claims the benefit of U.S. Provisional Application No. 63/667,220 filed on July 3, 2024. The above referenced application is hereby incorporated by reference in its entirety.

BACKGROUND

A computing device processes video for storage, transmission, reception, and/or display. Processing a video comprises encoding and decoding, for example, to reduce a data size associated with the video.

SUMMARY

The following summary presents a simplified summary of certain features. The summary is not an extensive overview and is not intended to identify key or critical elements.
A video may comprise a sequence of frames displayed consecutively. A coder (e.g., encoder and/or decoder) may use prediction modes or sub-modes to reduce redundancy within a single frame. Predictor generation for a first sub-mode (e.g., sub-modes based on Decoder-side Intra Mode Derivation and Template-based Intra Mode Derivation) may substantially be the same as another sub-mode. The coder may evaluate similarities between the two sub-modes by comparing parameters derived in sub-mode selection. The evaluation may allow at least one of the sub-modes to be modified or replaced, which may increase predictor diversity, and improve compression efficiency.
These and other features and advantages are described in greater detail below.

BRIEF DESCRIPTION OF THE DRAWINGS

Some features are shown by way of example, and not by limitation, in the accompanying drawings. In the drawings, like numerals reference similar elements.

FIG. 1 shows an example video coding/decoding system.

FIG. 2 shows an example encoder.

FIG. 3 shows an example decoder.

FIG. 4 shows an example quadtree partitioning of a coding tree block (CTB).

FIG. 5 shows an example quadtree corresponding to the example quadtree partitioning of the CTB in FIG. 4.

FIG. 6 shows example binary tree and ternary tree partitions.

FIG. 7 shows an example of combined quadtree and multi-type tree partitioning of a CTB.

FIG. 8 shows a tree corresponding to the combined quadtree and multi-type tree partitioning of the CTB shown in FIG. 7.

FIG. 9 shows an example set of reference samples determined for intra prediction of a current block.

FIGS. 10A and 10B show example intra prediction modes.

FIG. 11 shows a current block and corresponding reference samples.

FIG. 12 shows an example application of an intra prediction mode for prediction of a current block.

FIG. 13A shows an example of inter prediction.

FIG. 13B shows an example motion vector.

FIG. 14 shows an example of bi-prediction.

FIG. 15A shows example spatial candidate neighboring blocks for a current block.

FIG. 15B shows example temporal, co-located blocks for a current block.

FIG. 16A shows an example of intra block copy (IBC) for encoding.

FIG. 16B shows an example of Reconstruction-Reordered Intra Block Copy (RR-IBC).

FIG. 17 shows an example of intra template matching prediction (IntraTMP) for determining a current block.

FIG. 18 shows an example of decoder-side intra mode derivation (DIMD) for coding a current block.

FIG. 19 shows an example of a template for computing a histogram of gradient (HoG) used in DIMD.

FIG. 20 shows an example method for DIMD predictor derivation.

FIG. 21 shows an example of neighboring blocks of a current block used to determine a histogram.

FIG. 22A shows an example method for determining a merged HoG (MHoG) for a current block.

FIG. 22B shows an example method for determining a histogram of occurrences (HoC) for a current block.

FIG. 23A shows an example of DIMD information from a plurality of neighboring blocks of a current block.

FIG. 23B shows an example graphical representation of combining the DIMD information from the plurality of neighboring blocks of FIG. 23A to generate an MHoG .

FIG. 23C shows an example graphical representation of combining the DIMD information from the plurality of neighboring blocks of FIG. 23A to generate an HoC.

FIG. 24A shows an example flowchart of the DIMD Merge List mode for deriving a list of DIMD merge candidates.

FIG. 24B shows a flowchart of an example for generating a history-based table of DIMD merge candidates.

FIG. 25 shows an example of template-based intra mode derivation (TIMD) for coding a current block.

FIG. 26 shows an example method for determining a similarity metric between two intra coding modes (or sub-modes) based on mode derivation parameters of the two modes.

FIG. 27 shows an example of the mode derivation parameter values for two intra coding modes.

FIG. 28A shows an example method for evaluating similarities between two intra coding sub-modes for increasing the diversity of predictors.

FIG. 28B shows an example method for evaluating similarities between two intra coding sub-modes for increasing the diversity of predictors.

FIG. 29 shows a block diagram of an example computer system in which embodiments of the present disclosure may be implemented.

FIG. 30 shows example elements of a computing device that may be used to implement any of the various devices described herein.

DETAILED DESCRIPTION

The accompanying drawings and descriptions provide examples. It is to be understood that the examples shown in the drawings and/or described are non-exclusive, and that features shown and described may be practiced in other examples. Examples are provided for operation of video encoding and decoding systems, which may be used in the technical field of video data storage and/or transmission/reception. More particularly, the technology disclosed herein may relate to video compression as used in encoding and/or decoding devices and/or systems.

A video sequence, comprising multiple pictures/frames, may be represented in digital form for storage and/or transmission. Representing a video sequence in digital form may require a large quantity of bits. Large data sizes that may be associated with video sequences may require significant resources for storage and/or transmission. Video encoding may be used to compress a size of a video sequence for more efficient storage and/or transmission. Video decoding may be used to decompress a compressed video sequence for display and/or other forms of consumption.

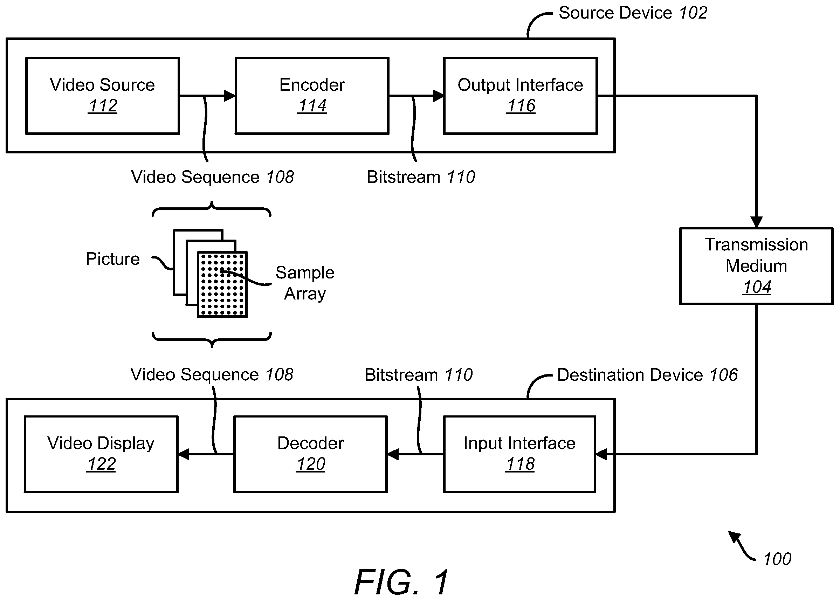

FIG. 1 shows an example video coding/decoding system. Video coding/decoding system 100 may comprise a source device 102, a transmission medium 104, and a destination device 106. The source device 102 may encode a video sequence 108 into a bitstream 110 for more efficient storage and/or transmission. The source device 102 may store and/or send/transmit the bitstream 110 to the destination device 106 via the transmission medium 104. The destination device 106 may decode the bitstream 110 to display the video sequence 108. The destination device 106 may receive the bitstream 110 from the source device 102 via the transmission medium 104. The source device 102 and/or the destination device 106 may be any of a plurality of different devices (e.g., a desktop computer, laptop computer, tablet computer, smart phone, wearable device, television, camera, video gaming console, set-top box, video streaming device, etc.).

The source device 102 may comprise (e.g., for encoding the video sequence 108 into the bitstream 110) one or more of a video source 112, an encoder 114, and/or an output interface 116. The video source 112 may provide and/or generate the video sequence 108 based on a capture of a natural scene and/or a synthetically generated scene. A synthetically generated scene may be a scene comprising computer generated graphics and/or screen content. The video source 112 may comprise a video capture device (e.g., a video camera), a video archive comprising previously captured natural scenes and/or synthetically generated scenes, a video feed interface to receive captured natural scenes and/or synthetically generated scenes from a video content provider, and/or a processor to generate synthetic scenes.

A video sequence, such as video sequence 108, may comprise a series of pictures (also referred to as frames). A video sequence may achieve an impression of motion based on successive presentation of pictures of the video sequence using a constant time interval or variable time intervals between the pictures. A picture may comprise one or more sample arrays of intensity values. The intensity values may be taken (e.g., measured, determined, provided) at a series of regularly spaced locations within a picture. A color picture may comprise (e.g., typically comprises) a luminance sample array and two chrominance sample arrays. The luminance sample array may comprise intensity values representing the brightness (e.g., luma component, Y) of a picture. The chrominance sample arrays may comprise intensity values that respectively represent the blue and red components of a picture (e.g., chroma components, Cb and Cr) separate from the brightness. Other color picture sample arrays may be possible based on different color schemes (e.g., a red, green, blue (RGB) color scheme). A pixel, in a color picture, may refer to/comprise/be associated with all intensity values (e.g., luma component, chroma components), for a given location, in the sample arrays (e.g., three sample arrays are used for one luma component and two chroma components, respectively) used to represent color pictures. A monochrome picture may comprise a single, luminance sample array. A pixel, in a monochrome picture, may refer to/comprise/be associated with the intensity value (e.g., luma component) at a given location in the single, luminance sample array used to represent monochrome pictures.

The encoder 114 may encode the video sequence 108 into the bitstream 110. The encoder 114 may apply/use (e.g., to encode the video sequence 108) one or more prediction techniques to reduce redundant information in the video sequence 108. Redundant information may comprise information that may be predicted at a decoder and need not be transmitted to the decoder for accurate decoding of the video sequence 108. For example, the encoder 114 may use/apply spatial prediction (e.g., intra-frame or intra prediction), temporal prediction (e.g., inter-frame prediction or inter prediction), inter-layer prediction, and/or other prediction techniques to reduce redundant information in the video sequence 108. The encoder 114 may partition pictures comprising the video sequence 108 into rectangular regions referred to as blocks, for example, prior to using/applying one or more prediction techniques. The encoder 114 may then encode a block using the one or more of the prediction techniques.

The encoder 114 may search for a block similar to the block being encoded in another picture (e.g., a reference picture) of the video sequence 108, for example, for temporal prediction. The block determined during the search (e.g., a prediction block) may then be used to predict the block being encoded. The encoder 114 may form a prediction block based on data from reconstructed neighboring samples of the block to be encoded within the same picture of the video sequence 108, for example, for spatial prediction. A reconstructed sample may be a sample that was encoded and then decoded. The encoder 114 may determine a prediction error (e.g., a residual) based on the difference between a block being encoded and a prediction block. The prediction error may represent non-redundant information that may be sent/transmitted to a decoder for accurate decoding of the video sequence 108.

The encoder 114 may use/apply a transform to the prediction error (e.g. using a discrete cosine transform (DCT), or any other transform) to generate transform coefficients. The encoder 114 may form the bitstream 110 based on the transform coefficients and other information used to determine prediction blocks using/based on prediction types, motion vectors, and prediction modes. The encoder 114 may perform one or more of quantization and entropy coding of the transform coefficients and/or the other information used to determine the prediction blocks, for example, prior to forming the bitstream 110. The quantization and/or the entropy coding may further reduce the quantity of bits needed to store and/or transmit the video sequence 108.

The output interface 116 may be configured to write and/or store the bitstream 110 onto the transmission medium 104 for transmission to the destination device 106. The output interface 116 may be configured to send/transmit, upload, and/or stream the bitstream 110 to the destination device 106 via the transmission medium 104. The output interface 116 may comprise a wired and/or a wireless transmitter configured to send/transmit, upload, and/or stream the bitstream 110 in accordance with one or more proprietary, open-source, and/or standardized communication protocols (e.g., Digital Video Broadcasting (DVB) standards, Advanced Television Systems Committee (ATSC) standards, Integrated Services Digital Broadcasting (ISDB) standards, Data Over Cable Service Interface Specification (DOCSIS) standards, 3rd Generation Partnership Project (3GPP) standards, Institute of Electrical and Electronics Engineers (IEEE) standards, Internet Protocol (IP) standards, Wireless Application Protocol (WAP) standards, and/or any other communication protocol).

The transmission medium 104 may comprise wireless, wired, and/or computer readable medium. For example, the transmission medium 104 may comprise one or more wires, cables, air interfaces, optical discs, flash memory, and/or magnetic memory. The transmission medium 104 may comprise one or more networks (e.g., the internet) or file servers configured to store and/or send/transmit encoded video data.

The destination device 106 may decode the bitstream 110 into the video sequence 108 for display. The destination device 106 may comprise one or more of an input interface 118, a decoder 120, and/or a video display 122. The input interface 118 may be configured to read the bitstream 110 stored on the transmission medium 104 by the source device 102. The input interface 118 may be configured to receive, download, and/or stream the bitstream 110 from the source device 102 via the transmission medium 104. The input interface 118 may comprise a wired and/or a wireless receiver configured to receive, download, and/or stream the bitstream 110 in accordance with one or more proprietary, open-source, standardized communication protocols, and/or any other communication protocol (e.g., such as referenced herein).

The decoder 120 may decode the video sequence 108 from the encoded bitstream 110. The decoder 120 may generate prediction blocks for pictures of the video sequence 108 in a similar manner as the encoder 114 and determine the prediction errors for the blocks, for example, to decode the video sequence 108. The decoder 120 may generate the prediction blocks using/based on prediction types, prediction modes, and/or motion vectors received in the bitstream 110. The decoder 120 may determine the prediction errors using the transform coefficients received in the bitstream 110. The decoder 120 may determine the prediction errors by weighting transform basis functions using the transform coefficients. The decoder 120 may combine the prediction blocks and the prediction errors to decode the video sequence 108. The video sequence 108 at the destination device 106 may be, or may not necessarily be, the same video sequence sent, such as the video sequence 108 as sent by the source device 102. The decoder 120 may decode a video sequence that approximates the video sequence 108, for example, because of lossy compression of the video sequence 108 by the encoder 114 and/or errors introduced into the encoded bitstream 110 during transmission to the destination device 106.

The video display 122 may display the video sequence 108 to a user. The video display 122 may comprise a cathode rate tube (CRT) display, a liquid crystal display (LCD), a plasma display, a light emitting diode (LED) display, and/or any other display device suitable for displaying the video sequence 108.

The video encoding/decoding system 100 is merely an example and video encoding/decoding systems different from the video encoding/decoding system 100 and/or modified versions of the video encoding/decoding system 100 may perform the methods and process as described herein. For example, the video encoding/decoding system 100 may comprise other components and/or arrangements. The video source 112 may be external to the source device 102. The video display device 122 may be external to the destination device 106 or omitted altogether (e.g., if the video sequence 108 is intended for consumption by a machine and/or storage device). The source device 102 may further comprise a video decoder and the destination device 104 may further comprise a video encoder. For example, the source device 102 may be configured to further receive an encoded bit stream from the destination device 106 to support two-way video transmission between the devices.

The encoder 114 and/or the decoder 120 may operate according to one or more proprietary or industry video coding standards. For example, the encoder 114 and/or the decoder 120 may operate in accordance with one or more proprietary, open-source, and/or standardized protocols (e.g., International Telecommunications Union Telecommunication Standardization Sector (ITU-T) H.263, ITU-T H.264 and Moving Picture Expert Group (MPEG)-4 Visual (also known as Advanced Video Coding (AVC)), ITU-T H.265 and MPEG-H Part 2 (also known as High Efficiency Video Coding (HEVC)), ITU-T H.265 and MPEG-I Part 3 (also known as Versatile Video Coding (VVC)), the WebM VP8 and VP9 codecs, and/or AOMedia Video 1 (AV1), and/or any other video coding protocol).

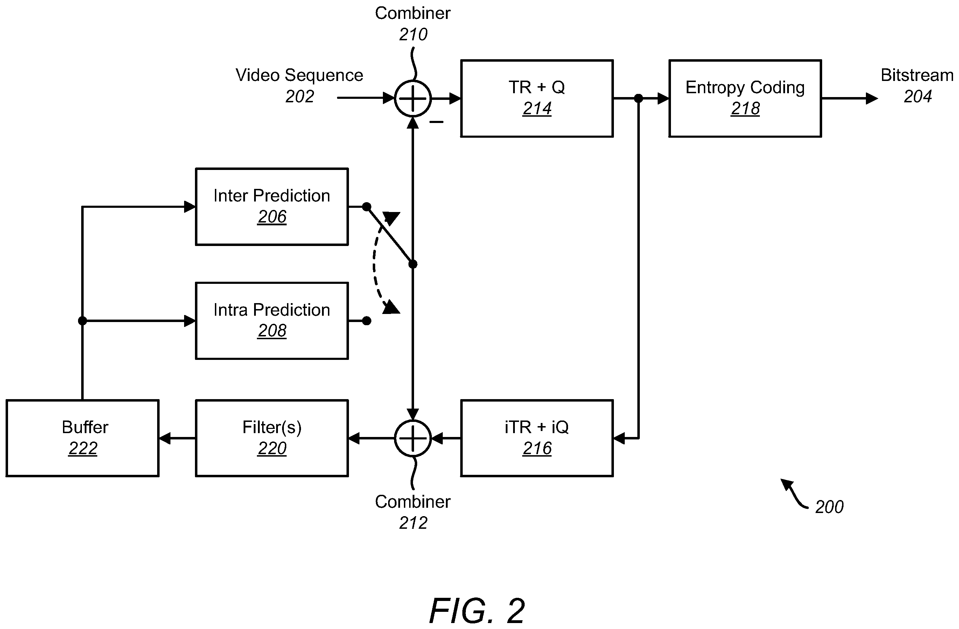

FIG. 2 shows an example encoder. The encoder 200 as shown in FIG. 2 may implement one or more processes described herein. The encoder 200 may encode a video sequence 202 into a bitstream 204 for more efficient storage and/or transmission. The encoder 200 may be implemented in the video coding/decoding system 100 as shown in FIG. 1 (e.g., as the encoder 114) or in any computing, communication, or electronic device (e.g., desktop computer, laptop computer, tablet computer, smart phone, wearable device, television, camera, video gaming console, set-top box, video streaming device, etc.). The encoder 200 may comprise one or more of an inter prediction unit 206, an intra prediction unit 208, combiners 210 and 212, a transform and quantization unit (TR + Q) 214, an inverse transform and quantization unit (iTR + iQ) 216, an entropy coding unit 218, one or more filters 220, and/or a buffer 222.

The encoder 200 may partition pictures (e.g., frames) of (e.g., comprising) the video sequence 202 into blocks and encode the video sequence 202 on a block-by-block basis. The encoder 200 may perform/use/apply a prediction technique on a block being encoded using either the inter prediction unit 206 or the intra prediction unit 208. The inter prediction unit 206 may perform inter prediction by searching for a block similar to the block being encoded in another, reconstructed picture (e.g., a reference picture) of the video sequence 202. The reconstructed picture may be a picture that was encoded and then decoded. The block determined during the search (e.g., a prediction block) may then be used to predict the block being encoded to remove redundant information. The inter prediction unit 206 may exploit temporal redundancy or similarities in scene content from picture to picture in the video sequence 202 to determine the prediction block. For example, scene content between pictures of the video sequence 202 may be similar except for differences due to motion and/or affine transformation of the screen content over time.

The intra prediction unit 208 may perform intra prediction by forming a prediction block based on data from reconstructed neighboring samples of the block to be encoded within the same picture of the video sequence 202. The reconstructed sample may be a sample that was encoded and then decoded. The intra prediction unit 208 may exploit spatial redundancy or similarities in scene content within a picture of the video sequence 202 to determine the prediction block. For example, the texture of a region of scene content in a picture may be similar to the texture in the immediate surrounding area of the region of the scene content in the same picture.

The combiner 210 may determine a prediction error (e.g., a residual) based on the difference between the block being encoded and the prediction block. The prediction error may represent non-redundant information that may be sent/transmitted to a decoder for accurate decoding of the video sequence 202.

The transform and quantization unit (TR + Q) 214 may transform and quantize the prediction error. The transform and quantization unit 214 may transform the prediction error into transform coefficients by using/applying, for example, a DCT to reduce correlated information in the prediction error. The transform and quantization unit 214 may quantize the coefficients by mapping data of the transform coefficients to a predefined set of representative values. The transform and quantization unit 214 may quantize the coefficients to reduce irrelevant information in the bitstream 204. The Irrelevant information may be information that may be removed from the coefficients without producing visible and/or perceptible distortion in the video sequence 202 after decoding (e.g., at a receiving device).

The entropy coding unit 218 may use/apply one or more entropy coding methods to the quantized transform coefficients to further reduce the bit rate. For example, the entropy coding unit 218 may use/apply context adaptive variable length coding (CAVLC), context adaptive binary arithmetic coding (CABAC), and/or syntax-based context-based binary arithmetic coding (SBAC). The entropy coded coefficients may be packed to form the bitstream 204.

The inverse transform and quantization unit (iTR + iQ) 216 may inverse quantize and inverse transform the quantized transform coefficients to determine a reconstructed prediction error. The combiner 212 may combine the reconstructed prediction error with the prediction block to form a reconstructed block. The filter(s) 220 may filter the reconstructed block, for example, using a deblocking filter and/or a sample-adaptive offset (SAO) filter. The buffer 222 may store the reconstructed block for prediction of one or more other blocks in the same and/or different picture of the video sequence 202.

The encoder 200 may further comprise an encoder control unit. The encoder control unit may be configured to control one or more units of the encoder 200 as shown in FIG. 2. The encoder control unit may control the one or more units of the encoder 200 such that the bitstream 204 may be generated in conformance with the requirements of one or more proprietary coding protocols, industry video coding standards, and/or any other video cording protocol. For example, the encoder control unit may control the one or more units of the encoder 200 such that bitstream 204 may be generated in conformance with one or more of ITU-T H.263, AVC, HEVC, VVC, VP8, VP9, AV1, and/or any other video coding standard/format.

The encoder control unit may attempt to minimize (or reduce) the bitrate of bitstream 204 and/or maximize (or increase) the reconstructed video quality (e.g., within the constraints of a proprietary coding protocol, industry video coding standard, and/or any other video cording protocol). For example, the encoder control unit may attempt to minimize or reduce the bitrate of bitstream 204 such that the reconstructed video quality may not fall below a certain level/threshold, and/or may attempt to maximize or increase the reconstructed video quality such that the bit rate of bitstream 204 may not exceed a certain level/threshold. The encoder control unit may determine/control one or more of: partitioning of the pictures of the video sequence 202 into blocks, whether a block is inter predicted by the inter prediction unit 206 or intra predicted by the intra prediction unit 208, a motion vector for inter prediction of a block, an intra prediction mode among a plurality of intra prediction modes for intra prediction of a block, filtering performed by the filter(s) 220, and/or one or more transform types and/or quantization parameters applied by the transform and quantization unit 214. The encoder control unit may determine/control one or more of the above based on a rate-distortion measure for a block or picture being encoded. The encoder control unit may determine/control one or more of the above to reduce the rate-distortion measure for a block or picture being encoded.

The prediction type used to encode a block (intra or inter prediction), prediction information of the block (intra prediction mode if intra predicted, motion vector, etc.), and/or transform and/or quantization parameters, may be sent to the entropy coding unit 218 to be further compressed (e.g., to reduce the bit rate). The prediction type, prediction information, and/or transform and/or quantization parameters may be packed with the prediction error to form the bitstream 204.

The encoder 200 is merely an example and encoders different from the encoder 200 and/or modified versions of the encoder 200 may perform the methods and processes as described herein. For example, the encoder 200 may comprise other components and/or arrangements. One or more of the components shown in FIG. 2 may be optionally included in the encoder 200 (e.g., the entropy coding unit 218 and/or the filters(s) 220).

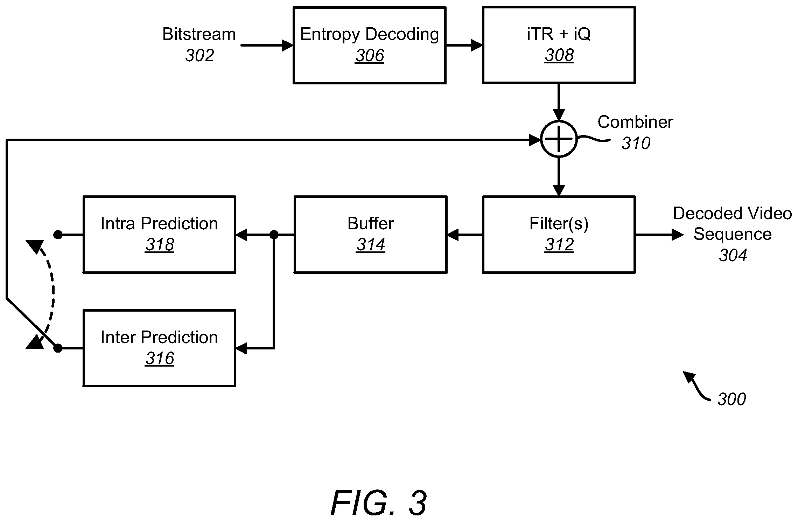

FIG. 3 shows an example decoder. A decoder 300 as shown in FIG. 3 may implement one or more processes described herein. The decoder 300 may decode a bitstream 302 into a decoded video sequence 304 for display and/or some other form of consumption. The decoder 300 may be implemented in the video encoding/decoding system 100 in FIG. 1 and/or in a computing, communication, or electronic device (e.g., desktop computer, laptop computer, tablet computer, smart phone, wearable device, television, camera, video gaming console, set-top box, and/or video streaming device). The decoder 300 may comprise an entropy decoding unit 306, an inverse transform and quantization (iTR + iQ) unit 308, a combiner 310, one or more filters 312, a buffer 314, an inter prediction unit 316, and/or an intra prediction unit 318.

The decoder 300 may comprise a decoder control unit configured to control one or more units of decoder 300. The decoder control unit may control the one or more units of decoder 300 such that the bitstream 302 is decoded in conformance with the requirements of one or more proprietary coding protocols, industry video coding standards, and/or any other communication protocol. For example, the decoder control unit may control the one or more units of decoder 300 such that the bitstream 302 is decoded in conformance with one or more of ITU-T H.263, AVC, HEVC, VVC, VP8, VP9, AV1, and/or any other video coding standard/format.

The decoder control unit may determine/control one or more of: whether a block is inter predicted by the inter prediction unit 316 or intra predicted by the intra prediction unit 318, a motion vector for inter prediction of a block, an intra prediction mode among a plurality of intra prediction modes for intra prediction of a block, filtering performed by the filter(s) 312, and/or one or more inverse transform types and/or inverse quantization parameters to be applied by the inverse transform and quantization unit 308. One or more of the control parameters used by the decoder control unit may be packed in bitstream 302.

The Entropy decoding unit 306 may entropy decode the bitstream 302. The inverse transform and quantization unit 308 may inverse quantize and/or inverse transform the quantized transform coefficients to determine a decoded prediction error. The combiner 310 may combine the decoded prediction error with a prediction block to form a decoded block. The prediction block may be generated by the intra prediction unit 318 or the inter prediction unit 316 (e.g., as described herein with respect to encoder 200 in FIG 2). The filter(s) 312 may filter the decoded block, for example, using a deblocking filter and/or a sample-adaptive offset (SAO) filter. The buffer 314 may store the decoded block for prediction of one or more other blocks in the same and/or different picture of the video sequence in the bitstream 302. The decoded video sequence 304 may be output from the filter(s) 312 as shown in FIG. 3.

The decoder 300 is merely an example and decoders different from the decoder 300 and/or modified versions of the decoder 300 may perform the methods and processes as described herein. For example, the decoder 300 may have other components and/or arrangements. One or more of the components shown in FIG. 3 may be optionally included in the decoder 300 (e.g., the entropy decoding unit 306 and/or the filters(s) 312).

Although not shown in FIGS. 2 and 3, each of the encoder 200 and the decoder 300 may further comprise an intra block copy unit in addition to inter prediction and intra prediction units. The intra block copy unit may perform/operate similar to an inter prediction unit but may predict blocks within the same picture. For example, the intra block copy unit may exploit repeated patterns that appear in screen content. The screen content may include computer generated text, graphics, animation, etc.

Video encoding and/or decoding may be performed on a block-by-block basis. The process of partitioning a picture into blocks may be adaptive based on the content of the picture. For example, larger block partitions may be used in areas of a picture with higher levels of homogeneity to improve coding efficiency.

A picture (e.g., in HEVC, or any other coding standard/format) may be partitioned into non-overlapping square blocks, which may be referred to as coding tree blocks (CTBs). The CTBs may comprise samples of a sample array. A CTB may have a size of $2"x2"$ samples, where n may be specified by a parameter of the encoding system. For example, n may be 4, 5, 6, or any other value. A CTB may have any other size. A CTB may be further partitioned by a recursive quadtree partitioning into coding blocks (CBs) of half vertical and half horizontal size. The CTB may form the root of the quadtree. A CB that is not split further as part of the recursive quadtree partitioning may be referred to as a leaf CB of the quadtree, and otherwise may be referred to as a non-leaf CB of the quadtree. A CB may have a minimum size specified by a parameter of the encoding system. For example, a CB may have a minimum size of 4x4, 8x8, 16x16, 32x32, 64x64 samples, or any other minimum size. A CB may be further partitioned into one or more prediction blocks (PBs) for performing inter and/or intra prediction. A PB may be a rectangular block of samples on which the same prediction type/mode may be applied. A CB may also be further partitioned into intra sub-partitions (ISP) where the reconstructed samples of each sub-partition are available to generate the prediction of the next sub-partition. For example, a CB may be split into 2 to 4 sub-partitions. For transformations, a CB may be partitioned into one or more transform blocks (TBs). A TB may be a rectangular block of samples that may determine/indicate an applied transform size.

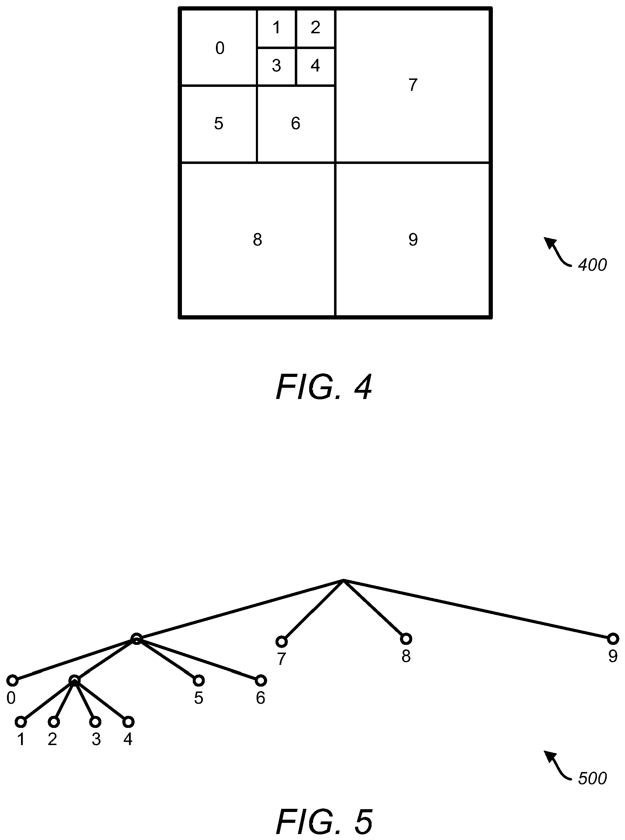

FIG. 4 shows an example quadtree partitioning of a CTB 400. FIG. 5 shows a quadtree corresponding to the example quadtree 500 partitioning of the CTB 400 in FIG. 4. As shown in FIGS. 4 and 5, the CTB 400 may first be partitioned into four CBs of half vertical and half horizontal size. Three of the resulting CBs of the first level partitioning of CTB 400 may be leaf CBs. The three leaf CBs of the first level partitioning of CTB 400 are respectively labeled 7, 8, and 9 in FIGS. 4 and 5. The non-leaf CB of the first level partitioning of CTB 400 may be partitioned into four sub-CBs of half vertical and half horizontal size. Three of the resulting sub-CBs of the second level partitioning of CTB 400 may be leaf CBs. The three leaf CBs of the second level partitioning of CTB 400 are respectively labeled 0, 5, and 6 in FIGS. 4 and 5. The non-leaf CB of the second level partitioning of CTB 400 may be partitioned into four leaf CBs of half vertical and half horizontal size. The four leaf CBs may be respectively labeled 1, 2, 3, and 4 in FIGS. 4 and 5.

The CTB 400 of FIG. 4 may be partitioned into 10 leaf CBs respectively labeled 0-9, and/or any other quantity of leaf CBs. The 10 leaf CBs may correspond to 10 CB leaf nodes (e.g., 10 CB leaf nodes of the quadtree 500 as shown in FIG. 5). In other examples, a CTB may be partitioned into a different quantity/number of leaf CBs. The resulting quadtree partitioning of the CTB 400 may be scanned using a z-scan (e.g., left-to-right, top-to-bottom) to form the sequence order for encoding/decoding the CB leaf nodes. A numeric label (e.g., indicator, index) of each CB leaf node in FIGS. 4 and 5 may correspond to the sequence order for encoding/decoding. For example, CB leaf node 0 may be encoded/decoded first and CB leaf node 9 may be encoded/decoded last. Although not shown in FIGS. 4 and 5, each CB leaf node may comprise one or more PBs and/or TBs.

A picture, in VVC (or in any other coding standard/format), may be partitioned in a similar manner (such as in HEVC). A picture may be first partitioned into non-overlapping square CTBs. The CTBs may then be partitioned, using a recursive quadtree partitioning, into CBs of half vertical and half horizontal size. A quadtree leaf node (e.g., in VVC) may be further partitioned by a binary tree or ternary tree partitioning (or any other partitioning) into CBs of unequal sizes.

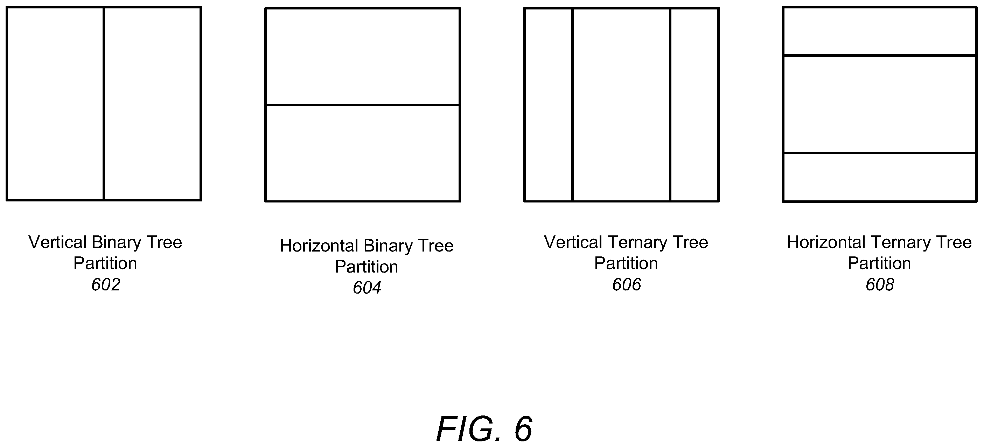

FIG. 6 shows example binary tree and ternary tree partitions. A binary tree partition may divide a parent block in half in either a vertical direction 602 or a horizontal direction 604. The resulting partitions may be half in size as compared to the parent block. The resulting partitions may correspond to sizes that are less than and/or greater than half of the parent block size. A ternary tree partition may divide a parent block into three parts in either a vertical direction 606 or a horizontal direction 608. FIG. 6 shows an example in which the middle partition may be twice as large as the other two end partitions in the ternary tree partitions. In other examples, partitions may be of other sizes relative to each other and to the parent block. Binary and ternary tree partitions are examples of multi-type tree partitioning. Multi-type tree partitions may comprise partitioning a parent block into other quantities of smaller blocks. The block partitioning strategy (e.g., in VVC) may be referred to as a combination of quadtree and multi-type tree partitioning (quadtree + multi-type tree partitioning) because of the addition of binary and/or ternary tree partitioning to quadtree partitioning.

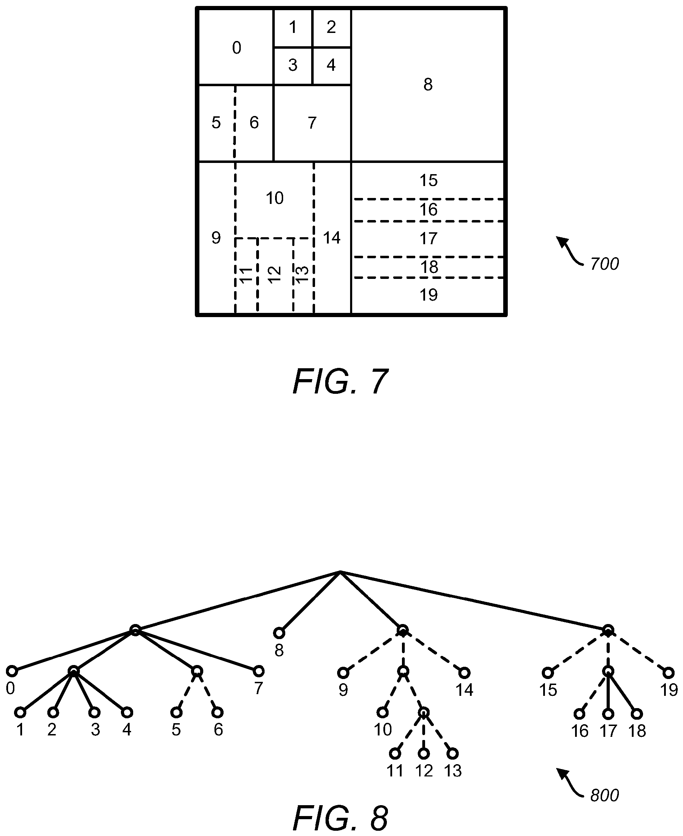

FIG. 7 shows an example of combined quadtree and multi-type tree partitioning of a CTB. FIG. 8 shows a tree corresponding to the combined quadtree and multi-type tree partitioning of the CTB 700 shown in FIG. 7. In both FIGS. 7 and 8, quadtree splits are shown in solid lines and multi-type tree splits are shown in dashed lines. The CTB 700 is shown with the same quadtree partitioning as the CTB 400 described in FIG. 4, and a description of the quadtree partitioning of the CTB 700 is omitted. The quadtree partitioning of the CTB 700 is merely an example and a CTB may be quadtree partitioned in a manner different from the CTB 700. Additional multi-type tree partitions of the CTB 700 may be made relative to three leaf CBs shown in FIG. 4. The three leaf CBs in FIG. 4 that are shown in FIG. 7 as being further partitioned may be leaf CBs 5, 8, and 9. The three leaf CBs may be further partitioned using one or more binary and/or ternary tree partitions.

The leaf CB 5 of FIG. 4 may be partitioned into two CBs based on a vertical binary tree partitioning. The two resulting CBs may be leaf CBs respectively labeled 5 and 6 in FIGS. 7 and 8. The leaf CB 8 of FIG. 4 may be partitioned into three CBs based on a vertical ternary tree partition. Two of the three resulting CBs may be leaf CBs respectively labeled 9 and 14 in FIGS. 7 and 8. The remaining, non-leaf CB may be partitioned first into two CBs based on a horizontal binary tree partition. One of the two CBs may be a leaf CB labeled 10. The other of the two CBs may be further partitioned into three CBs based on a vertical ternary tree partition. The resulting three CBs may be leaf CBs respectively labeled 11, 12, and 13 in FIGS. 7 and 8. The leaf CB 9 of FIG. 4 may be partitioned into three CBs based on a horizontal ternary tree partition. Two of the three CBs may be leaf CBs respectively labeled 15 and 19 in FIGS. 7 and 8. The remaining, non-leaf CB may be partitioned into three CBs based on another horizontal ternary tree partition. The resulting three CBs may all be leaf CBs respectively labeled 16, 17, and 18 in FIGS. 7 and 8.

Altogether, the CTB 700 may be partitioned into 20 leaf CBs respectively labeled 0-19. The 20 leaf CBs may correspond to 20 leaf nodes (e.g., 20 leaf nodes of the tree 800 shown in FIG. 8). The resulting combination of quadtree and multi-type tree partitioning of the CTB 700 may be scanned using a z-scan (left-to-right, top-to-bottom) to form the sequence order for encoding/decoding the CB leaf nodes. A numeric label of each CB leaf node in FIGS. 7 and 8 may correspond to the sequence order for encoding/decoding, with CB leaf node 0 encoded/decoded first and CB leaf node 19 encoded/decoded last. Although not shown in FIGS. 7 and 8, it should be noted that each CB leaf node may comprise one or more PBs and/or TBs.

A coding standard/format (e.g., HEVC, VVC, or any other coding standard/format) may define various units (e.g., in addition to specifying various blocks (e.g., CTBs, CBs, PBs, TBs)). Blocks may comprise a rectangular area of samples in a sample array. Units may comprise the collocated blocks of samples from the different sample arrays (e.g., luma and chroma sample arrays) that form a picture as well as syntax elements and prediction data of the blocks. A coding tree unit (CTU) may comprise the collocated CTBs of the different sample arrays and may form a complete entity in an encoded bit stream. A coding unit (CU) may comprise the collocated CBs of the different sample arrays and syntax structures used to code the samples of the CBs. A prediction unit (PU) may comprise the collocated PBs of the different sample arrays and syntax elements used to predict the PBs. A transform unit (TU) may comprise TBs of the different samples arrays and syntax elements used to transform the TBs.

A block may refer to any of a CTB, CB, PB, TB, CTU, CU, PU, and/or TU (e.g., in the context of HEVC, VVC, or any other coding format/standard). A block may be used to refer to similar data structures in the context of any video coding format/standard/protocol. For example, a block may refer to a macroblock in the AVC standard, a macroblock or a sub-block in the VP8 coding format, a superblock or a sub-block in the VP9 coding format, and/or a superblock or a sub-block in the AV1 coding format.

Samples of a block to be encoded (e.g., a current block) may be predicted from samples of the column immediately adjacent to the left-most column of the current block and samples of the row immediately adjacent to the top-most row of the current block, such as in intra prediction. The samples from the immediately adjacent column and row may be jointly referred to as reference samples. Each sample of the current block may be predicted (e.g., in an intra prediction mode) by projecting the position of the sample in the current block in a given direction to a point along the reference samples. The sample may be predicted by interpolating between the two closest reference samples of the projection point if the projection does not fall directly on a reference sample. A prediction error (e.g., a residual) may be determined for the current block based on differences between the predicted sample values and the original sample values of the current block.

Predicting samples and determining a prediction error based on a difference between the predicted samples and original samples may be performed (e.g., at an encoder) for a plurality of different intra prediction modes (e.g., including non-directional intra prediction modes). The encoder may select one of the plurality of intra prediction modes and its corresponding prediction error to encode the current block. The encoder may send an indication of the selected prediction mode and its corresponding prediction error to a decoder for decoding of the current block. The decoder may decode the current block by predicting the samples of the current block, using the intra prediction mode indicated by the encoder, and/or combining the predicted samples with the prediction error.

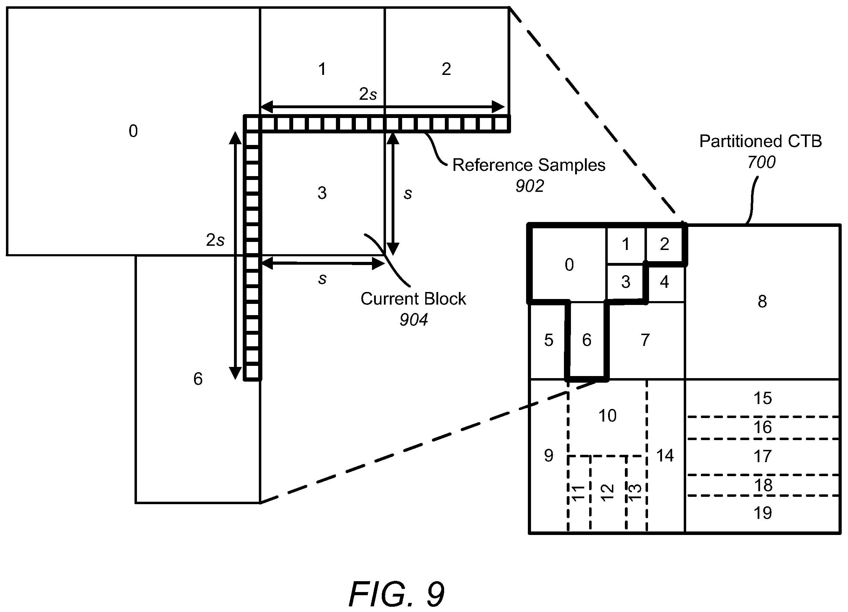

FIG. 9 shows an example set of reference samples determined for intra prediction of a current block. The current block 904 may correspond to a block being encoded and/or decoded. The current block 904 may correspond to block 3 of the partitioned CTB 700 as shown in FIG. 7. As described herein, the numeric labels 0-19 of the blocks of partitioned CTB 700 may correspond to the sequence order for encoding/decoding the blocks and may be used as such in the example of FIG. 9.

Reference samples 902 may include a line of samples immediately adjacent to current block 904, and may include samples from a column and a row immediately adjacent to current block 904. For example, the line of samples may include reference samples to the left and/or above current block 904. Reference samples 902 may be obtained (or selected) from a reference line of multiple reference lines (MRL), which may include a line of samples adjacent to current block 904 and also a line of non-adjacent samples. The MRL may include reference lines identified by corresponding reference line indices that indicate an $i$-$th$ line of samples adjacent to current block 904 such that the 0-$th$ line indicates the reference line immediate adjacent (or closest) to current block 904 and a higher numbered $i$-$th$ line indicates a line of samples further away from current block 904. An encoder may select a reference line from a set of MRL and signal an MLR index in the bitstream to indicate the selected reference line. For example, the encoder may signal a codeword encoding the MRL index. The decoder may decode the codeword to determine the MRL index that identifies a specific reference line used in intra prediction of current block 904.

The current block 904 may be $w$ x $h$ samples in size. The reference samples 902 may comprise: 2w samples (or any other quantity of samples) of the i-th row immediately (e.g., indicated by an MRL index) adjacent to the top-most row of the current block 904, 2h samples (or any other quantity of samples) of the i-th column immediately adjacent to the left-most column of the current block 904, and the top left neighboring corner sample(s) extending from the i-th column and i-th row with respect to the current block 904. The current block 904 may be square, such that $w = h = s$. A current block need not be square, such that $w \neq h$. Available samples from neighboring blocks of the current block 904 may be used for constructing the set of reference samples 902. Samples may not be available for constructing the set of reference samples 902, for example, if the samples lie outside the picture of the current block, the samples are part of a different slice of the current block (e.g., if the concept of slices is used), and/or the samples belong to blocks that have been inter coded and constrained intra prediction is indicated. Intra prediction may not be dependent on inter predicted blocks, for example, if constrained intra prediction is indicated.

Samples that may not be available for constructing the set of reference samples 902 may comprise samples in blocks that have not already been encoded and reconstructed at an encoder and/or decoded at a decoder based on the sequence order for encoding/decoding. Restriction of such samples from inclusion in the set of reference samples 902 may allow identical prediction results to be determined at both the encoder and decoder. Samples from neighboring blocks 0, 1, 2, and 8 may be available to construct the reference samples 902 given that these blocks are encoded and reconstructed at an encoder and decoded at a decoder prior to coding of the current block 904. The samples from neighboring blocks 0, 1, 2, and 8 may be available to construct reference samples 902, for example, if there are no other issues (e.g., as mentioned above) preventing the availability of the samples from the neighboring blocks 0, 1, 2, and 8. The portion of reference samples 902 from neighboring block 6 may not be available due to the sequence order for encoding/decoding (e.g., because the block 6 may not have already been encoded and reconstructed at the encoder and/or decoded at the decoder based on the sequence order for encoding/decoding).

Unavailable samples from the reference samples 902 may be filled with one or more of the available reference samples 902. For example, an unavailable reference sample may be filled with a nearest available reference sample. The nearest available reference sample may be determined by moving in a clock-wise direction through the reference samples 902 from the position of the unavailable reference. The reference samples 902 may be filled with the mid-value of the dynamic range of the picture being coded, for example, if no reference samples are available.

The reference samples 902 may be filtered based on the size of current block 904 being coded and an applied intra prediction mode. FIG. 9 shows an exemplary determination of reference samples for intra prediction of a block. Reference samples may be determined in a different manner than described above. For example, multiple reference lines may be used in other instances (e.g., in VVC).

Samples of the current block 904 may be intra predicted based on the reference samples 902, for example, based on (e.g., after) determination and (optionally) filtration of the reference samples 902. A filtering scheme (e.g., a filtering algorithm) may be applied to reference samples 902 to improve prediction accuracy. The filtering scheme may be one of a plurality of filter types including at least: a smoothing filter (or reference sample smoothing filter) or an interpolation filter. Only one of the plurality of filter types may be selected (e.g., activated) to be applied to the reference samples, for example, if reference samples of a given block are to be filtered. The interpolation filter may not be selected (e.g., disabled) or vice versa, for example, if the smoothing filter is selected (e.g., activated).

At least some (e.g., most) encoders/decoders may support a plurality of intra prediction modes in accordance with one or more video coding standards. For example, HEVC supports 35 intra prediction modes, including a planar mode, a direct current (DC) mode, and 33 angular modes. VVC supports 67 intra prediction modes, including a planar mode, a DC mode, and 65 angular modes. Planar and DC modes may be used to predict smooth and gradually changing regions of a picture. Angular modes may be used to predict directional structures in regions of a picture. Any quantity of intra prediction modes may be supported.

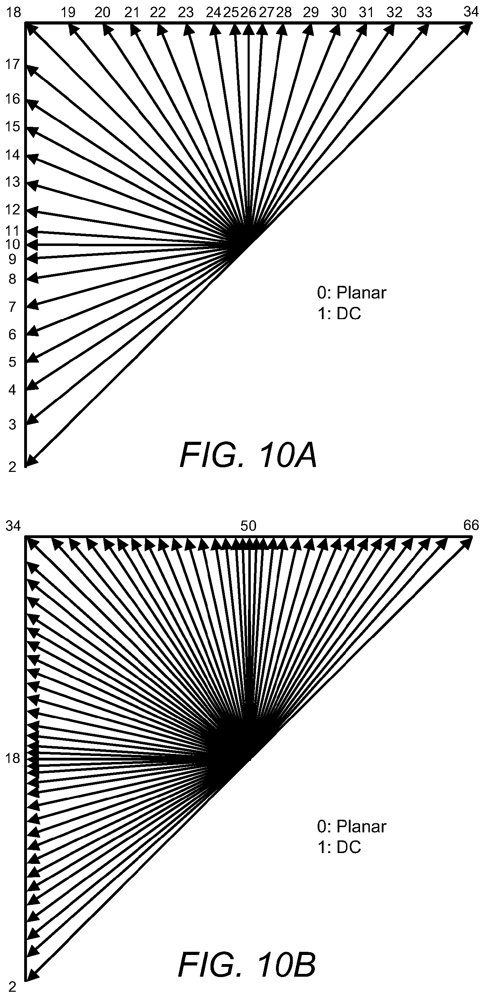

FIGS. 10A and 10B show example intra prediction modes. FIG. 10A shows 35 intra prediction modes, such as supported by HEVC. The 35 intra prediction modes may be indicated/identified by indices 0 to 34. Prediction mode 0 may correspond to planar mode. Prediction mode 1 may correspond to DC mode. Prediction modes 2-34 may correspond to angular modes. Prediction modes 2-18 may be referred to as horizontal prediction modes because the principal source of prediction is in the horizontal direction. Prediction modes 19-34 may be referred to as vertical prediction modes because the principal source of prediction is in the vertical direction.

FIG. 10B shows 67 intra prediction modes, such as supported by VVC. The 67 intra prediction modes may be indicated/identified by indices 0 to 66. Prediction mode 0 may correspond to planar mode. Prediction mode 1 corresponds to DC mode. Prediction modes 2-66 may correspond to angular modes. Prediction modes 2-34 may be referred to as horizontal prediction modes because the principal source of prediction is in the horizontal direction. Prediction modes 35-66 may be referred to as vertical prediction modes because the principal source of prediction is in the vertical direction. Some of the intra prediction modes illustrated in FIG. 10B may be adaptively replaced by wide-angle directions because blocks in VVC need not be squares.

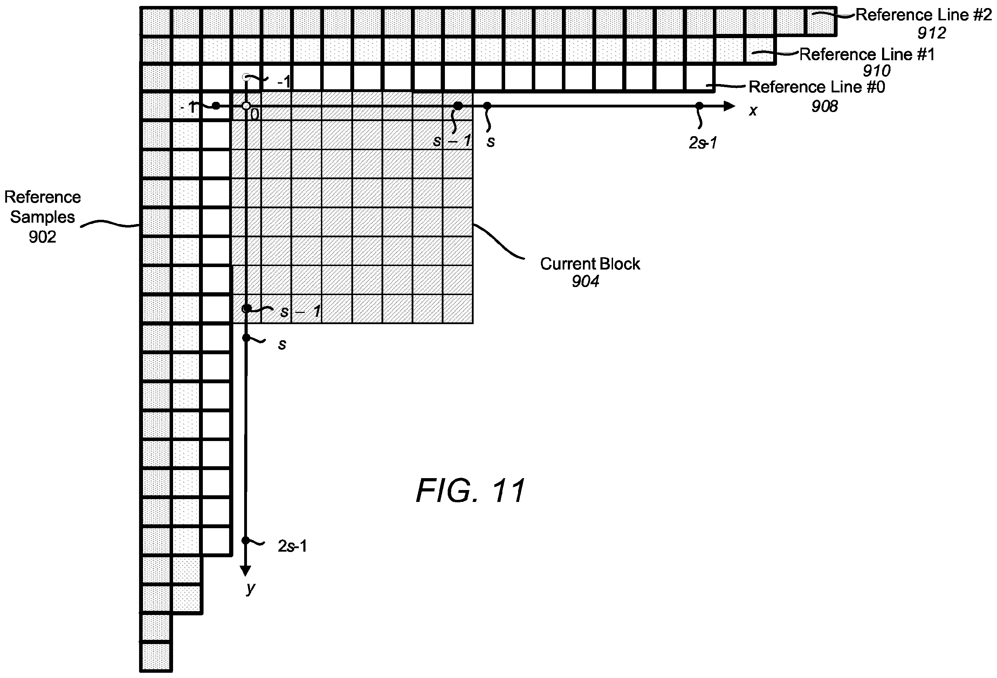

FIG. 11 shows a current block 904 and corresponding reference samples 902 from FIG. 9. FIG. 11 describes how intra prediction modes are applied to determine a prediction (e.g., a prediction block) of current block 904. In FIG. 11, the current block 904 and the reference samples 902 from FIG. 9 may be shown, from a reference line among a set of multiple reference lines (MRL) 908-912, in a two-dimensional $x, y$ plane, where a sample may be referenced as $p[x][y]$. In order to simplify the prediction process, the reference samples 902 may be placed in two, one-dimensional arrays. The reference samples 902 belonging to a reference line $l$ from the set of MRL 908-912, above the current block 904, may be placed in the one-dimensional array $ref_1[x]$:

$$ref_1[x] = p[-l + x][-l], \ (x \geq 0). \tag{1}$$

The reference samples 902 to the left of the current block 904 may be placed in the one-dimensional array $ref_2[y]$:

$$ref_2[y] = p[-l][-l + y], \ (y \geq 0). \tag{2}$$

The variable $l$ may represent how many lines away the selected reference line is from current block. $l$ may be set to 1 to indicate the reference line adjacent to current block 904, for example, if reference line #0 908 is selected. $l$ may be set to 2, for example, if reference line #1 910 is selected. $l$ may be set to 3, for example, if reference line #2 912 is selected. Reference samples 902 may be from reference line #0 908 that is immediately adjacent to current block 904, for example, if MRL is not activated or selected. The variable $l$ in Equations (1) and (2) may be set to 1.

The prediction process may comprise determination of a predicted sample $p[x][y]$ (e.g., a predicted value) at a location $[x][y]$ in the current block 904. For planar mode, a sample at the location $[x][y]$ in the current block 904 may be predicted by determining/calculating the mean of two interpolated values. The first of the two interpolated values may be based on a horizontal linear interpolation at the location $[x][y]$ in the current block 904. The second of the two interpolated values may be based on a vertical linear interpolation at the location $[x][y]$ in the current block 904. The predicted sample $p[x][y]$ in the current block 904 may be determined/calculated as:

$$p[x][y] = \frac{1}{2 \cdot s}(h[x][y] + v[x][y] + s), \tag{3}$$

where

$$h[x][y] = (s - x - 1) \cdot ref_2[y] + (x + 1) \cdot ref_1[s] \tag{4}$$

may be the horizonal linear interpolation at the location $[x][y]$ in the current block 904 and

$$v[x][y] = (s - y - 1) \cdot ref_1[x] + (y + 1) \cdot ref_2[s] \tag{5}$$

may be the vertical linear interpolation at the location $[x][y]$ in the current block 904. $s$ may be equal to a length of a side (e.g., a quantity/number of samples on a side) of the current block 904.

A sample at a location $[x][y]$ in the current block 904 may be predicted by the mean of the reference samples 902, such as for a DC mode. The predicted sample $p[x][y]$ in the current block 904 may be determined/calculated as:

$$p[x][y] = \frac{1}{2 \cdot s}\left(\sum_{x=0}^{s-1} ref_1[x] + \sum_{y=0}^{s-1} ref_2[y]\right). \tag{6}$$

A sample at a location $[x][y]$ in the current block 904 may be predicted by projecting the location $[x][y]$ in a direction specified by a given angular mode to a point on the horizontal or vertical line of samples comprising the reference samples 902, such as for an angular mode. The sample at the location $[x][y]$ may be predicted by interpolating between the two closest reference samples of the projection point if the projection does not fall directly on a reference sample. The direction specified by the angular mode may be given by an angle $\varphi$ defined relative to the $y$-axis for vertical prediction modes (e.g., modes 19-34 in HEVC and modes 35-66 in VVC). The direction specified by the angular mode may be given by an angle $\varphi$ defined relative to the x-axis for horizontal prediction modes (e.g., modes 2-18 in HEVC and modes 2-34 in VVC).

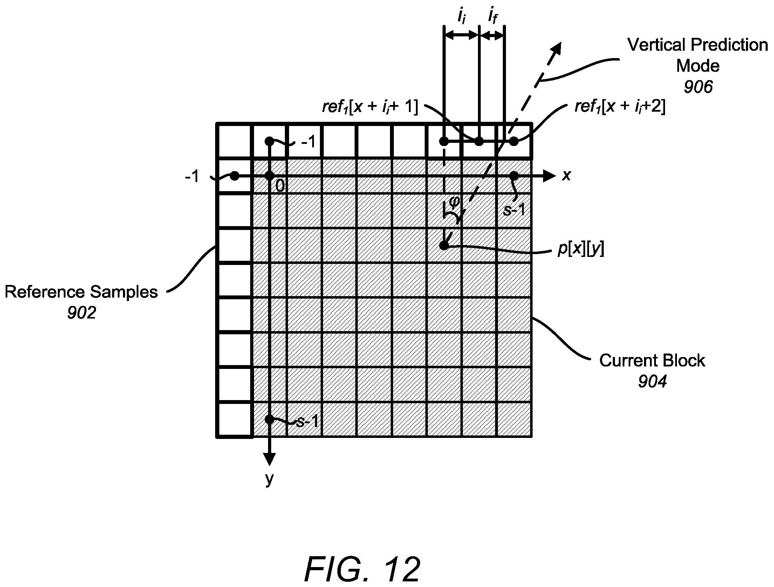

FIG. 12 shows an example application of an intra prediction mode (e.g., an angular mode such as vertical prediction mode 906) for prediction of a current block. FIG. 12 specifically shows prediction of a sample at a location $[x][y]$ in the current block 904 for a vertical prediction mode 906. The vertical prediction mode 906 may be given by an angle $\varphi$ with respect to the vertical axis. The location $[x][y]$ in the current block 904, in vertical prediction modes, may be projected to a point (e.g., a projection point) on the horizontal line of reference samples $ref_1[x]$. The reference samples 902 may only be partially shown in FIG. 12, as being from a reference line with reference line index of 0, for ease of illustration. Reference samples 902 may be from another reference line of the set of MRL, as explained in FIG. 9. As shown in FIG. 12, the projection point on the horizontal line of reference samples $ref_1[x]$ may not be exactly on a reference sample. A predicted sample $p[x][y]$ in the current block 904 may be determined/calculated by linearly interpolating between the two reference samples, for example, if the projection point falls at a fractional sample position between two reference samples. The predicted sample $p[x][y]$ may be determined/calculated as:

$$p[x][y] = (1 - i_f) \cdot ref_1[x + i_i + 1] + i_f \cdot ref_1[x + i_i + 2]. \qquad (7)$$

$i_i$ may be the integer part of the horizontal displacement of the projection point relative to the location [x][y]. $i_i$ may be determined/calculated as a function of the tangent of the angle $\varphi$ of the vertical prediction mode 906 as:

$$i_i = \lfloor (y + 1) \cdot \tan \varphi \rfloor. \qquad (8)$$

$i_f$ may be the fractional part of the horizontal displacement of the projection point relative to the location [x][y] and may be determined/calculated as:

$$i_f = ((y + 1) \cdot \tan \varphi) - \lfloor (y + 1) \cdot \tan \varphi \rfloor, \qquad (9)$$

where $\lfloor \cdot \rfloor$ is the integer floor function.

A location [x][y] of a sample in the current block 904 may be projected onto the vertical line of reference samples $ref_2[y]$, such as for horizontal prediction modes. A predicted sample $p[x][y]$ for horizontal prediction modes may be determined/calculated as:

$$p[x][y] = (1 - i_f) \cdot ref_2[y + i_i + 1] + i_f \cdot ref_2[y + i_i + 2]. \qquad (10)$$

$i_i$ may be the integer part of the vertical displacement of the projection point relative to the location [x][y]. $i_i$ may be determined/calculated as a function of the tangent of the angle $\varphi$ of the horizontal prediction mode as:

$$i_i = \lfloor (x + 1) \cdot \tan \varphi \rfloor. \qquad (11)$$

$i_f$ may be the fractional part of the vertical displacement of the projection point relative to the location [x][y]. $i_f$ may be determined/calculated as:

$$i_f = ((x + 1) \cdot \tan \varphi) - \lfloor (x + 1) \cdot \tan \varphi \rfloor, \qquad (12)$$

where $\lfloor \cdot \rfloor$ is the integer floor function.

The interpolation functions given by Equations (7) and (10) may be implemented by an encoder and/or a decoder (e.g., the encoder 200 in FIG. 2 and/or the decoder 300 in FIG. 3). The interpolation functions may be implemented by finite impulse response (FIR) filters. For example, the interpolation functions may be implemented as a set of two-tap FIR filters. The coefficients of the two-tap FIR filters may be respectively given by (1-$i_f$) and $i_f$. The predicted sample $p[x][y]$, in angular intra prediction, may be calculated with some predefined level of sample accuracy (e.g., 1/32 sample accuracy, or accuracy defined by any other metric). For 1/32 sample accuracy, the set of two-tap FIR interpolation filters may comprise up to 32 different two-tap FIR interpolation filters - one for each of the 32 possible values of the fractional part of the projected displacement $i_f$. In other examples, different levels of sample accuracy may be used.

The FIR filters may be used for predicting chroma samples and/or luma samples. For example, the two-tap interpolation FIR filter may be used for predicting chroma samples and a same and/or a different interpolation technique/filter may be used for luma samples. For example, a four-tap FIR filter may be used to determine a predicted value of a luma sample. Coefficients of the four tap FIR filter may be determined based on $i_f$ (e.g., similar to the two-tap FIR filter). For 1/32 sample accuracy, a set of 32 different four-tap FIR filters may comprise up to 32 different four-tap FIR filters - one for each of the 32 possible values of the fractional part of the projected displacement $i_f$. In other examples, different levels of sample accuracy may be used. The set of four-tap FIR filters may be stored in a look-up table (LUT) and referenced based on $i_f$. A predicted sample $p[x][y]$, for vertical prediction modes, may be determined based on the four-tap FIR filter as:

$$p[x][y] = \sum_{i=0}^{3} fT[i] \cdot ref_1[x + iIdx + i], \qquad (13)$$

where fT[i], i = 0...3, may be the filter coefficients, and *Idx* is integer displacement. A predicted sample $p[x][y]$, for horizontal prediction modes, may be determined based on the four-tap FIR filter as:

$$p[x][y] = \sum_{i=0}^{3} fT[i] \cdot ref_2[y + iIdx + i]. \qquad (14)$$

Supplementary reference samples may be determined/constructed if the location [x][y] of a sample in the current block 904 to be predicted is projected to a negative $x$ coordinate. The location [x][y] of a sample may be projected to a negative $x$ coordinate, for example, if negative vertical prediction angles $\varphi$ are used. The supplementary reference samples may be determined/constructed by projecting the reference samples in $ref_2[y]$ in the vertical line of reference samples 902 to the horizontal line of reference samples 902 using the negative vertical prediction angle $\varphi$. Supplementary reference samples may be similarly determined/constructed, for example, if the location [x][y] of a sample in the current block 904 to be predicted is projected to a negative $y$ coordinate. The location [x][y] of a sample may be projected to a negative $y$ coordinate, for example, if negative horizontal prediction angles $\varphi$ are used. The supplementary reference samples may be determined/constructed by projecting the reference samples in $ref_1[x]$ on the horizontal line of reference samples 902 to the vertical line of reference samples 902 using the negative horizontal prediction angle $\varphi$.

An encoder may determine/predict samples of a current block being encoded (e.g., the current block 904) for a plurality of intra prediction modes (e.g., using one or more of the functions described herein). For example, an encoder may determine/predict samples of a current block for each of 35 intra prediction modes in HEVC and/or 67 intra prediction modes in VVC. The encoder may determine, for each intra prediction mode applied, a corresponding prediction error for the current block based on a difference (e.g., sum of squared differences (SSD), sum of absolute differences (SAD), or sum of absolute transformed differences (SATD)) between the prediction samples, generated from reference samples 902 of a reference line (e.g., from a set of MRL), determined for the intra prediction mode and the original samples of the current block. The encoder may determine/select one of the intra prediction modes to encode the current block based on the determined prediction errors. For example, the encoder may determine/select one of the intra prediction modes that results in the smallest prediction error for the current block. The encoder may determine/select the intra prediction mode to encode the current block based on a rate-distortion measure (e.g., Lagrangian rate-distortion cost) determined using the prediction errors. The encoder may send, in the bitstream to a decoder for decoding of the current block, an indication of the determined/selected intra prediction mode and an indication of the associated MRL index (which may indicate a reference line index). The encoder may also signal in the bitstream to the decoder a corresponding prediction error (e.g., residual) of the intra prediction mode.

A decoder may determine/predict samples of a current block being decoded (e.g., the current block 904) for an intra prediction mode. For example, a decoder may receive an indication of a reference line (e.g., a reference line index or an MRL index associated with the reference line index) and an intra prediction mode (e.g., an angular intra prediction mode) from an encoder for a current block. The decoder may construct a set of reference samples and perform intra prediction based on the MRL index and intra prediction mode indicated by the encoder for the current block in a similar manner (e.g., as described herein for the encoder). For example, the decoder may obtain the reference samples from a reference line indicated/identified by the decoded MRL index. The reference line may have reference line index 0, and may be immediately adjacent to the current block, for example, if MRL is not enabled/activated/selected. No indication of MRL index may be signaled.

The decoder may add predicted values of the samples (e.g., determined based on the intra prediction mode) of the current block to a residual of the current block to reconstruct the current block. A decoder need not receive an indication of an angular intra prediction mode from an encoder for a current block. A decoder may determine an intra prediction mode through other, decoder-side means. (e.g., by applying/using template-based intra mode derivation (TIMD) tool/technique). The methods, devices, and systems as described herein may be applied to/used for other intra prediction modes (e.g., as used in other video coding standards/formats, such as VP8, VP9, AV1, etc.), for example, if various examples herein correspond to intra prediction modes in HEVC and VVC.

Intra prediction may exploit correlations between spatially neighboring samples in the same picture of a video sequence to perform video compression. Inter prediction is another coding tool that may be used to perform video compression. Inter prediction may exploit correlations in the time domain between blocks of samples in different pictures of a video sequence. For example, an object may be seen across multiple pictures of a video sequence. The object may move (e.g., by some translation and/or affine motion) or remain stationary across the multiple pictures. A current block of samples in a current picture being encoded may have/be associated with a corresponding block of samples in a previously decoded picture. The corresponding block of samples may accurately predict the current block of samples. The corresponding block of samples may be displaced from the current block of samples, for example, due to movement of the object, represented in both blocks, across the respective pictures of the blocks. The previously decoded picture may be a reference picture. The corresponding block of samples in the reference picture may be a reference block for motion compensated prediction. An encoder may use a block matching technique to estimate the displacement (or motion) of the object and/or to determine the reference block in the reference picture.

An encoder may determine a difference between a current block and a prediction for a current block. An encoder may determine a difference, for example, based on/after determining/generating a prediction for a current block (e.g., using inter prediction). The difference may be a prediction error and/or as a residual. The encoder may store and/or send (e.g., signal), in/via a bitstream, the prediction error and/or other related prediction information. The prediction error and/or other related prediction information may be used for decoding and/or other forms of consumption. A decoder may decode the current block by predicting the samples of the current block (e.g., by using the related prediction information) and combining the predicted samples with the prediction error.

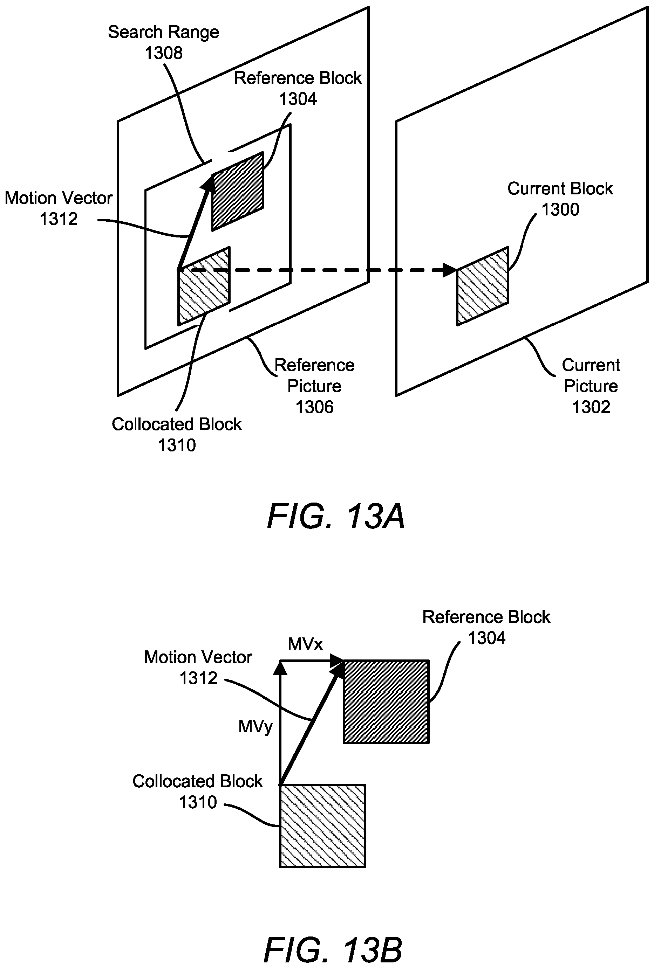

FIG. 13A shows an example of inter prediction. The inter prediction may be performed for a current block 1300 in a current picture 1302 being encoded. An encoder (e.g., the encoder 200 as shown in FIG. 2) may perform inter prediction to determine and/or generate a reference block 1304 in a reference picture 1306. The reference block 1304 may be used to predict the current block 1300. Reference pictures (e.g., the reference picture 1306) may be prior decoded pictures available at the encoder and/or a decoder. Availability of a prior decoded picture may depend/be based on whether the prior decoded picture is available in a decoded picture buffer, at the time, the current block 1300 is being encoded and/or decoded. The encoder may search the one or more reference pictures 1306 for a block (e.g., a candidate reference block) that is similar (or substantially similar) to the current block 1300. The encoder may determine the best matching block from the blocks tested during the searching process. The best matching block may be a reference block 1304. The encoder may determine that the reference block 1304 is the best matching reference block based on one or more cost criteria. The one or more cost criteria may comprise a rate-distortion criterion (e.g., Lagrangian rate-distortion cost). The one or more cost criteria may be based on a difference (e.g., SSD, SAD, and/or SATD) between prediction samples of the reference block 1304 and original samples of the current block 1300.

The encoder may search for the reference block 1304 within a reference region (e.g., a search range 1308). The reference region (e.g., a search range 1308) may be positioned around a collocated position (or block) 1310, of the current block 1300, in the reference picture 1306. The collocated block 1310 may have a same position in the reference picture 1306 as the current block 1300 in the current picture 1302. The reference region (e.g., a search range 1308) may at least partially extend outside of the reference picture 1306. Constant boundary extension may be used, for example, if the reference region (e.g., a search range 1308) extends outside of the reference picture 1306. The constant boundary extension may be used such that values of the samples in a row or a column of reference picture 1306, immediately adjacent to a portion of the reference region (e.g., a search range 1308) extending outside of the reference picture 1306, may be used for sample locations outside of the reference picture 1306. A subset of potential positions, or all potential positions, within the reference region (e.g., a search range 1308) may be searched for the reference block 1304. The encoder may utilize one or more search implementations to determine and/or generate the reference block 1304. For example, the encoder may determine a set of candidate search positions based on motion information of neighboring blocks (e.g., a motion vector 1312) to the current block 1300.

One or more reference pictures may be searched by the encoder during inter prediction to determine and/or generate the best matching reference block. The reference pictures searched by the encoder may be included in (e.g., added to) one or more reference picture lists. For example, in HEVC and VVC (and/or in one or more other communication protocols), two reference picture lists may be used (e.g., a reference picture list 0 and a reference picture list 1). A reference picture list may include one or more pictures. The reference picture 1306 of the reference block 1304 may be indicated by a reference index pointing into a reference picture list comprising the reference picture 1306.

FIG. 13B shows an example motion vector. A displacement between the reference block 1304 and the current block 1300 may be interpreted as an estimate of the motion between the reference block 1304 and the current block 1300 across their respective pictures. The displacement may be represented by a motion vector 1312. For example, the motion vector 1312 may be indicated by a horizontal component ($MV_x$) and a vertical component ($MV_y$) relative to the position of the current block 1300. A motion vector (e.g., the motion vector 1312) may have fractional or integer resolution. A motion vector with fractional resolution may point between two samples in a reference picture to provide a better estimation of the motion of the current block 1300. For example, a motion vector may have 1/2, 1/4, 1/8, 1/16, 1/32, or any other fractional sample resolution. Interpolation between the two samples at integer positions may be used to generate a reference block and its corresponding samples at fractional positions, for example, if a motion vector points to a non-integer sample value in the reference picture. The interpolation may be performed by a filter with two or more taps.

The encoder may determine a difference (e.g., a corresponding sample-by-sample difference) between the reference block 1304 and the current block 1300. The encoder may determine the difference between the reference block 1304 and the current block 1300, for example, based on/after the reference block 1304 is determined and/or generated, using inter prediction, for the current block 1300. The difference may be a prediction error and/or a residual. The encoder may store and/or send (e.g., signal), in/via a bitstream, the prediction error and/or related motion information. The prediction error and/or the related motion information may be used for decoding (e.g., decoding the current block 1300) and/or other forms of consumption. The motion information may comprise the motion vector 1312 and/or a reference indicator/index. The reference indicator may indicate the reference picture 1306 in a reference picture list. The motion information may comprise an indication of the motion vector 1312 and/or an indication of the reference index. The reference index may indicate reference picture 1306 in the reference picture list. A decoder may decode the current block 1300 by determining and/or generating the reference block 1304. The decoder may determine and/or generate the reference block 1304, for example, based on the prediction error and/or the related motion information. The reference block 1304 may correspond to/form (e.g., be considered as) a prediction of the current block 1300. The decoder may decode the current block 1300 based on combining the prediction (e.g., a reference block) with the prediction error (e.g., a residual block).

Inter prediction, as shown in FIG. 13A, may be performed using one reference picture 1306 as a source of a prediction for the current block 1300. Inter prediction based on a prediction of a current block using a single picture may be referred to as uni-prediction.

Inter prediction of a current block, using bi-prediction, may be based on two pictures. Bi-prediction may be useful, for example, if a video sequence comprises fast motion, camera panning, zooming, and/or scene changes. Bi-prediction may be useful to capture fade outs of one scene or fade outs from one scene to another, where two pictures may effectively be displayed simultaneously with different levels of intensity.

One or both of uni-prediction and bi-prediction may be available/used for performing inter prediction (e.g., at an encoder and/or at a decoder). Performing a specific type of inter prediction (e.g., uni-prediction and/or bi-prediction) may depend on a slice type of current block. For example, for P slices, only uni-prediction may be available/used for performing inter prediction. For B slices, either uni-prediction or bi-prediction may be available/used for performing inter prediction. An encoder may determine and/or generate a reference block, for predicting a current block, from a reference picture list 0, for example, if the encoder is using uni-prediction. An encoder may determine and/or generate a first reference block, for predicting a current block, from a reference picture list 0 and determine and/or generate a second reference block, for predicting the current block, from a reference picture list 1, for example, if the encoder is using bi-prediction.

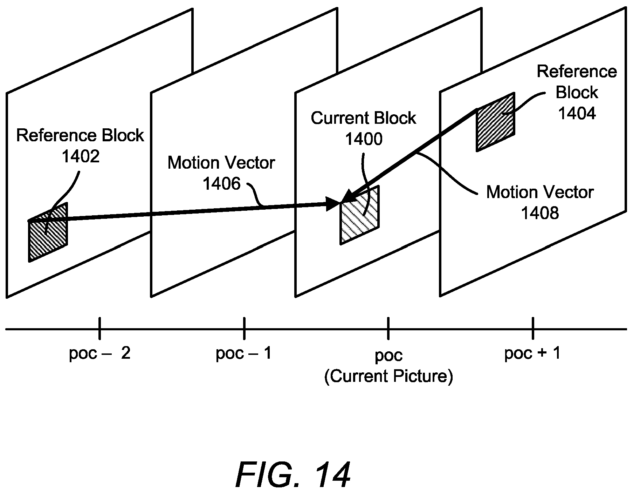

FIG. 14 shows an example of bi-prediction. Two reference blocks 1402 and 1404 may be used to predict a current block 1400. The reference block 1402 may be in a reference picture of one of reference picture list 0 or reference picture list 1. The reference block 1404 may be in a reference picture of another one of reference picture list 0 or reference picture list 1. As shown in FIG. 14, the reference block 1402 may be in a first picture that precedes (e.g., in time) a current picture of the current block 1400, and the reference block 1404 may be in a second picture that succeeds (e.g., in time) the current picture of the current block 1400. The first picture may precede the current picture in terms of a picture order count (POC). The second picture may succeed the current picture in terms of the POC. The reference pictures may both precede or both succeed the current picture in terms of POC. A POC may be/indicate an order in which pictures are output (e.g., from a decoded picture buffer). A POC may be/indicate an order in which pictures are generally intended to be displayed. Pictures that are output may not necessarily be displayed but may undergo different processing and/or consumption (e.g., transcoding). The two reference blocks determined and/or generated using/for bi-prediction may correspond to (e.g., be comprised in) a same reference picture. The reference picture may be included in both the reference picture list 0 and the reference picture list 1, for example, if the two reference blocks correspond to the same reference picture.

A configurable weight and/or offset value may be applied to one or more inter prediction reference blocks. An encoder may enable the use of weighted prediction using a flag in a picture parameter set (PPS). The encoder may send/signal the weight and/or offset parameters in a slice segment header for the current block 1400. Different weight and/or offset parameters may be sent/signaled for luma and/or chroma components.

The encoder may determine and/or generate the reference blocks 1402 and 1404 for the current block 1400 using inter prediction. The encoder may determine a difference between the current block 1400 and each of the reference blocks 1402 and 1404. The differences may be prediction errors or residuals. The encoder may store and/or send/signal, in/via a bitstream, the prediction errors and/or their respective related motion information. The prediction errors and their respective related motion information may be used for decoding and/or other forms of consumption. The motion information for the reference block 1402 may comprise a motion vector 1406 and/or a reference indicator/index. The reference indicator may indicate a reference picture, of the reference block 1402, in a reference picture list. The motion information for the reference block 1402 may comprise an indication of the motion vector 1406 and/or an indication of the reference index. The reference index may indicate the reference picture, of the reference block 1402, in the reference picture list.

The motion information for the reference block 1404 may comprise a motion vector 1408 and/or a reference index/indicator. The reference indicator may indicate a reference picture, of the reference block 1408, in a reference picture list. The motion information for the reference block 1404 may comprise an indication of motion vector 1408 and/or an indication of the reference index. The reference index may indicate the reference picture, of the reference block 1404, in the reference picture list.

A decoder may decode the current block 1400 by determining and/or generating the reference blocks 1402 and 1404. The decoder may determine and/or generate the reference blocks 1402 and 1404, for example, based on the prediction errors and/or the respective related motion information for the reference blocks 1402 and 1404. The reference blocks 1402 and 1404 may correspond to/form (e.g., be considered as) the predictions of the current block 1400. The decoder may decode the current block 1400 based on combining the predictions with the prediction errors.

Motion information may be predictively coded, for example, before being stored and/or sent/signaled in/via a bit stream (e.g., in HEVC, VVC, and/or other video coding standards/formats/protocols). The motion information for a current block may be predictively coded based on motion information of one or more blocks neighboring the current block. The motion information of the neighboring block(s) may often correlate with the motion information of the current block because the motion of an object represented in the current block is often the same as (or similar to) the motion of objects in the neighboring block(s). Motion information prediction techniques may comprise advanced motion vector prediction (AMVP) and/or inter prediction block merging.

An encoder (e.g., the encoder 200 as shown in FIG. 2), may code a motion vector. The encoder may code the motion vector (e.g., using AMVP) as a difference between a motion vector of a current block being coded and a motion vector predictor (MVP). An encoder may determine/select the MVP from a list of candidate MVPs. The candidate MVPs may be/correspond to previously decoded motion vectors of neighboring blocks in the current picture of the current block, and/or blocks at or near the collocated position of the current block in other reference pictures. The encoder and/or a decoder may generate and/or determine the list of candidate MVPs.

The encoder may determine/select an MVP from the list of candidate MVPs. The encoder may send/signal, in/via a bitstream, an indication of the selected MVP and/or a motion vector difference (MVD). The encoder may indicate the selected MVP in the bitstream using an index/indicator. The index may indicate the selected MVP in the list of candidate MVPs. The MVD may be determined/calculated based on a difference between the motion vector of the current block and the selected MVP. For example, for a motion vector that indicates a position (e.g., represented by a horizontal component ($MV_x$) and a vertical component ($MV_y$)) relative to a position of the current block being coded, the MVD may be represented by two components $MVD_x$ and $MVD_y$. $MVD_x$ and $MVD_y$ may be determined/calculated as:

$$MVD_x = MV_x - MVP_x, \qquad\qquad (15)$$

$$MVD_y = MV_y - MVP_y. \qquad\qquad (16)$$

$MVD_x$ and $MVD_y$ may respectively represent horizontal and vertical components of the MVD. $MVP_x$ and $MVP_y$ may respectively represent horizontal and vertical components of the MVP. A decoder (e.g., the decoder 300 as shown in FIG. 3) may decode the motion vector by adding the MVD to the MVP indicated in/via the bitstream. The decoder may decode the current block by determining and/or generating the reference block. The decoder may determine and/or generate the reference block, for example, based on the decoded motion vector. The reference block may correspond to/form (e.g., be considered as) the prediction of the current block. The decoder may decode the current block by combining the prediction with the prediction error.

The list of candidate MVPs (e.g., in HEVC, VVC, and/or one or more other communication protocols), for AMVP, may comprise two or more candidates (e.g., candidates A and B). Candidates A and B may comprise: up to two (or any other quantity of) spatial candidate MVPs determined/derived from five (or any other quantity of) spatial neighboring blocks of a current block being coded; one (or any other quantity of) temporal candidate MVP determined/derived from two (or any other quantity of) temporal, co-located blocks (e.g., if both of the two spatial candidate MVPs are not available or are identical); and/or zero motion vector candidate MVPs (e.g., if one or both of the spatial candidate MVPs or temporal candidate MVPs are not available). Other quantities of spatial candidate MVPs, spatial neighboring blocks, temporal candidate MVPs, and/or temporal, co-located blocks may be used for the list of candidate MVPs.

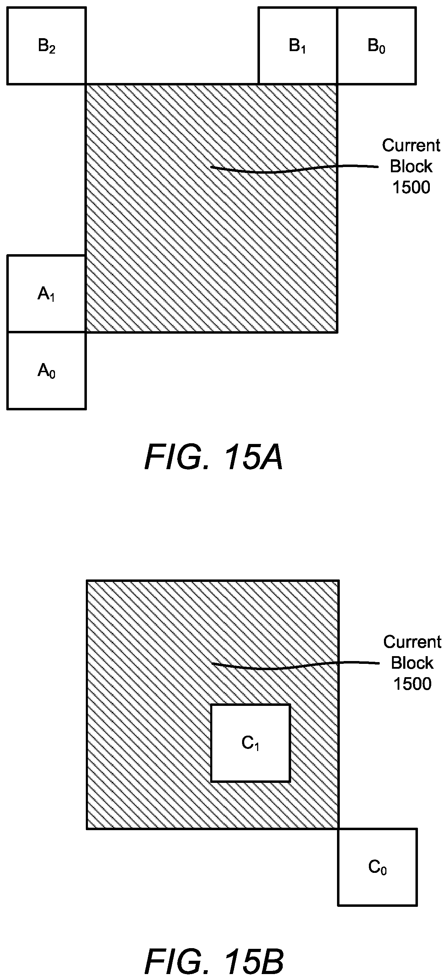

FIG. 15A shows spatial candidate neighboring blocks for a current block. For example, five (or any other quantity of) spatial candidate neighboring blocks may be located relative to a current block 1500 being encoded. The five spatial candidate neighboring blocks may be $A_0$, $A_1$, $B_0$, $B_1$, and $B_2$. FIG. 15B shows temporal, co-located blocks for the current block. For example, two (or any other quantity of) temporal, co-located blocks may be located relative to the current block 1500. The two temporal, co-located blocks may be $C_0$ and $C_1$. The two temporal, co-located blocks may be in one or more reference pictures that may be different from the current picture of the current block 1500.

An encoder (e.g., the encoder 200 as shown in FIG. 2) may code a motion vector using inter prediction block merging (e.g., a merge mode). The encoder (e.g., using merge mode) may reuse the same motion information of a neighboring block (e.g., one of neighboring blocks $A_0$, $A_1$, $B_0$, $B_1$, and $B_2$) for inter prediction of a current block. The encoder (e.g., using merge mode) may reuse the same motion information of a temporal, co-located block (e.g., one of temporal, co-located blocks $C_0$ and $C_1$) for inter prediction of a current block. An MVD need not be sent (e.g., indicated, signaled) for the current block because the same motion information as that of a neighboring block or a temporal, co-located block may be used for the current block (e.g., at the encoder and/or a decoder). A signaling overhead for sending/signaling the motion information of the current block may be reduced because the MVD need not be indicated for the current block. The encoder and/or the decoder may generate a candidate list of motion information from neighboring blocks or temporal, co-located blocks of the current block (e.g., in a manner similar to AMVP). The encoder may determine to use (e.g., inherit) motion information, of one neighboring block or one temporal, co-located block in the candidate list, for predicting motion information of the current block being coded. The encoder may signal/send, in/via a bit stream, an indication of the determined motion information from the candidate list. For example, the encoder may signal/send an indicator/index. The index may indicate the determined motion information in the list of candidate motion information. The encoder may signal/send the index to indicate the determined motion information.

A list of candidate motion information for merge mode (e.g., in HEVC, VVC, or any other coding formats/-standards/protocols) may comprise: up to four (or any other quantity of) spatial merge candidates derived/determined from five (or any other quantity of) spatial neighboring blocks (e.g., as shown in FIG. 15A); one (or any other quantity of) temporal merge candidate derived from two (or any other quantity of) temporal, co-located blocks (e.g., as shown in FIG. 15B); and/or additional merge candidates comprising bi-predictive candidates and zero motion vector candidates. The spatial neighboring blocks and the temporal, co-located blocks used for merge mode may be the same as the spatial neighboring blocks and the temporal, co-located blocks used for AMVP.

Inter prediction may be performed in other ways and variants than those described herein. For example, motion information prediction techniques other than AMVP and merge mode may be used. While various examples herein correspond to inter prediction modes, such as used in HEVC and VVC, the methods, devices, and systems as described herein may be applied to/used for other inter prediction modes (e.g., as used for other video coding standards/formats such as VP8, VP9, AV1, etc.). History based motion vector prediction (HMVP), combined intra/inter prediction mode (CIIP), and/or merge mode with motion vector difference (MMVD) (e.g., as described in VVC) may be performed/used and are within the scope of the present disclosure.

Block matching may be used (e.g., in inter prediction) to determine a reference block in a different picture than that of a current block being encoded. Block matching may be used to determine a reference block in a same picture as that of a current block being encoded. The reference block, in a same picture as that of the current block, as determined using block matching may often not accurately predict the current block (e.g., for camera captured videos). Prediction accuracy for screen content videos may not be similarly impacted, for example, if a reference block in the same picture as that of the current block is used for encoding. Screen content videos may comprise, for example, computer generated text, graphics, animation, etc. Screen content videos may comprise (e.g., may often comprise) repeated patterns (e.g., repeated patterns of text and/or graphics) within the same picture. Using a reference block (e.g., as determined using block matching), in a same picture as that of a current block being encoded, may provide efficient compression for screen content videos.

A prediction technique may be used (e.g., in HEVC, VVC, and/or any other coding standards/formats/protocols) to exploit correlation between blocks of samples within a same picture (e.g., of screen content videos). The prediction technique may be intra block copy (IBC) or current picture referencing (CPR). An encoder may apply/use a block matching technique (e.g., similar to inter prediction) to determine a displacement vector (e.g., a block vector (BV)). The BV may indicate a relative position of a reference block (e.g., in accordance with intra block compensated prediction), that best matches the current block, from a position of the current block. For example, the relative position of the reference block may be a relative position of a top-left corner (or any other point/sample) of the reference block. The BV may indicate a relative displacement from the current block to the reference block that best matches the current block. The encoder may determine the best matching reference block from blocks tested during a searching process (e.g., in a manner similar to that used for inter prediction). The encoder may determine that a reference block is the best matching reference block based on one or more cost criteria. The one or more cost criteria may comprise a rate-distortion criterion (e.g., Lagrangian rate-distortion cost). The one or more cost criteria may be based on, for example, one or more differences (e.g., an SSD, an SAD, an SATD, and/or a difference determined based on a hash function) between the prediction samples of the reference block and the original samples of the current block. A reference block may correspond to/comprise prior decoded blocks of samples of the current picture. The reference block may comprise decoded blocks of samples of the current picture prior to being processed by in-loop filtering operations (e.g., deblocking and/or SAO filtering).

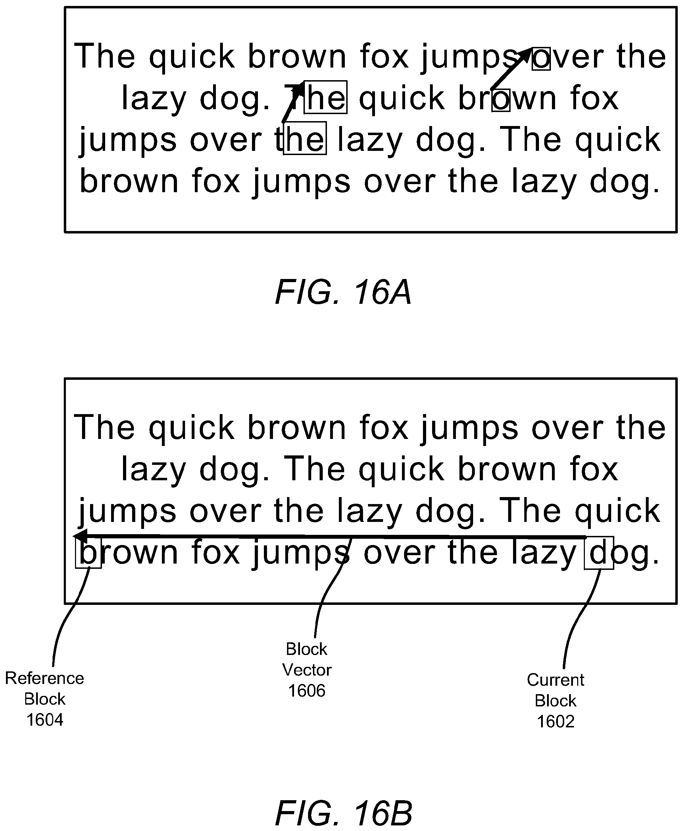

FIG. 16A shows an example of IBC for encoding. The example IBC shown in FIG. 16A may correspond to screen content. The rectangular portions/sections with arrows beginning at their boundaries may be the current blocks being encoded. The rectangular portions/sections that the arrows point to may be the reference blocks for predicting the current blocks.

A reference block may be determined and/or generated, for a current block, for IBC. The encoder may determine a difference (e.g., a corresponding sample-by-sample difference) between the reference block and the current block. The difference may be a prediction error or residual. The encoder may store and/or send/signal, in/via a bitstream the prediction error and/or related prediction information. The prediction error and/or the related prediction information may be used for decoding and/or other forms of consumption. The prediction information may comprise a BV. The prediction information may comprise an indication of the BV. A decoder (e.g., the decoder 300 as shown in FIG. 3), may decode the current block by determining and/or generating the reference block. The decoder may determine and/or generate the current block, for example, based on the prediction information (e.g., the BV). The reference block may correspond to/form (e.g., be considered as) the prediction of the current block. The decoder may decode the current block by combining the prediction (e.g., prediction block) with the prediction error (e.g., residual or residual block).

A BV may be predictively coded (e.g., in HEVC, VVC, and/or any other coding standards/formats/protocols), for example, before being stored and/or sent/signaled in/via a bit stream. The BV for a current block may be predictively coded based on a BV of one or more blocks neighboring the current block. For example, an encoder may predictively code a BV using the merge mode (e.g., in a manner similar to as described herein for inter prediction), AMVP (e.g., as described herein for inter prediction), or a technique similar to AMVP. The technique similar to AMVP may be BV prediction and difference coding (or AMVP for IBC).

An encoder (e.g., the encoder 200 as shown in FIG. 2) performing BV prediction and coding may code a BV as a difference between the BV of a current block being coded and a block vector predictor (BVP). An encoder may select/determine the BVP from a list of candidate BVPs. The candidate BVPs may comprise/correspond to previously decoded BVs of neighboring blocks in the current picture of the current block. The encoder and/or a decoder may generate or determine the list of candidate BVPs.

The encoder may send/signal, in/via a bitstream, an indication of the selected BVP and a block vector difference (BVD). The encoder may indicate the selected BVP in the bitstream using an index/indicator. The index may indicate the selected BVP in the list of candidate BVPs. The BVD may be determined/calculated based on a difference between a BV of the current block and the selected BVP. For example, for a BV that indicates a position (e.g., represented by a horizontal component ($BV_x$) and a vertical component ($BV_y$)) relative to a position of the current block being coded, the BVD may represented by two components $BVD_x$ and $BVD_y$. $BVD_x$ and $BVD_y$ may be determined/calculated as:

$$BVD_x = BV_x - BVP_x, \qquad (17)$$

$$BVD_y = BV_y - BVP_y. \qquad (18)$$

$BVD_x$ and $BVD_y$ may respectively represent horizontal and vertical components of the BVD. $BVP_x$ and $BVP_y$ may respectively represent horizontal and vertical components of the BVP. A decoder (e.g., the decoder 300 as shown in FIG. 3), may decode the BV by adding the BVD to the BVP indicated in/via the bitstream. The decoder may decode the current block by determining and/or generating the reference block. The decoder may determine and/or generate the reference block, for example, based on the decoded BV. The reference block may correspond to/form (e.g., be considered as) the prediction (e.g., a prediction block) of the current block. The decoder may decode the current block by combining the prediction (e.g., the prediction block) with the prediction error (e.g., residual or residual block).

A same BV as that of a neighboring block may be used for the current block and a BVD need not be separately signaled/sent for the current block, such as in the merge mode. A BVP (in the candidate BVPs), which may correspond to a decoded BV of the neighboring block, may itself be used as a BV for the current block. Not sending the BVD may reduce the signaling overhead.

A list of candidate BVPs (e.g., in HEVC, VVC, and/or any other coding standard/format/protocol) may comprise two (or more) candidates. The candidates may comprise candidates A and B. Candidates A and B may comprise: up to two (or any other quantity of) spatial candidate BVPs determined/derived from five (or any other quantity of) spatial neighboring blocks of a current block being encoded; and/or one or more of last two (or any other quantity of) coded BVs (e.g., if spatial neighboring candidates are not available). Spatial neighboring candidates may not be available, for example, if neighboring blocks are encoded using intra prediction or inter prediction. Locations of the spatial candidate neighboring blocks, relative to a current block, being encoded using IBC may be illustrated in a manner similar to spatial candidate neighboring blocks used for coding motion vectors in inter prediction (e.g., as shown in FIG. 15A). For example, five spatial candidate neighboring blocks for IBC may be respectively denoted $A_0$, $A_1$, $B_0$, $B_1$, and $B_2$ (as shown in FIG. 15A).

The most probable mode (MPM) may refer to the intra prediction mode (IPM) that is most likely to be the best mode for the current block being encoded or decoded. The MPM, in current intra prediction techniques, may be determined by analyzing the intra prediction modes of the neighboring CUs (e.g., also referred to as blocks) of a current block (or CU) to be coded (e.g., encoded or decoded). For example, a list of 6 MPMs (referred to as the "MPM list") may be constructed for intra prediction. The MPM list may be derived from the intra prediction modes of the neighboring CUs, and may be updated as the encoder progresses through the video frame. The encoder may determine whether the current block is a candidate for any of the MPMs in the MPM list, for example, if/when encoding a block. The encoder may compare the prediction errors of the respective MPMs to determine which MPM from the MPM list is the best mode for the current block, for example, if the current block is a candidate for any of the MPMs in the MPM list. The encoder may evaluate remaining intra prediction modes (e.g., from a total of 67 intra prediction modes which may include a planar mode, a DC mode, and 65 angular directional modes) to determine the best mode for the current block, for example, if the current block is not a candidate for any of the MPMs in the MPM list.

The use of MPMs may significantly improve the coding efficiency because the encoder does not need to explicitly signal the intra prediction mode for the current block if it is one of the MPMs. Instead, the decoder may infer the intra prediction mode for the current block from the corresponding MPM list identically generated at the decoder. Thus, signaling overhead in the bitstream may be reduced.

Three types of intra modes may be considered to construct the MPM list: default intra modes; neighboring intra modes; and derived intra modes. A unified 6 MPM list may be used for intra blocks irrespective of whether Multiple Reference Lines (MRL) and Intra Sub-Partitions (ISP) coding tools are applied. The MPM list for the current block may be constructed based on intra modes of the left neighbor block (e.g., block corresponding to A1 in FIG. 15A) and the above neighbor block (e.g., block corresponding to B1 in FIG. 15A) of the current block. Suppose the mode of the left neighbor block may be denoted as Left and the mode of the above neighbor block is denoted as Above, the unified MPM list may be constructed as follows: if a neighboring block is not available, its intra mode is set to planar mode by default; if both modes Left and Above are non-angular modes, then the MPM list is set to include{planar, DC, V, H, V - 4, V + 4}, where "V" and "H" refer to vertical mode and horizontal mode, respectively; if one of modes Left and Above is an angular mode, and the other is non-angular, set a mode Max as the larger mode of Left and Above, and set MPM list to include {planar, Max, Max - 1, Max + 1, Max -- 2, Max + 2}; if Left and Above are both angular and they are different, set a mode Max and a mode Min as the larger mode in Left and Above and as the smaller mode in Left and Above, respectively, and thereafter, if Max - Min is equal to 1, then set MPM list to include {planar, Left, Above, Min - 1, Max + 1, Min - 2}, if Max - Min is greater than or equal to 62, then set MPM list to include {planar, Left, Above, Min + 1, Max - 1, Min + 2}, if Max - Min is equal to 2, set MPM list to include {planar, Left, Above, Min + 1, Min - 1, Max + 1}, or otherwise, set MPM list to include {planar, Left, Above, Min - 1, -Min + 1, Max - 1}; and if Left and Above are both angular and they are the same, set MPM list to include {planar, Left, Left - 1, Left + 1, Left - 2, Left + 2}.

The encoder may encode an MPM index in the bitstream to indicate the position of the selected intra prediction mode in the MPM list to the decoder. The encoder may represent the MPM index as a codeword and entropy encode the codeword into the bitstream. The decoder may derive the MPM list in a manner identical to the encoder, and use the MPM index obtained from the codeword decoded from bitstream to obtain the intra prediction mode from the MPM list derived at the decoder. The first bin of codeword, representing the MPM index, may be context coded using an arithmetic coder (e.g., CABAC) so as to achieve additional coding efficiencies. For example, three contexts may be used, corresponding to whether the current intra block is MRL enabled, ISP enabled, or a normal intra block.

Pruning, in the 6 MPM list generation process, may be used to remove duplicated intra modes so that the MPM list includes only unique intra modes. For entropy coding of the 61 non-MPM modes (that is, the 67 modes in VVC minus the 6 MPM), a truncated binary code (TBC) may be used.

The MPM list may be extended to include 16 additional candidates, and is divided into two parts, the primary MPM (PMPM) (e.g., including 6 entries) and the secondary (SMPM) (e.g., including 16 entries). The first entry in the general MPM list may be the planar mode. The remaining entries may include the intra modes of the adjacent neighboring blocks corresponding to positions left (L), above (A), below-left (BL), above-right (AR), and above-left (AL) (e.g., shown in FIG.15A as A1, B1, A0, B0, and B2), and decoder-side intra mode derivation (DIMD) modes which are sorted in ascending order of a cost such as, for example, SAD, SSD, SATD, etc. Up to a preconfigured/predetermined quantity/number of modes (e.g., 5) with the smallest costs are added to the MPM list. The cost for a respective MPM (e.g., an IPM corresponding to an entry in the MPM list) may be computed between the prediction of the reconstructed samples of the template of the current block and the reconstructed samples. For example, the prediction may be generated by applying/using the respective MPM for the template. Sorted directional modes may be added into the general MPM list, and then the default modes, until the general MPM list with 22 entries may be constructed. The order of neighboring blocks may correspond to A, L, BL, AR, AL; otherwise, it is L, A, AL, AR, BL, for example, if a CU block is vertically oriented.

Referring back to FIG. 16A, in an Intra Block Copy (IBC) mode used for screen content, a Reference Block (RB) may be determined as a "best matching" RB to a Current Block (CB). For example, the arrows in FIG. 16A may correspond to Block Vectors (BVs) that indicate respective displacements from respective Current Blocks (CBs) to respective Reference Blocks (RBs) that "best match" the respective CBs. The RBs may match the respective CBs, and the calculated residuals may be small, if not zero. Video content may be more efficiently encoded by considering symmetry properties. Symmetry may be often present in video content, especially in text character regions and computer-generated graphics in screen content video.

As an extension to Intra Block Copy (IBC) mode, a Reconstruction-Reordered Intra Block Copy (RRIBC) mode (e.g., also referred to as IBC mirror mode) may be for screen content video coding to take advantage of symmetry within video content to further improve the coding efficiency of IBC. The RRIBC mode may be adopted into the Enhanced Compression Model (ECM) software algorithm that is currently under coordinated exploration study by the Joint Video Exploration Team (JVET) of ITU-T Video Coding Experts Group (VCEG) and ISO/IEC MPEG as a potential enhanced video coding technology beyond the capabilities of VVC. A residual for the CB may be calculated based on samples of a Reference Block (RB) (e.g., samples corresponding to an original RB being encoded and decoded to form a reconstructed block) being flipped relative to the CB according to a flip direction indicated for the CB, for example, if the RRIBC mode is indicated for encoding a Current Block (CB). At the encoder side, the CB (to be predicted) may be flipped, for example, before matching and residual calculation, and the RB (used to predict the current block) may be derived without flipping. Similarly, at the decoder side, the CB (that was flipped at the encoder) may be determined based on the RB and residual information, and may be flipped back to restore the original orientation of the current block, for example, before being flipped at the encoder side. The RB may be flipped instead of the CB being flipped, such that the RB may be flipped to encode the CB (at the encoder) and may be flipped back (at the decoder) to restore the original orientation of the RB at the encoder. Throughout this detailed specification, reference to flipping the CB may alternatively refer to flipping the RB and not the CB such that the RB and the CB may be flipped in the flipping direction with respect to each other.

The flipping direction, in the RRIBC mode, may include one of a horizontal direction (e.g., along an x-axis) or a vertical direction (e.g., along a y-axis) for RRIBC coded blocks. A first indication (e.g., a first syntax flag; also referred to as a RRIBC type flag or an IBC mirror mode flag) for a Current Block (CB) coded in the RRIBC mode (e.g., an IBC Advanced Motion Vector Prediction (AMVP) coded block) may indicate/signal whether to use flipping to encode/decode the CB. A second indication (e.g., a second syntax flag; also referred to as a RRIBC direction flag or an IBC mirror mode direction flag) for the CB may indicate/signal the direction for flipping (e.g., a vertical or horizontal flipping direction). The flipping direction for IBC merge mode may be inherited from neighboring blocks, without syntax signaling. Flipping of a CB (or a Reference Block (RB) in an alternative embodiment) for RRIBC in a horizontal and a vertical direction can be represented in equations (19) and (20), respectively:

$$Reference(x, y) = Sample(w - 1 - x, y) \qquad (19)$$

$$Reference(x, y) = Sample(x, h - 1 - y) \qquad (20)$$

where w and *h* are the width and height of a CB, respectively. For example, Sample($x$, $y$) may indicate a sample value located in ($x$, $y$), and Reference($x$, $y$) may indicate a corresponding reference sample value, for example, after flipping. In other words, for horizontal flipping, (19) shows that the CB is flipped in the horizontal direction by sampling from right to left. Similarly, for vertical flipping, (20) shows that the CB is flipped in the vertical direction by sampling the CB from down to up

Considering the horizontal or vertical symmetry, the current block and the reference block may normally be aligned horizontally or vertically, respectively. The reference block may be determined from a reference region (e.g., including candidate reference blocks) aligned in the same flipping direction, for example, based on the RRIBC mode and a flipping direction. The vertical component (BVy) of the BV (e.g., indicating a displacement from the current block to the reference block) may not need to be signaled because it may be inferred to be equal to zero (0), for example, if flipping in a horizontal direction is used/applied/indicated. The horizontal component (BVx) of the BV may not need to be signaled because it may be inferred to be equal to zero (0), for example, if flipping in a vertical direction is used/applied/indicated. Only one component, aligned with the direction for flipping, of the BV may be encoded and signaled for the current block.

FIG. 16B shows an example of Reconstruction-Reordered Intra Block Copy (RRIBC) mode. A RRIBC mode may be used for screen content to utilize symmetry within text regions to increase efficiency for coding video content. An encoder, similar to the encoder described herein with respect to FIG. 16 (e.g., encoder 114 of FIG.1) may determine that a reference block (RB) 1604 is the "best matching" reference block for a current block (CB) 1602. The encoder may determine that RB 1604 is the "best matching" RB for CB 1602, for example, based on using (e.g., applying) horizontal flipping The encoder may select reference block 1604 as the "best matching" reference block, for example, based on one or more cost criterion, such as a rate-distortion criterion, as described herein. The one or more cost criterion may be used with respect to reference block 1604 flipped in the horizontal direction relative to current block 1602. Current block 1602 may be flipped, for example, before the one or more cost criterion are used to determine reference block 1604. Reference block 1604, for flipping in the horizontal direction, may be located in a reference region, where the reference region may be in horizontal alignment with current block 1602. A block vector (BV) 1606, indicating a displacement between current block 1602 and reference block 1604, may be represented as only a horizontal component (BVx) of BV 1606 because, due to the constraints on possible locations of reference blocks, the vertical component of BV 1606 may be equal to zero (0), for example, if horizontal flipping is indicated/applied/used.

A BV for the current block, coded in IBC mode, may be constrained to indicate a relative displacement from the current block to a reference block within an IBC reference region. A BVP used to predictively code a BV, for example, may be similarly constrained. This is because a BVP may be derived from a BV of a spatially neighboring block of the current block or a prior coded BV. A BVD may be determined as a difference between the BV and the BVP, for example, based on the BVP. The BVD may be encoded and transmitted along with an indication of the selected BVP in a bitstream to enable decoding of the current block. A reference block (e.g., that is flipped in a direction relative to the current block) may be constrained to (i.e., selected from) an RRIBC reference region, corresponding to the direction, that may be a subset or within the IBC reference region. The BVP may be used to predictively code a BV, for a current block, indicating a relative displacement from the current block to a reference block within a reference region (e.g., RRIBC region). The reference region (e.g., an RRIBC reference region) may be determined that corresponds to the direction for flipping, for example, based on the RRIBC mode being indicated and based on a direction for flipping a reference block relative to a current block. The reference region may indicate a region within a picture frame from which the reference block may be selected (e.g., after flipping of the CB).

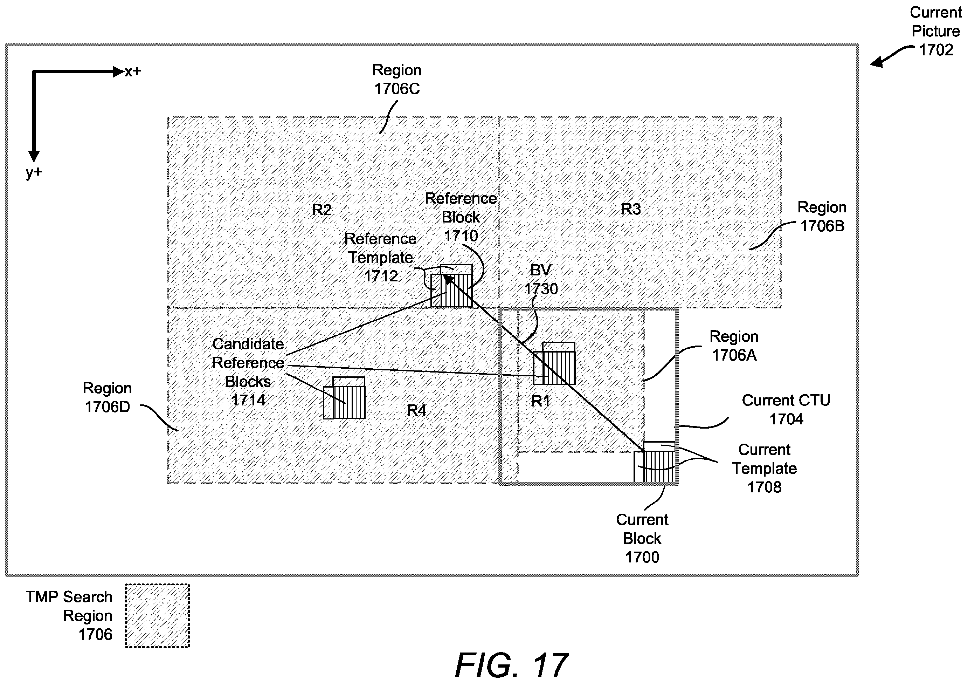

FIG. 17 shows an example of intra template matching prediction (IntraTMP) for determining (e.g., predicting) a current block. More specifically, FIG. 17 shows an example of intra template matching prediction (IntraTMP) for determining (e.g., predicting) current block1700. IntraTMP may be an intra prediction mode that copies a reference block, from a reconstructed part of a current picture 1702 (e.g., current frame), whose template (e.g., an L-shaped template, above-only template, or left-only template) is determined to best matches current template 1708 (e.g., the L-shaped template, above only template, or left-only template) of current block 1700 to predict current block 1700. Current block 1700 may comprise a rectangular block of samples, in a picture or video frame of current picture 1702, to be encoded by the encoder or decoded by the decoder. Current template 1708 may be determined, for example, based on samples in a reconstructed region neighboring current block 1700. Current template 1708 may comprise samples that are adjacent to current block 1700 such as including one or more rows of samples above current block 1700 and/or and one or more columns of samples to the left of current block 1700. The current template 1708 may be an L-shaped template , a top-only template, or a left-only template of the current block 1700. The L-shaped template may include the top-only template and the left-only template. The L-shaped template may further include an above-left template.

A plurality of reference templates of respective candidate reference blocks 1714, from a predefined TMP search region 1706, may be matched with current template 1708 to determine or select a reference template 1712 that best matches or is most similar to current template 1708. A plurality of reference templates of respective candidate reference blocks 1714 may be matched with current template 1708, for example, in IntraTMP. A reference block (RB) 1710 from the candidate reference blocks 1714 and indicated by the selected reference template 1712 may be used as a prediction block to determine (e.g., predict) current block 1700. Block vector (BV) 1730 may indicate a displacement from current block 1700 (e.g., the top left sample of current block 1700) to reference block 1710 (e.g., the top left sample of reference block 1710).

TMP search region 1706 may comprise a portion of a reconstructed region of current picture 1702. TMP search region 1706 may indicate the regions that the encoder or decoder may search for candidate templates (such as candidate templates of candidate reference blocks 1714) to determine reference template 1712 and corresponding reference block 1710. TMP search region 1706, may include region 1706A (R1) from a current CTU 1704, region 1706B (R3) including a portion of the above CTU, region 1706C (R2) including a portion of the above-left CTU, and region 1706D (R4) including a portion of the left CTU. The CTUs may be a result of picture partitioning operations described above. TMP search region 1706 may include other regions of reconstructed samples of current picture 1702.

The dimensions of TMP search region 1706 (SearchRange_w, SearchRange_h) may be set to be proportional to the dimensions of current block 1700 (BlkW, BlkH) to have a fixed quantity/number of cost comparisons (e.g., SAD) per pixel. For example, the dimensions of TMP search region 1706 may be calculated as follows:

$$SearchRange\_w = \min\left(64, \alpha * BlkW\right) \tag{21}$$

$$SearchRange\_h = \min\left(64, \alpha * BlkH\right) \tag{22}$$

$\alpha$ (or alpha) may be a constant that controls a gain/complexity trade-off for the encoder or decoder. $\alpha$ may be equal to 5. With respect to FIG. 17, it should further be noted that the dimensions of TMP search region 1706 are illustrated by example and not by limitation. For example, the dimensions of the regions may vary, and/or one or more of the regions may not be present. Portions of reconstructed region directly above and directly left of current block 1700, as shown for example in FIG. 17, may not be available for prediction or determination and may be excluded from TMP search region 1706. For example, a reference block in these portions would overlap with current block 1700, which would be an invalid location for prediction or determination of current block 1700. A similar restriction may also be based on the unavailability of samples, for example, because of the sequence order of encoding or decoding, or because the samples may be outside of TMP search region or current picture 1702.

The candidate templates of candidate reference blocks 1714 may have the same shape and size as current template 1708. The candidate templates may further have the same orientation as current template 1708. Matching templates may include calculating a template matching (TM) cost between samples of a candidate reference template of a candidate RB (indicated by a respective candidate block vector) and corresponding samples of current template 1708. The difference may be based on, for example, a sum of squared differences (SSD), a sum of absolute differences (SAD), a sum of absolute transformed differences (SATD), or a difference determined based on a hash function. The template matching cost may represent a similarity between the templates with a smaller cost representing more similar templates.

A position of each sample in TMP search region 1706 may be selected as a location of a candidate reference block whose respective reference template is compared against current template 1708 to determine a TM cost. The position may be indicated by a candidate block vector that represents a displacement from current block 1700 (e.g., a top-left sample of current block 1700) to the position. One or more of TMP search region 1706 may be subsampled to speed up the template matching process, by a subsampling interval (e.g., 3) such that not every position is considered as a location of a candidate reference block. A refinement process may be performed to select additional candidate block vectors, for example, after finding a set of candidates (e.g., to generate the list of candidates). The refinement process may be performed via a second template matching search in a search region around one or more of the set of candidates. The search region may be a reduced search range associated with the subsampling interval.

The encoder may signal the usage of this mode, for example, based on the encoder selecting IntraTMP for coding the current block. The same prediction and matching operations may be performed at the decoder.

The decoder (and also encoder) may construct a candidate list of up to a predetermined maximum quantity/-number (e.g., 19) of candidate block vectors (or candidate block vector predictors), for example, based on performing template matching operations on candidate reference templates in TMP search regions 1706A-D. These candidate block vectors may be in ascending order according to the template matching costs of respective reference templates of candidate reference blocks indicated by the candidate block vectors. A prediction block (e.g., a predictor) of current block 1700 may be generated using one or more of the reference blocks (e.g., reference block 1710) determined using IntraTMP as well as using (e.g., applying) one or more optional filters. For example, the following modes may be supported: single predictor, fusion of multiple predictors, sub-pel precision, and linear filter model. A single predictor, in the single predictor mode, may be selected from the candidate list such as selecting reference block 1710. Multiple predictors, in the fusion of multiple predictors mode, may be blended to derive the final prediction block such as selecting two or more candidate reference blocks 1714. The blending weights may be either computed from the template matching cost of each predictor, or with a Wiener-filter based weight derivation method. Sub-pel precision, in the sub-pel precision mode, may be used with 1/2-pel precision, 1/4-pel precision, or 3/4-pel precision, each with 8 possible directions, for example, if a single predictor is used. A linear filter, in the linear filter model mode, may be learned (e.g., generated or derived) between the reference template and current template and be used for (e.g., applied to) the reference block. This mode may be used for the single predictor, for example, if sub-pel precision is not used.

Reference template 1712 of reference block 1710, in the example shown in FIG. 17, may be determined to best match current template 1708 based on the template matching cost between reference template 1712 and current template 1708 being a minimum TM cost. The encoder may select reference block 1710 as a prediction of current block 1700 and signal an index of a candidate block vector, indicating reference block 1710, in the candidate list. The decoder may generate the same candidate list and determine reference block 1710 based on decoding the index from the bitstream. A block vector (BV) may indicate the displacement of a reference block (e.g., reference block 1710) relative to the current block 1700.

The IntraTMP mode may be enabled for blocks (e.g., CUs) with a size (e.g., width times height) less than or equal to a threshold size (e.g., 64). The threshold size for IntraTMP may be configurable. The IntraTMP prediction mode may be signaled at a block (e.g., per CU) level through a dedicated flag.

An encoder may determine a difference (e.g., a corresponding sample-by-sample difference) between current block 1700 and reference block 1710 used to predict current block 1700. The difference may be referred to as a prediction error or residual. The encoder may store and/or signal in a bitstream the prediction error or residual for decoding by a decoder.

A decoder may perform the same operations as the encoder as described herein, for example, to perform TMP to code current block 1700. The decoder may similarly determine or construct current template 1708 of current block 1700, for example, based on receiving an indication from the encoder that IntraTMP is used to predict current block 1700 (e.g., via a flag). The decoder may further similarly search TMP search region 1706 to generate a list of candidates from which reference block 1710 may be determined, for example, after determining or constructing current template 1708. The decoder may obtain the block vector candidate by decoding, from the bitstream, the index of the block vector candidate in the list of candidates. The decoder may obtain the block vector candidate by decoding, from the bitstream, the index of the block vector candidate in the list of candidates, for example, because the reference block may be indicated by a block vector candidate with the lowest cost in the list of candidates. The decoder may combine the residual, decoded from the bitstream, with reference block 1710 to reconstruct current block 1700. The encoder may not need to encode BV 1730 that indicates reference block 1710 in the bitstream.

A similar flipping mode, similar to RRIBC for IBC, may be implemented for IntraTMP, and may be referred to as RR-TMP or RR-IntraTMP. The encoder and/or decoder may search TMP search region 1706 for a flipped template that best matches current template 1708. The flipped template, for horizontal flipping, may correspond to current template 1708 being flipped in a horizontal direction. For example, the flipped template may match the horizontally flipped current template 1708 in shape, size, and orientation. The flipped template, for vertical flipping, may correspond to current template 1708 being flipped in a vertical direction. The flipped template may match the vertically flipped current template 1708 in shape, size, and orientation. A candidate reference block of the selected flipped template may be used to code the current block. The candidate reference block may be flipped in the vertical direction to determine a prediction block for coding the current block, for example, if vertical flipping is performed. The candidate reference block may be flipped in the horizontal direction to determine a prediction block for coding the current block, for example, if horizontal flipping is performed. The prediction block may be used to encode or decode/reconstruct the current block similarly as the prediction block generated from the IntraTMP mode.

At least some decoder-side techniques such as decoder-side intra mode derivation (DIMD) have been introduced. These techniques may allow intra prediction of a current block to be performed without explicitly signaling any specific intra prediction modes (IPMs) in the bitstream. Such techniques may be possible based on the encoder and decoder using previously encoded/decoded samples (e.g., reconstructed samples) and independently and identically deriving one or more of the same IPMs for coding the current block. Signaling of the IPMs may be omitted if the encoder and decoder identically determine/derive the same IPMs.

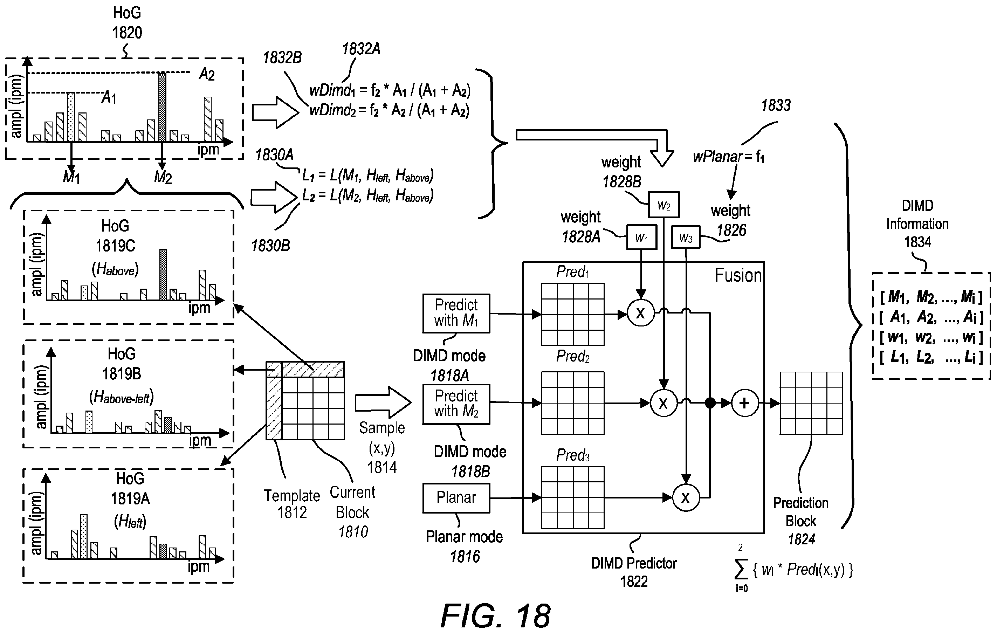

FIG. 18 is a diagram showing an example of decoder-side intra mode derivation (DIMD) for coding a current block. More specifically, FIG. 18 is a diagram showing an example of decoder-side intra mode derivation (DIMD) for coding current block 1810. DIMD may be an intra coding mode in which one or more IPMs used to generate a prediction block 1824 of current block 1810 are not sent/transmitted in the bitstream. The one or more IPMs may be derived by the decoder using a gradient analysis of neighboring reconstructed pixels (or reference samples) of current block 1810. The one or more IPMs may be determined by the encoder, for example, by a rate distortion optimization (RDO) algorithm.

Texture gradient analysis, in DIMD, may be performed on samples in template 1812 (e.g., reference template) associated with the current block 1810 to generate a histogram of gradient (HoG) 1820. From the HoG 1820, a quantity/number (e.g., 2) of DIMD modes, such as one or more of DIMD modes 1818A-B, may be derived. Each entry in HoG 1820 may correspond to a respective angular intra prediction mode (IPM) with amplitudes (or magnitudes) of the entries determined based on the gradient analysis.

Template 1812, including a set of reference samples (e.g., neighboring pixels) to derive the DIMD modes 1818A-B (and DIMD predictor 1822) for current block 1810, may be selected and used to perform a gradient analysis. These reference samples may be part of the reconstructed portion of the picture containing current block 1810. Template 1812 may be a 3-samples wide (in width or height) template area (composed of left, above, and above-left areas) defined relative to a position of current block 1810.

The gradient analysis may be performed using edge detection filters used for (e.g., applied to) $3 \times 3$ window positions centered on the reference samples/pixels selected from template 1812. The edge detection filters may determine the amplitude and the angle of luminance direction (e.g., orientation) for each reference sample. For example, the set of reference samples selected from template 1812 may include the samples in the middle line of template 1812. The edge detection filters may include a horizontal Sobel gradient filter ($M_{hor}$) and/or a vertical Sobel gradient filter ($M_{ver}$), represented by the following 3x3 matrices that will be convoluted with selected reference samples of template 1812:

$$M_{hor} = \begin{bmatrix} -1 & 0 & 1 \\ -2 & 0 & 2 \\ -1 & 0 & 1 \end{bmatrix} \text{ and } M_{ver} = \begin{bmatrix} -1 & -2 & -1 \\ 0 & 0 & 0 \\ 1 & 2 & 1 \end{bmatrix}$$

For each of selected reference samples (e.g., pixels) of template 1812, point-by-point multiply of each of these two matrices with a 3x3 Sobel filter window may be performed and the results are summed. The 3x3 Sobel filter window may be centered around the current reference sample and composed of its 8 direct neighbors. Two values $G_{hor}$ (from the multiplication with $M_{hor}$), and $G_{ver}$ (from the multiplication with $M_{ver}$) may be obtained corresponding to the gradient intensities at the current sample, in the horizontal and vertical direction, respectively. An angle may be calculated for the window as $angle = \arctan(G_{hor}/G_{ver})$. The calculated angle may correspond to (e.g., be converted into) one of the angular IPMs (e.g., one of the 65 angular IPMs), and an associated amplitude (i.e., the amplitude for the window position) $amplitude = |G_{ver}| + |G_{hor}|$ may be added to the HoG indexed by the respective IPM. Each entry in resulting HoG 1820 may represent the cumulated amplitudes for a respective IPM, for example, after an amplitude and angle for each window position in template 1812 are processed.

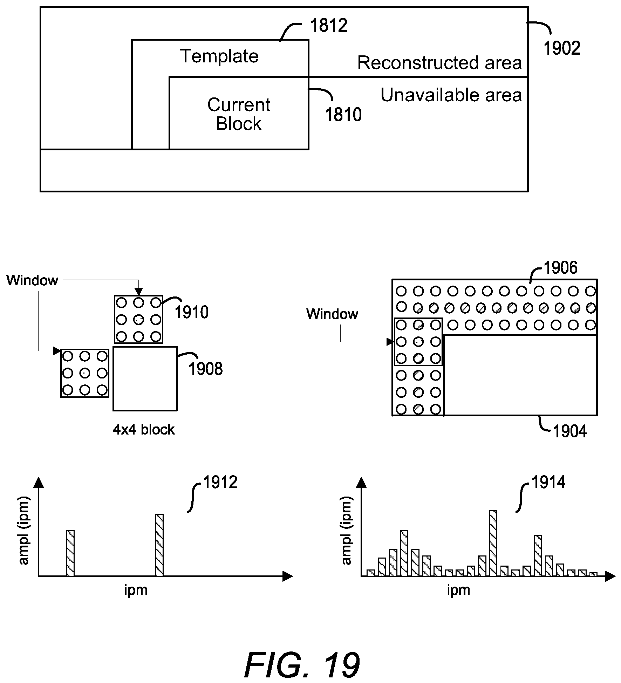

FIG. 19 shows an example of a template for computing a HoG used in DIMD. More specifically, FIG. 19 shows an example of a template 1812 (e.g., template area) for computing a HoG used in DIMD. Reference template 1812 (e.g., an L-shaped template) of current block 1810 is shown to be in reconstructed area 1902 (or reconstructed region) of the picture frame. Examples of HoGs for different sizes of current block 1810 are shown. For example, for a $4 \times 4$ pixel square current block 1908, a $3 \times 3$ window 1910 in the template area is shown, and a corresponding HoG 1912 may be generated for current block 1908. For a rectangular current block 1904 with a 3-pixel deep template area 1906, a HoG 1914 corresponding to rectangular current block 1904 may be generated by gradient analysis of reference samples based on a filter window. Each coordinate position on the x-axis of the illustrated HoGs may be a respective IPM, and the y-axis may represent the cumulative amplitude (e.g., counts) for the respective IPMs.

Returning to FIG. 18, a quantity/number of DIMD modes 1818A-B may be determined, for example, by selecting the IPMs from HoG 1820 based on amplitudes of the IPMs. For example, IPMs $M_1$ and $M_2$ with the highest respective amplitudes $A_1$ and $A_2$ in HoG 1820 may be selected and used to determine DIMD modes 1818A and 1818B, respectively. Up to a predetermined quantity/number (e.g., 4) angular intra modes with the highest amplitudes may be selected from HoG 1820. The quantity/number of DIMD modes 1818A-B may be combined in a fusion/blending scheme to generate a DIMD predictor 1822.

A plurality of IPMs such as DIMD modes 1818A-B may be determined and combined with a planar mode 1816 in the blending/fusion process corresponding to DIMD predictor 1822. DIMD predictor 1822 may comprise a linear combination (e.g., a weighted average) of DIMD modes 1818A-B and planar mode 1816 with weights 1828A-B and 1826, respectively. Weights 1828A-B for DIMD modes 1818A-B may be determined based on amplitudes (e.g., magnitudes) associated with DIMD modes 1818A-B, respectively. For example, weight 1828A for DIMD mode 1818A may correspond to DIMD weight 1832A (e.g., $wDIMD_1$), which may be based on an amplitude $A_1$, from HoG 1820, associated with DIMD mode 1818A (e.g., IPM $M_1$) divided by a sum of amplitudes of DIMD modes 1818A-B. Weight 1828B for DIMD mode 1818B may correspond to DIMD weight 1832B (e.g., $wDIMD_2$), which may be based on an amplitude $A_2$, from HoG 1820, associated with DIMD mode 1818B (e.g., IPM $M_2$) divided by the sum.

Planar mode 1816 may have a weight 1826 corresponding to planar weight 1833 that may be a fixed weight $f_1$ (e.g., 1/4 or 16/64 in 6-bit integer precision). The remaining DIMD weights 1832A-B may include a fixed weight portion $f_2$ (e.g., 3/4) that is based on the fixed weight of planar weight 1833. For example, the sum of fixed weights $f_1$ and $f_2$ may be equal to 1.

DIMD predictor 1822 may be used for (e.g., applied to) template 1812 (e.g., current template) to determine a prediction block 1824 for current block 1810. For example, each sample (x,y) 1814 of prediction block 1824, denoted as *fusionPred*, may be determined based on using (e.g., applying) DIMD predictor 1822 comprising a weighted average (e.g., a linear combination) of using DIMD modes 1818A-B and planar mode 1816 with corresponding weights ($w_i$) as follows:

$$fusionPred(x,y) = \sum_{i=0}^{2}\{w_i * Pred_i(x,y)\}$$

The weights ($w_i$) may be the DIMD weights 1832A-B ($wDimd_i$ for mode i) for DIMD modes 1818A-B and the planar weight 1833 ($wPlanar$) for planar mode 1816. The weights ($w_i$) may be constant and uniformly used for (e.g., applied to) determine each sample (x, y) 1814 of prediction block 1824. The predictor $Pred_i$ for mode $i$ may be a DIMD mode predictor ($dimdPred_i$) for DIMD modes 1818A-B or a planar mode predictor ($dimdPlanar$) for planar mode 1816. DIMD predictor 1822 may be represented and computed equivalently as follows:

$$fusionPred(x,y) = \left(\sum_{i=0}^{1}\{wDimd_i * dimdPred_i(x,y)\} + wPlanar * dimdPlanar(x,y)\right) \gg$$

$$6.$$

Note the shifting operation may be performed due to the 6-bits integer precision being used.

The selection of DIMD may be signaled in the bitstream for intra coded blocks using a flag. The intra prediction mode, at the decoder, may be derived in the reconstruction process using the same previously encoded neighboring pixels, for example, if the DIMD flag is true. The intra prediction mode may be parsed from the bitstream as in classical intra coding mode, for example, if the DIMD flag is not true.

A location-dependent DIMD mode may be introduced to adjust weights 1828A-B of angular IPMs (e.g., DIMD modes 1818A-B) in DIMD. A location-dependency process may be used (e.g., applied) to determine the impact that different template regions of template 1812 has in selecting each of the IPMs. The location-dependency process may be used/applied, for example, if DIMD IPM derivation occurs. Template 1812 may be divided into three separate regions- including a region above current block 1810, a region to the left of current block 1810, and an above-left region of current block 1810, to determine how specific samples in template 1812 contribute to inferring specific DIMD modes. The gradient analysis computation may be performed separately for samples in each region, resulting in three histograms, HoG 1819C ($H_{above}$), HoG 1819A ($H_{left}$), and HoG 1819B ($H_{aboveLeft}$), respectively. For a directional IPM m, $H_i[m]$ for region i (e.g., above, left, or above-left) may represent the cumulative magnitude of all samples in region i at direction (or IPM) m.

HoG 1820, corresponding to the full histogram of gradients for the whole template 1812, may be computed as the sum of the three separate HoGs 1819A-C. The two directional IPMs with largest and second-largest cumulative amplitude (e.g., magnitude) in HoG 1820 may be selected as main and secondary DIMD modes, for example, $dimdMode_0$ and $dimdMode_1$, respectively.

HoGs 1819C and 1819A corresponding to histograms $H_{above}$ and $H_{left}$ may be used to determine whether $dimdMode_0$ and/or $dimdMode_1$ may depend on a specific template region ABOVE or LEFT. The location-dependency of $dimdMode_i$, denoted as $locDep_i$ (e.g., shown in FIG. 18 as $L_i = L(M_i, H_{left}, H_{above})$ for DIMD mode i), may be defined as:

$$\text{If: } (H_{above}[dimdMode_i] > 2H_{left}[dimdMode_i]), \text{ then:}$$

$$locDep_i = 1, \text{ that is } dimdMode_i \text{ depends on region ABOVE.}$$

$$\text{Else if: } (H_{left}[dimdMode_i] > 2H_{above}[dimdMode_i]), \text{ then:}$$

$$locDep_i = 2, \text{ that is } dimdMode_i \text{ depends on region LEFT.}$$

$$\text{Else:}$$

$$locDep_i = 0, \text{ that is } dimdMode_i \text{ is not location-dependent.}$$

The location-dependency of *dimdMode_i*, denoted as *locDep_i* (e.g., shown in FIG. 18 as $L_i = L(M_i, H_{left}, H_{above})$ for DIMD mode *i*), may be defined as:

$$\text{If} : (H_{left}[dimdMode_i] <$$

$$\text{average of } \left(H_{left}[dimdMode_i], H_{above}[dimdMode_i], H_{aboveLeft}[dimdMode_i]\right)), \text{ then:}$$

$$locDep_i = 1, \text{ that is } dimdMode_i \text{ depends on region ABOVE.}$$

$$\text{Else if} : (H_{above}[dimdMode_i] <$$

$$\text{average of } (H_{left}[dimdMode_i], H_{above}[dimdMode_i], H_{aboveLeft}[dimdMode_i])), \text{ then:}$$

$$locDep_i = 2, \text{ that is } dimdMode_i \text{ depends on region LEFT.}$$

$$\text{Else:}$$

$$locDep_i = 0, \text{ that is } dimdMode_i \text{ is not location-dependent.}$$

The indication of location-dependency may be determined based on comparing an amplitude of a HoG corresponding to a specific template portion with the average amplitude of the HoGs of all the template portions of the template.

Thus location-dependency in DIMD may be determined based on the analysis of HoG peaks amplitudes of the selected angular IPM. For example, location-dependency indications 1830A-B may be determined for DIMD modes 1818A-B, respectively. Location-dependency indication for DIMD mode 1816, which may be a planar mode, may be determined as a value representing that it is not location dependent or that it is diagonally dependent.

The fusion/blending scheme, by which DIMD predictor 1822 is determined, may be adjusted. The fusion/blending scheme may be adjusted, for example, based on the location-dependent DIMD modes. For instance,_blending may be performed to fuse the main and secondary DIMD predictors, *dimdPred_0* and *dimdPred_1*, with the Planar predictor *dimdPlanar*. Blending/fusion with uniform weights *wDimd_0*, *wDimd_1* and *wPlanar* may be used/applied as explained above, for example, if no DIMD mode is determined to be location-dependent (e.g., *locDep_0* == *locDep_1* == 0).

Sample-based blending may be used to determine DIMD predictor 1822, for example, if at least one of the DIMD modes 1818A-B is inferred to be location-dependent. A location varying/dependent weight may be used to blend the predictors at each location of sample (*x, y*).

The sample-based weights *wLocDepDimd_i*(x, y) for predictor *dimdPred_i* may be computed so that the average weight used within the block is approximately equal to the uniform weight *wDimd_i* with higher weights being used in the portion of the block closer to the region (e.g., ABOVE or LEFT) corresponding to *locDep_i* (e.g., indication *L_i*), for example, if *locDep_i* ≠ 0. A fixed range $\Delta_i$ may be determined and predefined, (e.g., $\Delta_i$ = 10) corresponding to the largest deviation of *wLocDepDimd_i*(x, y) from *wDimd_i*. Higher values of $\Delta_i$ may result in a higher variation of the weights within the block. For a block of size $H \times W$:

$$\text{If } locDep_i = 1, \text{ then:}$$

$$wLocDepDimd_i(x, y) = wDimd_i + \Delta_i - 2\Delta_i \frac{y}{(H-1)}$$

$$\text{Else if } locDep_i = 2, \text{ then:}$$

$$wLocDepDimd_i(x, y) = wDimd_i + \Delta_i - 2\Delta_i \frac{x}{(W-1)}$$

The weights *wLocDepDimd_i*(x, y) may be computed for both predictors depending on the value of *locDep_i*, as shown above, for example, if both DIMD modes 1818A-B (*i=0* and *i=1*) are associated with location-dependency indications *L_i* that indicate location dependency (i.e., *locDep_i* ≠ 0 for modes *i* = 0,1).

The weights for $wLocDepDimd_i(x, y)$ may be computed as:

$$wLocDepDimd_i(x, y) = wDimd_i - \frac{wLocDepDimd_{(1-i)}(x, y) - wDimd_{(1-i)}}{2}$$

for example, if both DIMD modes 1818A-B ($i=0$ and $i=1$) are associated with location-dependency indications $L_i$ that indicate location dependency (i.e., $locDep_i \neq 0$ for modes $i = 0,1$).

Weight 1826 for the planar predictor $wLocDepPlanar(x, y)$ may be computed as:

$$wLocDepPlanar(x, y) = 64 - \sum_{i=0}^{1}\{wLocDepDimd_i(x, y)\}$$

The final location-dependent DIMD predictor 1822 may be used/applied to generate each sample (x,y) of prediction block 1824 as follows:

$$fusionPred(x,y) = \left( \sum_{i=0}^{1}\{wLocDepDimd_i(x, y) * dimdPred_i(x, y)\} + wLocDepPlanar(x, y) * dimdPlanar(x, y) + 32 \right) \gg 6$$

Planar mode 1816, as explained herein, may be systematically used/applied in the blending process with a fixed weight $f_1$ (e.g., ¼ or 21/64). Note the shifting operation may be performed due to the 6-bits integer precision being used.

DIMD information 1834, based on current block 1810 being coded using DIMD, may include DIMD parameters that are generated and stored in association with current block 1810. For example, the DIMD parameters may include indications of the selected DIMD modes 1818A-B ($M_1, M_2, ... , M_i$), amplitudes from HoG 1820 ($A_1, A_2, ... , A_i$) of the selected DIMD modes 1818A-B, and/or weights 1828A-B ($w_1, w_2, ... , w_i$) of the selected DIMD modes 1818A-B. Weights 1828A-B may be the DIMD weights 1832A-B corresponding to selected DIMD modes 1818A-B. The DIMD parameters may further include location-dependency indications ($L_1, L_2, ... , L_i$) of the selected DIMD modes 1818A-B. DIMD information 1834 may include a plurality of lists (e.g., arrays) of DIMD parameters with each list corresponding to a different DIMD parameter type. The plurality of lists may include a list of IPMs, a list of amplitudes, a list of weights, and/or a list of indications of location-dependency. Parameters at the same index across the plurality of lists may correspond to the same DIMD mode or IPM indicated by the index to the list of IPMs.

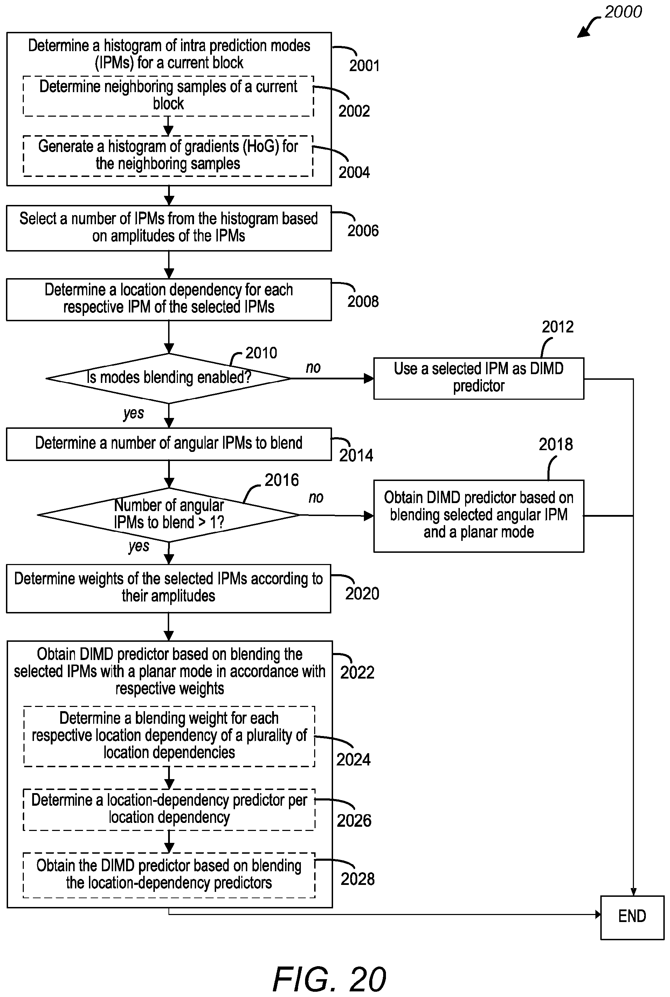

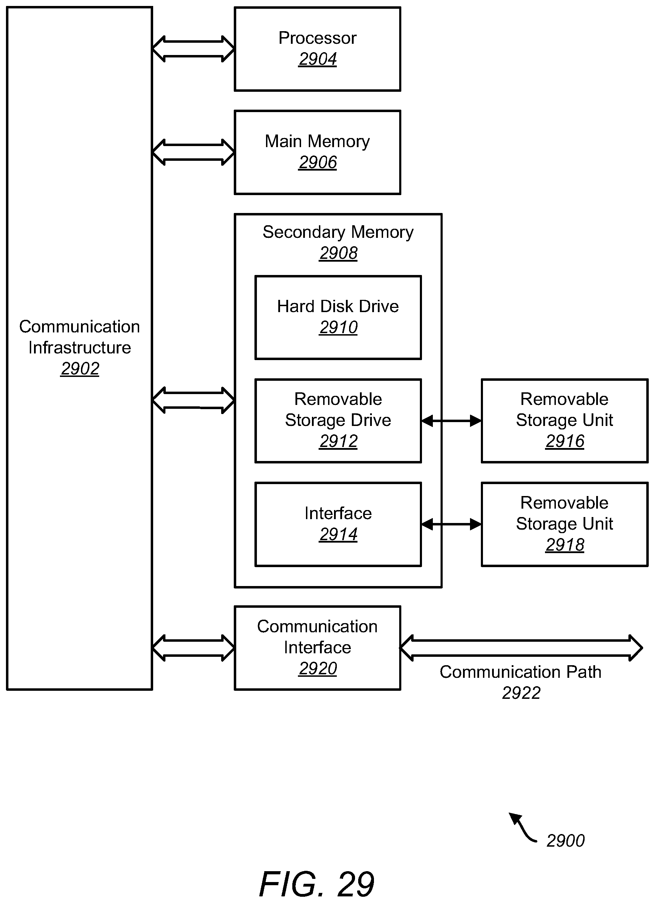

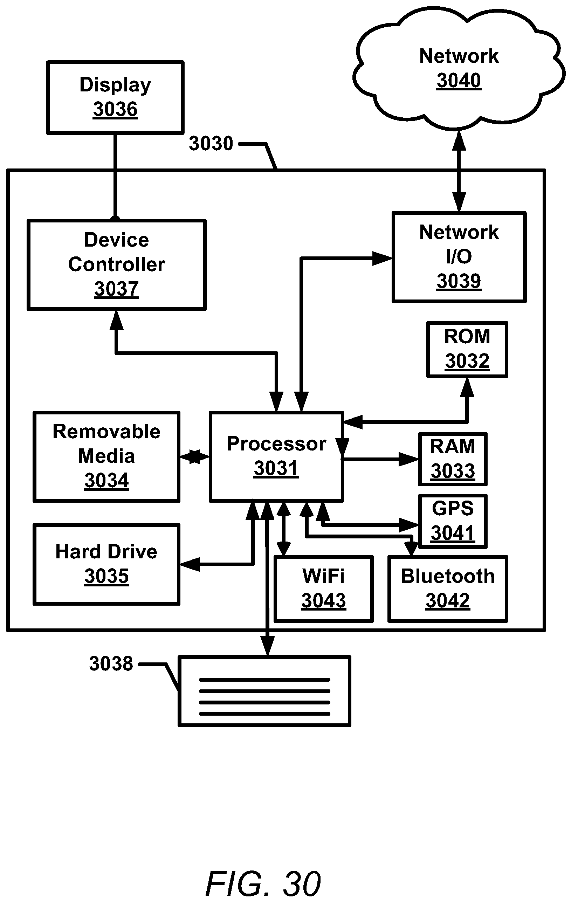

FIG. 20 shows an example method for DIMD predictor derivation. More specifically, FIG. 20 shows a flowchart 2000 of an example method for DIMD predictor derivation. The flowchart 2000 may be performed and/or implemented by an encoder (e.g., encoder 114 in FIG. 1), a decoder (e.g., decoder 120) an example computer system 2900 in FIG. 29, and/or an example computing device 3030 in FIG. 30. Steps of the example method of FIG. 20 may be omitted, performed in other orders, and/or otherwise modified, and/or one or more additional steps may be added.

At step 2001, a histogram of intra prediction modes (IPMs) may be determined for a current block (e.g., CU). The histogram may be used by an intra-based coding mode for coding the current block. For example, the intra-based coding mode may be any of various DIMD related modes. The intra-based coding mode may be a DIMD mode (e.g., default/regular DIMD mode), for example as described herein with respect to FIGS. 18-19. The intra-based coding mode may be an OBIC mode, an MIMD mode, or a DIMD Merge list mode, as further described herein.

Step 2001 may include performance of steps 2002-2004 for example, if the intra-based coding mode is the DIMD mode. At step 2002, neighboring samples of the current block may be determined. The availability of the neighboring samples may be determined based on, for example, whether blocks (e.g., CUs) above, above right, left below, above left, and/or left of the current block have been determined or reconstructed. The neighboring samples may be part of a template of the current block such as template 1812, for example, as described herein with respect to FIGS. 18-19.

At step 2004, the histogram may be a histogram of gradients (HoG) generated for the neighboring samples, for example, from the template of the current block. Specifically, the HoG may be generated based on available samples (e.g., from available template areas) of the template, for example, as described herein with respect to FIGS. 18-19.

At step 2006, a quantity/number of IPMs may be selected from the histogram (e.g., the HoG) based on amplitudes of the IPMs in the histogram. The IPMs may be selected based on having the highest amplitudes in the histogram, and thus may represent the most represented IPMs. The quantity/number of selected IPMs may be up to a predetermined quantity/number (e.g., 5).

At step 2008, an indication of location dependency of each respective IPM of the selected IPMs may be determined. The indication of location dependency per selected IPM may be determined, for example, based on amplitudes of template portions (e.g., template portions or template regions) of the template. The indication of location dependency per selected IPM may be determined based on amplitudes of template portions (e.g., template portions or template regions) of the template, for example, if the intra-based coding mode is the DIMD mode and the histogram is the HoG. The template portions may include a left template portion and a top template portion of the template. Two separate HoGs may be generated corresponding to processed samples in the left template portion and the right template portion, respectively, for example, as described herein with respect to FIG. 18. The indication of location dependency for each selected IPM may be determined, for example, based on comparing amplitudes of the selected IPM between the above and left template portions. For example, the comparison may be related to a ratio of the IPM amplitudes in the template portions.

The indication of the location dependency of a selected IPM may be determined, for example, as follows: by default, the indication of location dependency may be set to 0 indicating no location dependency; The indication of location-dependency may be set to a first value (e.g., 1) indicating vertical location-dependency, for example, if the IPM's amplitude in the left template portion is less than the IPM's average amplitude among all template portions (e.g., among three template portions such as the left template, above template, and above left template); the indication of location-dependency may be set to a second value (e.g., 2) indicating horizontal location-dependency, for example, if the IPM's amplitude in the above template portion is less than the IPM's average amplitude among all template portions. As described herein with respect to FIG. 18, the amplitudes may be cumulated in separate HoGs for each of the left template portion, above template portion, and above-left template portion, to determine the indication of location-dependency. The amplitudes may be cumulated in separate HoGs for each of the left template portion, above template portion, and above-left template portion, for example, if generation of the HOG occurs. The amplitudes in the separate HoGs may be summed to determine the HoG representing combined amplitudes for the entire template.

At step 2010, the method may determine whether mode blending (e.g., also referred to as mode combination or fusion) is enabled. One of the selected IPMs at step 2006 may be determined, at step 2012, as the DIMD predictor used to generate a prediction block for coding the current block, for example, if mode blending is disabled. The IPM with the highest amplitude may be determined as the primary DIMD mode and selected as the DIMD predictor.

The quantity/number of angular IPMs to be blended may be determined at step 2014, for example, if the method at step 2010 determines that mode blending is enabled. Mode blending may be enabled, for example, if the first and second selected IPMs of the selected IPMs are both angular modes.

An IPM in a range of IPMs may be determined to be non-angular. For example, the range of IPMs may be one or more predetermined IPMs that correspond to a range of angles including a diagonal direction (e.g., corresponding to $G_{ver}/G_{hor}$ being equal to or close to 1 or -1).

At step 2016, the method may determine whether the quantity/number of angular IPMs to blend is greater than 1. The DIMD predictor at step 2018 may be obtained (e.g., determined) based on blending the one selected angular IPM with a planar mode, for example, if the quantity/number of angular IPMs to blend is not greater than 1. For example, the DIMD predictor may be determined as a linear combination of the selected angular IPM and the planar mode with each having a respective fixed weight. The selected angular IPM may have a first fixed weight (e.g., 2/3) and the planar mode may have a second fixed weight (e.g., 1/3). The sum of the first and second fixed weights may be equal to one.

Weights of the selected IPMs at step 2020 may be determined, for example, according to their amplitudes in the histogram. Weights of the selected IPMs at step 2020 may be determined according to their amplitudes in the histogram, for example, if the method at step 2016 determines that the quantity/number of angular IPMs to be blended is greater than 1. For instance, a weight of a selected IPM may be based on a ratio of an amplitude of the selected IPM to amplitudes of the selected IPMs, for example, as described herein with respect to FIG. 18. The planar mode may be used for the blending with, a first fixed weight, such as 1/4 or 16/64 with 6 bits integer precision. Weights of the angular IPMs may be further weighted (e.g., scaled) based on a second fixed weight. The sum of the first and second fixed weights may sum to one. The second fixed weight may be set to 3/4 or 48/64 with 6 bits integer precision, for example, if the first fixed weight is 1/4.

At step 2022, a DIMD predictor may be obtained (e.g., generated or derived). A DIMD predictor may be obtained (e.g., generated or derived), for example, based on blending (e.g., fusing or combining) the selected IPMs with a planar mode in accordance with respective weights, as described herein with respect to FIG. 18.

The DIMD predictor may be obtained further based on using location-dependent blending modes. For example, the weights determined at step 2020 may be uniformly used/applied to determine all samples in the prediction block, and may be referred to as uniform weights. For location-dependent blending, step 2022 may include steps 2024-2028.

At step 2024, a blending weight for each respective location dependency of a plurality of location dependencies may be determined. The plurality of location dependencies may include a horizontal location dependency, a vertical location dependency, or no location dependency. The blending weight may be a sample-based weight for a predictor (e.g., for each selected IPM) that is determined so that the average weight used to generate prediction samples (of a prediction block) for the current block may be approximately equal to the corresponding uniform weight (e.g., calculated at step 2020) and so that higher weights may be used in the portion of the block closer to the left template region or the above template region depending on the indication of location dependency of the respective selected IPM being the horizontal or vertical location dependency, respectively. A range used in the location-dependency blending may be a predefined value and may correspond to the maximum deviation of sample-based weights from the corresponding uniform weight. Higher values of the predefined range may result in a higher variation of the weights within the prediction block.

At step 2026, a location-dependency predictor may be determined per location dependency, for example, after the blending weights for each location dependency are determined at step 2024. For example, the predictions per each location dependency may be blended. For each of horizontal location dependency, vertical location dependency and no location dependency (i.e., diagonal location dependency) that is used by any of the selected IPMs of the DIMD predictor, the selected IPMs having the same location dependency may be blended based on their respective amplitudes.

At step 2028, the DIMD predictor may be obtained based on blending together the location-dependency predictors. For example, the location-dependency predictors may be blended in accordance with the respective sums of amplitudes of the selected IPMs in each location dependency. A directional sample-wise blending may be provided, depending on location dependency and using fixed weight deviation as calculated at step 2024.

The various DIMD parameters determined/derived in flowchart 2000 may be stored as DIMD information (e.g., DIMD information 1834 of FIG. 18) used by the current block. For example, the DIMD parameters may include selected IPMs such as from step 2012 or step 2014. The DIMD parameters may include weights of selected IPMs such as those from step 2020. The DIMD parameters may include amplitudes of the selected IPMs such as amplitudes obtained at step 2006 from the histogram. The DIMD parameters may include indications of location dependencies of the selected IPMs such as those determined at step 2008.

A DIMD intra prediction mode (e.g., DIMD IPM), corresponding to the DIMD predictor determined at step 2022, may be added to an MPM list along with IPMs being considered for use on the current block. At the encoder, the current block may be encoded using the DIMD IPM and only a flag indicating that the current block is encoded using DIMD is sent/transmitted in the bitstream with the residual of the current block, for example, if the DIMD IPM is determined to be the best intra mode (e.g., based on a lowest RDO cost or the like). The specific IPMs used in the DIMD IPM may not be sent/transmitted in the bitstream. The decoder may receive the flag indicating that DIMD is performed, and may perform operations of flowchart 2000 to determine DIMD predictor used to determine the prediction block for reconstructing the current block. Since derived intra modes are included into the MPM list, the DIMD process may be performed. The DIMD process may be performed, for example, before the MPM list is constructed. The primary derived IPM of a DIMD block may be stored with a block and used for MPM list construction of the neighboring blocks. MPM and MRL may not be signaled, for example, if DIMD is signaled. The DIMD intra prediction mode described above may also referred to as the "regular DIMD intra prediction mode" or "regular DIMD mode."

At least some decoder-side techniques may have been proposed to enhance the DIMD technique such as a Merge Intra Mode Derivation (MIMD) mode, an Occurrence-based Intra Coding (OBIC) mode, a DIMD Merge List mode. Each of the techniques are further described herein.

One decoder-side technique may propose to merge DIMD information (e.g., DIMD information 1834) from neighboring blocks of a current block to generate a prediction block for coding the current blocks. The DIMD histograms of the selected neighboring blocks (e.g., neighboring CU blocks) may be combined to form a merged histogram of gradients (MHoG) for the current block, for example, if neighboring blocks encoded with intra modes such as intra prediction mode or DIMD are available. DIMD modes and weights may be derived from this MHoG similar to how DIMD modes and weights are derived from a HoG generated for regular DIMD, as explained herein with respect to FIGS. 18-20. The HoG of the current block may not be used in the construction of the MHoG. This intra mode prediction technique of generating the MHoG may be referred to as Merged Intra Mode Derivation (MIMD).

The DIMD merge process may be similar to the DIMD process described herein, for example, with respect to FIG. 20 except for how the histogram of IPMs is determined (e.g., constructed or generated) for the current block at step 2001. The histogram may be an MHoG determined from at most a predetermined quantity/number (e.g., 13) of reconstructed neighboring blocks (e.g., neighboring CU blocks of the current block), instead of generating the histogram from neighboring samples of a current block, such as from a reference template of the current block,

A neighboring block may be from a family of spatial adjacent blocks, as shown for example in FIG. 15A. For example, one or more DIMD merge candidates may be added to the list according to an inclusion order of blocks corresponding to (e.g., including) the left sample ($A_1$), above sample ($B_1$), above left sample ($B_2$), above right sample ($B_0$), and bottom left sample ($A_0$).

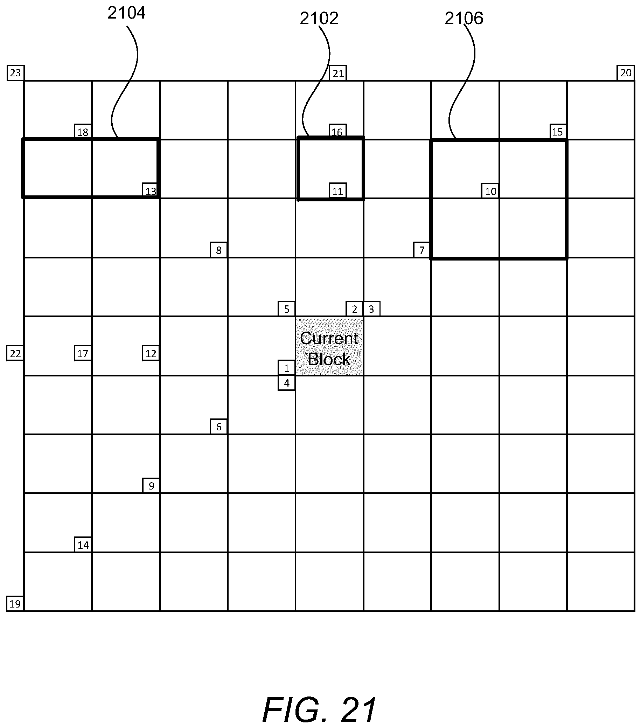

FIG. 21 shows an example of neighboring blocks of a current block used to determine a histogram. The histogram may be an MHoG. The family of spatial adjacent blocks neighboring the current block, as described herein for example with respect to FIG. 15A, may correspond to sample locations 1-5 adjacent to the current block. A neighboring block may be from a family of spatial non-adjacent neighboring blocks of the current block such as blocks corresponding to sample locations 6 and above. Blocks 2102-2106 may be selected as DIMD merge candidates and added to the list of DIMD merge candidates. A first block 2102 associated with (e.g., contains) sample 11, a second step 2104 associated with (e.g., contains) sample 13, and a third step 2106 associated with (e.g., contains) sample 10 may be spatial non-adjacent blocks with respect to the current block.

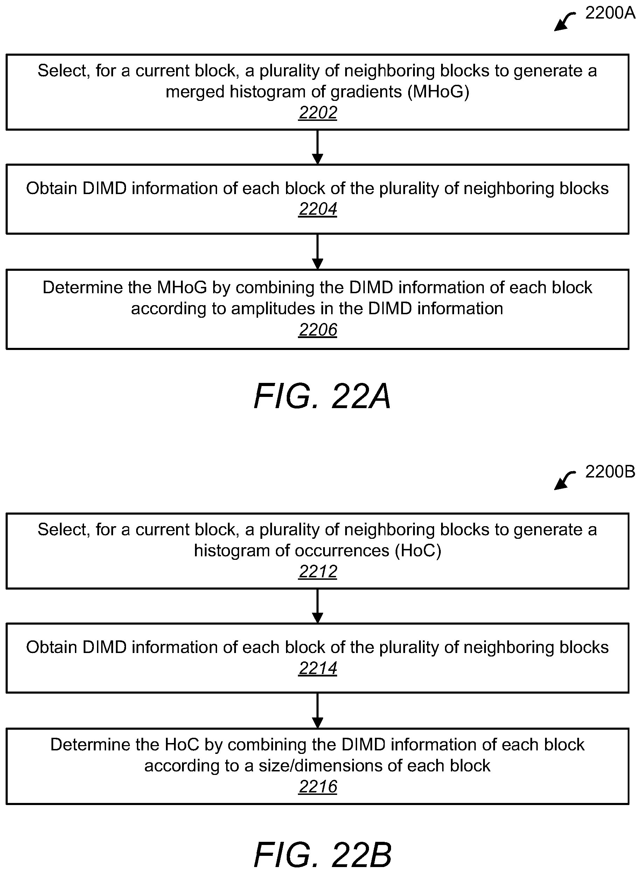

FIG. 22A shows an example method for determining an MHoG for a current block. More specifically, FIG. 22A shows an example flowchart 2200A of an example method for determining an MHoG for a current block coded using, for example, an MIMD mode. The method of flowchart 2000A may be performed and/or implemented by an encoder (e.g., encoder 114), a decoder (e.g., decoder 120), an example computer system 2900 in FIG. 29, and/or an example computing device 3030 in FIG. 30. Steps of the example method of FIG. 22A may be omitted, performed in other orders, and/or otherwise modified, and/or one or more additional steps may be added.

At step 2202, a plurality of neighboring blocks (e.g., neighboring CUs) of a current block may be selected to generate the MHoG. For example, the plurality of neighboring block may be at most a predetermined quantity/number (e.g., 3) selected from a list of DIMD merge candidates of the current block. The list may include a predetermined quantity/number (e.g., 13) of spatial adjacent and/or non-adjacent blocks of the current block such as those described herein with respect to FIG. 21. The plurality of neighboring blocks may be selected based on being previously coded using DIMD information (e.g., being coded in a DIMD, OBIC, MIMD, or DIMD Merge List mode). Up to the predetermined quantity/number of neighboring blocks may be selected based on being coded using DIMD information and may be spatially closest to the current block.

At step 2204, DIMD information of each block of the plurality of neighboring blocks may be obtained (e.g., retrieved). The DIMD information of a block may represent a histogram of IPMs such as the HoG, which may be an MHoG. The DIMD information representing the HoG (and/or MHoG) may include DIMD parameters, such as IPMs, and associated parameters, such as amplitudes, weights, and/or indications of location dependencies, for example, as described herein with respect to FIG. 18. Depending on the intra mode (e.g., DIMD mode, MIMD mode, OBIC mode, DIMD Merge List mode, TIMD mode, MIP mode, etc.) that was used to code a block, the DIMD information of the block may be limited to storing a quantity/number (e.g., predetermined quantity/number such as 5 or 3 or 2) of IPMs and associated parameters. The quantity/ number of IPMs may be dependent on the type of the intra mode and/or DIMD information of the neighboring blocks used to generate the DIMD information for the block. The IPMs stored in the DIMD information may be those with the highest amplitudes from a histogram that was generated for the block.

At step 2206, an MHoG may be determined based on combining the DIMD information of each block of the plurality of neighboring blocks according to amplitudes in (e.g., stored for respective IPM(s)) the DIMD information. The HoGs representing the DIMD information of each block may be combined, for example, based on averaging the amplitudes of the IPMs in the HoGs as follows:

$$mHoG[m] = \frac{1}{N} \sum_{i=1}^{N} HoG[i][m]$$

where N may the quantity/number of selected neighboring blocks and m may be the m-th entry (or luma mode) of the HoG. The HoGs may be combined by averaging the amplitudes cumulated per IPM of the HoGs by the quantity/number N. In other words, amplitudes of the same IPM across DIMD information of the selected neighboring blocks may be cumulated in the MHoG. Amplitudes of the same IPMs across the DIMD information of selected neighboring blocks may be combined. The cumulated amplitude for an IPM may be normalized by dividing by the quantity/number N of selected neighboring blocks. The resulting MHoG may be used to derive the prediction modes and weights as described herein.

Similar to how a quantity/number of IPMs may be selected based on an HoG in regular DIMD, as described herein with respect to FIG. 18, FIG. 19, and step 2006 of FIG. 20, the quantity/number of IPMs (e.g., up to a predetermined quantity/number such as 5) may be similarly selected from the MHoG. The quantity/number of IPMs may be selected, for example, based on the highest amplitudes in the MHoG.

With respect to step 2008 of FIG. 20 in the MIMD mode, the indication of location dependency may be set to a value (e.g., 0) indicating diagonal (e.g., or non-location dependent) for each of the quantity/number of selected IPMs, for example, if multiple neighboring blocks are selected to determine the MHoG. The indication of location dependency for each of the selected IPMs may be set to the selected IPMs' location dependency as obtained from DIMD information of the neighboring block, for example, if only one neighboring block was selected. A DIMD predictor may be generated from the selected IPMs of the MHoG and used to generate a prediction block for coding the current block.

The encoder may signal usage of the MIMD mode with a flag at the block or prediction unit level as a sub-mode of DIMD, for example, if MIMD mode is selected by the encoder. The decoder may parse this flag from the bitstream and derive the DIMD predictor using the generated MHoG.

Another decoder-side technique for enhancing DIMD may be based on generating a histogram of occurrences (HoC) representing sample-wise occurrences of the IPMs in the neighborhood of the current block. This technique may be referred to as an occurrence-based intra coding (OBIC) mode and may be a sub-mode of DIMD. Similar to regular DIMD mode, the OBIC mode may blend (e.g., fuse or combine) up to a predetermined quantity/number (e.g., 5) of IPMs with highest occurrences from the HoC, along with planar mode to obtain a DIMD predictor. The weight for each mode may be determined based on amplitudes in the HoC similar to how a weight for an IPM is determined from the HoG in regular DIMD.

The OBIC process may be similar to the DIMD process described herein with respect to FIG. 20, except for how the histogram of IPMs is determined (e.g., constructed or generated) for the current block at step 2001. The histogram may be a HoC determined from at most a predetermined quantity/number (e.g., 13) of reconstructed neighboring blocks (e.g., neighboring CU blocks of the current block), instead of generating the histogram from neighboring samples of a current block, such as from a reference template of the current block,

A neighboring block, similar to the neighboring blocks described with respect to the MIMD mode, may be from a family of spatial adjacent blocks as shown and described herein for example with respect to FIG. 15A. FIG. 21 may show examples of neighboring blocks of the current block used to determine a histogram, such as the HoC. The family of spatial adjacent blocks neighboring the current block, as described herein for example with respect to FIG. 15A, may correspond to sample locations 1-5 adjacent to the current block. A neighboring block may be from a family of spatial non-adjacent neighboring blocks of the current block, such as blocks corresponding to sample locations 6 and above. For example, steps 2102-2016 may be selected as DIMD merge candidates and added to the list of DIMD merge candidates. A first block 2102 associated with (e.g., contains) sample 11, a second block 2104 associated with (e.g., contains) sample 13, and a third block 2106 associated with (e.g., contains) sample 10 may be spatial non-adjacent blocks with respect to the current block.

FIG. 22B shows an example method for determining an HoC for a current block. More specifically, FIG. 22B shows an example flowchart 2200B of a method for determining an HoC for a current block coded using, for example, an OBIC mode. The method of flowchart 2000B may be performed and/or implemented by an encoder (e.g., encoder 114), a decoder (e.g., decoder 120), an example computer system 2900 in FIG. 29, and/or an example computing device 3030 in FIG. 30. Steps of the example method of FIG. 22B may be omitted, performed in other orders, and/or otherwise modified, and/or one or more additional steps may be added.

At step 2212, a plurality of neighboring blocks (e.g., neighboring CUs) of a current block may be selected to generate the HoC. For example, the plurality of neighboring block may be at most a predetermined quantity/number (e.g., 13 or 15) selected from a list of DIMD merge candidates of the current block. The list may include a predetermined quantity/number (e.g., 13) of spatial adjacent and/or non-adjacent blocks of the current block such as those described herein for example with respect to FIG. 21 and step 2202 of FIG. 22A. Generating the list of DIMD merge candidates, similar to the MIMD mode, may include checking adjacent spatial neighboring blocks of the current block as shown for example in FIG. 15A and non-adjacent spatial neighboring blocks as described herein for example with respect to FIG. 21 The plurality of neighboring blocks may be selected based on being previously coded using DIMD information (e.g., being coded in a DIMD, OBIC, MIMD, or DIMD Merge List mode). Up to the predetermined quantity/number of neighboring blocks may be selected based on being coded using DIMD information and that are spatially closest to the current block.

At step 2214, DIMD information of each block of the plurality of neighboring blocks may be obtained (e.g., retrieved). The DIMD information of a block may represent a histogram of IPMs such as the HoG, which may be an MHoG or an HoC. Step 2214 may correspond to and include similar operations as step 2204 of FIG. 22A. For example, the DIMD information representing the HoG (and/or MHoG) may include DIMD parameters such as IPMs and associated parameters such as amplitudes, weights, and/or indications of location dependencies, for example, as described herein with respect to FIG. 18.

At step 2216, an HoC may be determined based on combining the DIMD information of each block of the plurality of neighboring blocks according to a size and/or dimensions of each block. Different from generating HoG or MHoG in which amplitudes of IPMs in the DIMD information may be combined. The HoC may be determined to include IPMs, from the DIMD information, with cumulated sample-wise occurrences where each occurrence value for a respective IPM may be calculated based on the quantity/number of samples that are coded with that IPM from the selected DIMD merge candidates. The occurrence of the IPM in the associated block may be computed as:

$$histogram[IPM] +\!= w \times h.$$

if a selected DIMD candidate is a neighboring block with dimensions of width w and a height *h* and that is coded with an intra prediction mode *IPM*. The occurrence for this specific IPM may be cumulated over the selected plurality of neighboring blocks (e.g., including adjacent spatial neighboring blocks and/or non-adjacent spatial neighboring blocks). The sizes (e.g., width multiplied by height) of neighboring blocks with DIMD information including the same IPM may be cumulated for that IPM in the HoC. The resulting HoC may be used to derive the prediction modes and weights, for example, as described herein above with respect to steps 2006-2028.

Up to a predetermined quantity/number (e.g., 5) of angular IPMs with the highest amplitudes (representing highest occurrences) in the HoC, with respect to step 2006 of FIG. 20 in the OBIC mode, may be selected and blended together along with the planar mode to obtain a DIMD predictor (e.g. the DIMD predictor based on generating a HoC) used to generate a prediction block for coding the current block. The indication of location dependency, with respect to step 2008 in the OBIC mode, may be set to a value (e.g., 0) indicating diagonal (e.g., or non-location dependent) for each of the quantity/number of selected IPMs.

The encoder may signal usage of the OBIC mode with a flag at the block or prediction unit level as a sub-mode of DIMD, for example, if OBIC mode is selected by the encoder. The decoder may parse this flag from the bitstream and derive the DIMD predictor using the generated HoC.

The DIMD information of a neighboring block may include different quantities/numbers of IPMs (e.g., angular modes) depending on the intra mode that was used to code the neighboring block. Intra modes such as DIMD, OBIC, or MIMD may use to 5 IPMs, a template-based intra mode derivation (TIMD) mode may use up to 2 modes, or a spatial geometric partitioning mode (SGPM) may use up to 2 modes. All intra modes of such blocks may be considered in the histogram generation. Neighboring blocks coded using non-angular modes such as IntraTMP, IBC, or Matrix-based Intra Prediction (MIP) may not be selected, and may not be used to generate the histogram (e.g., HoG, MHoG, or HoC).

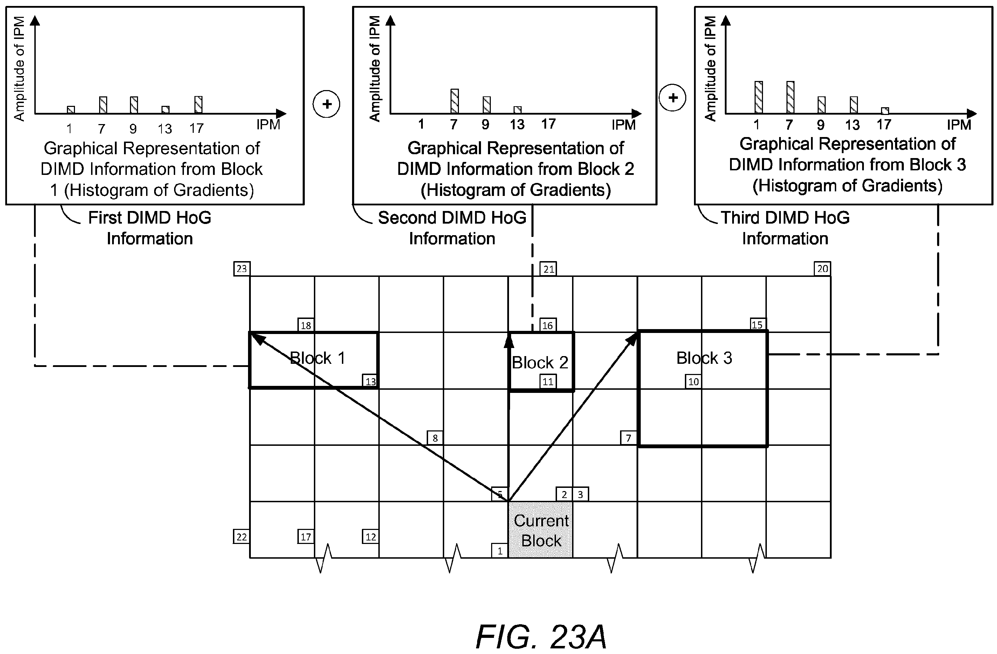

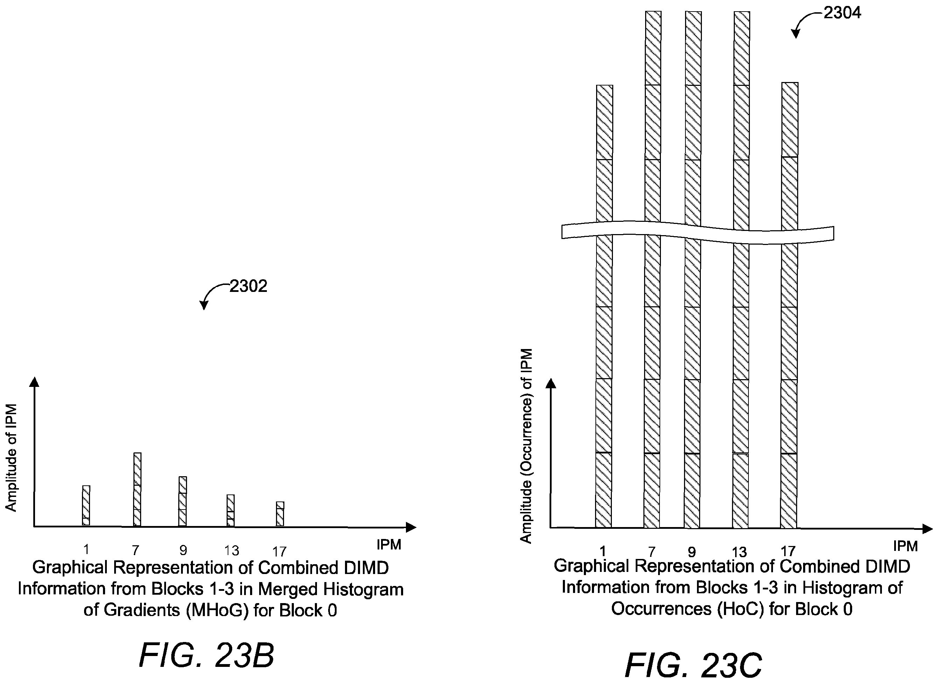

FIG. 23A shows an example of DIMD information from a plurality of neighboring blocks of a current block. The plurality of neighboring blocks of the current block may be previously reconstructed neighboring blocks of the current block. FIG. 23B shows a graphical representation of combining the DIMD information from the plurality of neighboring blocks to generate an MHoG. The DIMD information from the plurality of neighboring blocks may be combined to generate an MHoG, for example, if the current block is coded using the MIMD mode. FIG. 23C shows a graphical representation of combining the DIMD information from the plurality of neighboring blocks to generate an HoC if the current block is coded using the OBIC mode.

A coder (e.g., encoder 114, decoder 120), in both the OBIC and MIMD modes, may obtain (e.g., accesses, collects, receives) the DIMD information from the plurality of (previously reconstructed) neighboring blocks (e.g., block 1, block 2, and block 3), and may generate information used to generate a prediction block to code the current block. For example, as shown in FIG. 23A, the coder may obtain first DIMD information from block 1 including HoG information such as amplitudes for IPM 1, IPM 7, IPM 9, IPM 13, and IPM 17. The coder may obtain second DIMD information from block 2 including HoG information, such as amplitudes for IPM 7, IPM 9, and IPM 13. The coder may obtain third DIMD information from block 3 including HoG information, such as amplitudes for IPM 1, IPM 7, IPM 9, IPM 13, and IPM 17.

The coder, as shown for example in FIG. 23B, may combine the amplitudes of like IPMs from the first DIMD information, the second DIMD information, and the third DIMD information corresponding to respective blocks 1-3 to generate MHoG 2302, for example, if the current block is coded using MIMD mode. For example, the coder may determine the amplitudes of IPM 1 in the MHoG 2302 by adding all the amplitudes of IPM 1 from blocks 1-3. The coder may determine the amplitudes of IPM 7 in the MHoG 2302 by adding all the amplitudes of IPM 7 from blocks 1-3. The coder may determine the amplitudes of IPM 9 in the MHoG 2302 by adding all the amplitudes of IPM 9 from blocks 1-3. The coder may determine the amplitudes of IPM 13 in MHoG 2302 by adding all the amplitudes of IPM 13 from blocks 1-3. The coder may determine the amplitudes of IPM 17 in MHoG 2302, for example, by adding all the amplitudes of IPM 17 from blocks 1-3. A prediction block, using the various techniques described herein (e.g., MIMD), may be generated for example based on MHoG 2302 for coding the current block. The encoder may signal, in a bitstream, a residual block indicating a difference between the prediction block and the current block. The decoder may obtain the residual block from the bitstream and combine it with the prediction block, that was identically generated as the encoder, to reconstruct the current block.

The coder, as shown for example in FIG. 23C, may combine the occurrences of like IPMs from the first DIMD information, the second DIMD information, and the third DIMD information corresponding to respective blocks 1-3 to generate HoC 2304. The coder may combine the occurrences of like IPMs from the first DIMD information, the second DIMD information, and the third DIMD information corresponding to respective blocks 1-3 to generate HoC 2304, for example, if the block was coded using OBIC mode. For example, the coder may determine the amplitude (occurrence) of IPM 1 in the HoC 2304 by adding the sizes of blocks 1 and 3, each of which was coded using at least IPM 1. The coder may determine the amplitude (occurrence) of IPM 7 in the HoC 2304 by adding the sizes of blocks 1, 2, and 3. The coder may determine the amplitude (occurrence) of IPM 9 in the HoC 2304 by adding the sizes of blocks 1, 2, and 3. The coder may determine the amplitude (occurrence) of IPM 13 in the HoC 2304, for example, by adding the sizes of blocks 1, 2, and 3. The coder may determine the amplitude (occurrence) of IPM 17 in the HoC 2304 by adding the sizes of blocks 1 and 3. Since the second DIMD information does not indicate IPM 1 and IPM17, the size of block 2 may not be used for determining IPMs 1 and 17. A prediction block, using the various techniques described herein (e.g., OBIC), may be generated. The prediction block may be generated, for example, based on HoC 2304 for coding the current block. The encoder may signal, in a bitstream, a residual block indicating a difference between the prediction block and the current block. The decoder may obtain the residual block from the bitstream and combine it with the prediction block, that was identically generated as the encoder, to reconstruct the current block.

Another decoder-side technique for enhancing DIMD may be based on using a list of DIMD merge candidates that is identically generated at the encoder and the decoder and signaling an index that indicates one DIMD merge candidate from the list to code a current block. Each DIMD merge candidate may include DIMD information from a plurality of neighboring reconstructed blocks with respect to the current block. This process may be referred to as a DIMD Merge List mode.

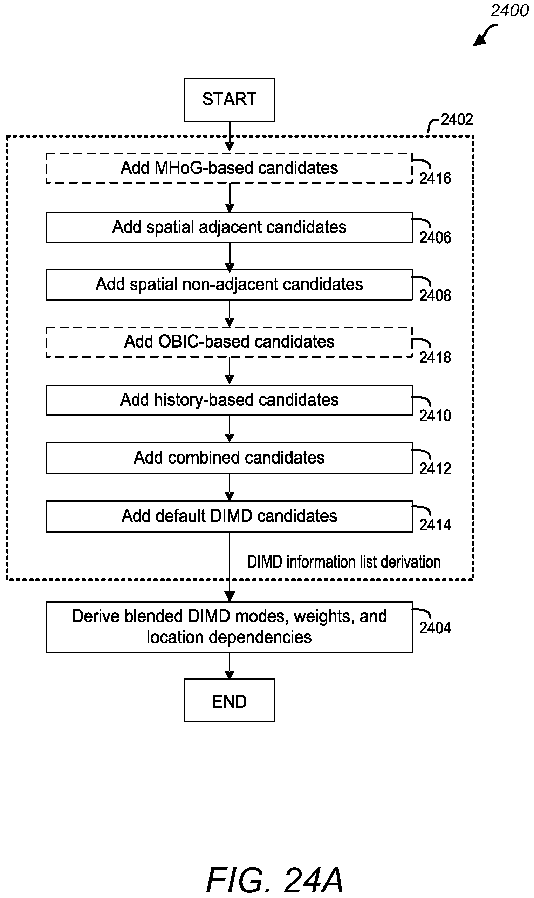

FIG. 24A shows an example flowchart of the DIMD Merge List mode for deriving a list of DIMD merge candidates. More specifically, FIG. 24A shows an example flowchart 2400 of the DIMD Merge List mode for deriving the list of DIMD merge candidates. Flowchart 2400 includes a step 2402 in which a DIMD merge list may be derived and a step 2404 in which DIMD parameters for a selected DIMD merge candidate from the list are derived. These DIMD parameters may include blended modes (e.g., DIMD modes), weights, and indications of location dependency. The method of flowchart 2400 may be performed and/or implemented by an encoder (e.g., encoder 114), a decoder (e.g., decoder 120) an example computer system 2900 in FIG. 29, and/or an example computing device 3030 in FIG. 30. Steps of the example method of FIG. 24A may be omitted, performed in other orders, and/or otherwise modified, and/or one or more additional steps may be added. Step 2402 may include several operations shown as steps 2406-2414. Each of the blocks may add to the list of DIMD merge candidates a family of DIMD merge candidates obtained from spatial neighbor blocks (e.g., intra blocks) of the current block that are selected based on a different selection criterion, from combinations of DIMD information already in the list, or from configured default DIMD information. The DIMD merge candidates in the list of DIMD merge candidates may be arranged as a list or table, but examples described herein may not be limited by a specific arrangement structure of the DIMD merge candidates.

At step 2406, DIMD merge candidates from a family of spatial adjacent blocks may be considered for adding DIMD merge candidates to the list of DIMD merge candidates. For example, this family of blocks, as explained herein with respect to FIG. 15A, may include the spatial adjacent blocks corresponding to adjacent neighbor samples of the current block. The DIMD merge candidates from spatial adjacent blocks may be added to the list of DIMD merge candidates according to the inclusion order of blocks corresponding to left sample (L), above sample (A), above left sample (AL), above right sample (AR), and bottom left sample (BL). Another inclusion order such as, L, A, AR, BL, and AL, or yet another different inclusion order may be used. The blocks in the family of spatial adjacent blocks may also be considered in the derivation of the MPM list. Between 1 and 5 (all spatial adjacent neighbors) candidates may be added to the DIMD merge candidate list at step 2406. For the DIMD information of a particular spatial block to be included in the DIMD merge candidate list, that block may at least already have had (e.g., if reconstruction of blocks in the current frame occurs) DIMD information derived for that block. DIMD information may be derived for a block that uses the DIMD parameters such as, for example, MIMD mode (e.g., DIMD HoG merge mode), DIMD Merge List mode, DIMD mode, OBIC mode, intra prediction mode, or MPM list derivation. A merge candidate may be added to the list of DIMD merge candidates only if the corresponding neighbor block was encoded or decoded based on DIMD or another intra prediction mode that uses the DIMD parameters. At step 2406, no spatial adjacent candidates may be added to the list of DIMD merge candidates, for example, if none of the adjacent spatial adjacent blocks are reconstructed using a mode that uses DIMD parameters (e.g., DIMD mode, MIMID mode, DIMD Merge List mode, OBIC mode, intra prediction mode, MPM list derivation, etc.),

At step 2408, DIMD merge candidates from a family of spatial non-adjacent blocks of the current block may be added to the list of DIMD merge candidates. The positions and inclusion order of the DIMD merge candidates of non-adjacent candidates in the same frame as the current block may be in accordance with a predetermined sequence, for example, as shown with respect to FIG. 21. The pattern and sequence of blocks indicated in FIG. 21 may be the same as that defined in some implementations for inter-merge prediction candidates.

The quantities/numbers 1-5 shown in FIG. 21 may refer to spatially adjacent neighbors of the current block (shown shaded) in the inclusion order L, A, AR, BL, and AL, that were already added to, or otherwise considered for inclusion in, the merge candidate list at step 2406, and thus may not be considered at step 2408. The sequence of blocks indicated by the sample locations 6-24 may be considered for inclusion of the corresponding DIMD information in the list of DIMD merge candidates at step 2408. As shown in FIG. 21, the non-adjacent neighbor blocks corresponding to (e.g., including) sample locations 6-24 considered for inclusion in the list of DIMD merge candidates may be arranged in the frame along the left horizontal direction, the above vertical direction, the above left diagonal direction, the above right diagonal direction, and the below left diagonal direction.

Similar to determining whether to include a spatial adjacent block in the list of DIMD merge candidates, for the DIMD information of a particular spatial non-adjacent block to be included in the list of DIMD merge candidates, that block must have had DIMD used for encoding/decoding or at least have had DIMD information derived for that block. A DIMD merge candidate may be added to the list of DIMD merge candidates only if the corresponding neighbor block was reconstructed based on DIMD or another intra prediction mode that uses the DIMD parameters. At step 2408, no spatial non-adjacent candidates may be added to the list of DIMD merge candidates, for example, if none of the spatial non-adjacent blocks are reconstructed using a mode that uses DIMD parameters.

At step 2410, a family of merge candidates from a history-based table of DIMD information may be added to the list of DIMD merge candidates. For example, one or more DIMD merge candidates (e.g., a predetermined quantity/-number) from the history-based table may be added to the list of DIMD merge candidates. A predetermined quantity/-number of the most recently coded blocks in the history-based table may be selected.

The history-based table may be maintained to include a predetermined quantity/number of the latest intra coded blocks that used DIMD information. This history-based table may be updated each time an intra block (e.g., CU) is coded using the DIMD process, for example, if the DIMD information is derived (e.g., a block using the DIMD mode, or an MPM-based mode, or based on a direction derived from DIMD, or a MIMD mode, or DIMD Merge List mode, or OBIC mode). This table may include a limited quantity/number of entries of DIMD information from previously coded blocks and may not include any duplicate DIMD information.

A particular spatial block, for the DIMD information of the particular spatial block to be included in the history-based table, may have had DIMD used for encoding/decoding, or may at least have had DIMD information derived for that block. DIMD information may be derived for a block for encoding/decoding based on DIMD or another intra prediction mode that uses the DIMD parameters. An entry of DIMD information may be added to the history-based table only if the corresponding neighbor block was reconstructed based on DIMD or another intra prediction mode that uses the DIMD parameters.

Spatial adjacent blocks and spatial non-adjacent blocks of the current block may have been already considered in accordance with a predetermined inclusion order (e.g., based on steps 2406 and 2408). Only DIMD information of spatial blocks that are neither spatial adjacent blocks nor spatial non-adjacent blocks according to the predetermined inclusion pattern may be added to the history-based table.

A constrained first-in-first-out (FIFO) rule may be used/applied where a redundancy check is first used/applied to determine whether there is identical DIMD information in the table, for example, if inserting a new entry of DIMD information into the history-based table,. The entry with the identical DIMD information may be removed from the table, all entries following that in the table may be moved forward in the FIFO order, and the new DIMD information may be inserted as the last entry, for example, if identical DIMD information is found. The table may be reset at intervals, for example, at the beginning of each CTU row. Such resetting may be performed due to hardware constraints. Such resetting may also help ensure that only the most recent neighbor blocks are in the table. The history-based table of DIMD information may be similar to the history-based table of motion vectors (HMVP) in the whole-block-based Advanced Motion Vector Predictor (AMVP) mode for inter prediction in VVC.

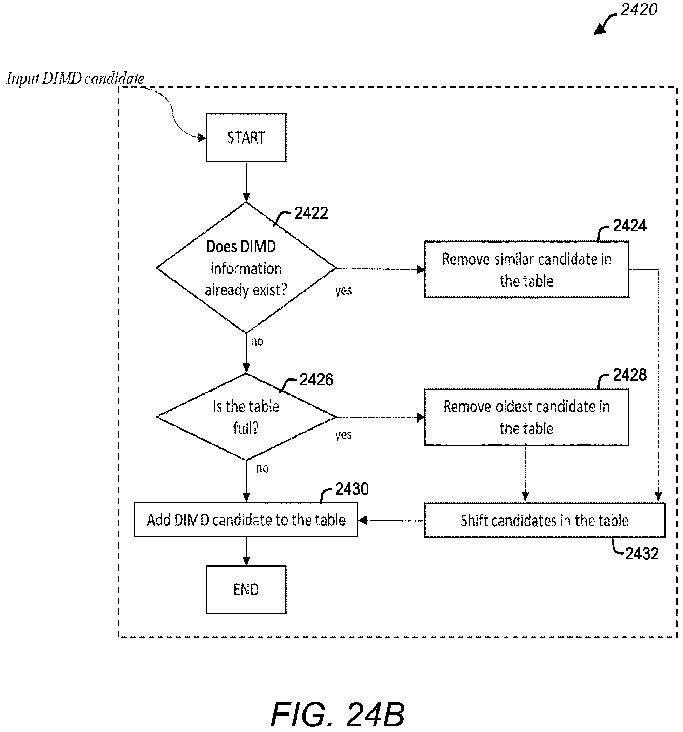

FIG. 24B shows a flowchart of an example for generating a history-based table of DIMD merge candidates. More specifically, FIG. 24B shows a flowchart 2420 of an example for generating a history-based table of DIMD merge candidates. The operations of flowchart 2420 may be performed and/or implemented by an encoder (e.g., encoder 114), a decoder (e.g., decoder 120), an example computer system 2900 in FIG. 29, and/or an example computing device 3030 in FIG. 30. Steps of the example method of FIG. 24B may be omitted, performed in other orders, and/or otherwise modified, and/or one or more additional steps may be added.

Flowchart 2420 may start at step 2422, for example, if a current block is considered as a DIMD candidate. The current block may be considered as a DIMD candidate based on the current block being coded using DIMD or another intra mode in which DIMD information is derived. At step 2422, it is determined whether the DIMD information (of the DIMD candidate) to be added already exists in the table. At step 2426, the method may determine whether the table is full, for example, if the method, at step 2422, determines that the DIMD information to be added is not in the table. This determination may be based on a preconfigured maximum size threshold for the history-based table. At step 2430, the DIMD information of the DIMD candidate may be added to the history-based table, for example, if the table is not full.

At step 2424, the duplicate DIMD information of an existing DIMD candidate in the history-based table may be already in the table and is removed from the table, for example, if the method, at step 2422, determines that the DIMD information to be added is in the table. At step 2428, the oldest entry in the table may be removed, for example, if the method, at step 2426, determines that the history-based table is full,

At step 2432, the entries that follow the removed entry in the table may be shifted up or moved up in sequence (e.g., in the FIFO sequence), for example, after either step 2424 or step 2428. At step 2430, the new DIMD information of the DIMD candidate, for example, after the rearrangement of table entries at step 2432, may be added as the last entry in the table. DIMD merge candidates derived from DIMD information in the history-based table may be added to the list of DIMD merge candidates, for example, after considering DIMD merge candidates derived from spatial adjacent blocks and spatial non-adjacent blocks of the current block.

Returning to FIG. 24A, at step 2412, a set of combined DIMD merge candidates may be added to the list of DIMD merge candidates. One or more combined DIMD merge candidates may be added to the list of DIMD merge candidates based on existing DIMD merge candidates (and respective DIMD information) in the list such as DIMD merge candidates considered and selected from one or more of the DIMD merge candidate families described above with respect to steps 2406-2410. A combined DIMD merge candidate may be generated based on combining DIMD information from the DIMD information of DIMD merge candidates that are already in the list of DIMD merge candidates. DIMD merge candidates that are already in the list, but which are based on a combination of other DIMD merge candidates in the list, may not be used to derive further combined DIMD merge candidates.

DIMD information corresponding to HoGs from at least two DIMD merge candidates in the list of DIMD merge candidates may be combined to create a new combined HoG, from which the blending modes and weights are derived to obtain the DIMD information of a new DIMD merge candidate. For example, the DIMD information (e.g., amplitudes of like IPMs) of at least two merge candidates may be averaged to generate an MHoG, and the blending modes and weights may be derived from this MHoG in a manner similar to that in the blending mode derivation in DIMD and MIMD, as described herein, for example, with respect to FIGS. 19-20. Considering the new combined DIMD merge candidate, location dependency may be set for example to diagonal (e.g., indicated by a predetermined value of 0) as a default value, or may be set accordingly to the blending modes, that a vertical location dependency may be set for a vertical blended mode, or a horizontal location dependency may be set for a horizontal blended mode.

A plurality of combined DIMD merge candidates may be derived and may include two or more of the following: a candidate derived from the first and second DIMD merge candidates in the list of DIMD merge candidates; a candidate derived from the first and third DIMD merge candidates in the list of DIMD merge candidates; a candidate derived from the second and third DIMD merge candidates of the list of DIMD merge candidates; a candidate derived from the two first DIMD merge candidates of the list of DIMD merge candidates with a vertical location dependency; a candidate derived from the two first DIMD merge candidates of the list of DIMD merge candidates with a horizontal location dependency; and/or a candidate derived from combining DIMD information of all spatial adjacent blocks of the current block.

A combined DIMD merge candidate may not be added to the list if it cannot be derived. The second combined candidate, derived from the first and third candidates, may be skipped as there is no third DIMD candidate. for example, if there are only two candidates in the list of DIMD merge candidates before adding combined DIMD candidates.

At step 2414, a set of default DIMD merge candidates may be added to the list of DIMD merge candidates. One or more default DIMD information entries may be added as DIMD merge candidates to the list of DIMD merge candidates. For example, DIMD parameters of two example default DIMD information entries may be shown in Table 1 below.

**Table 1: Example default DIMD parameters**

| | | | | |
|---|---|---|---|---|
| Default Mode 0 | Blending Modes | 0 (Planar) | 34 (Diag) | 18 (Hor) |
| | Blending Weights | 16 | 24 | 24 |
| | Location Dependency | 0 | 0 | 2 |
| Default Mode 1 | Blending Modes | 0 (Planar) | 34 (Diag) | 50 (Ver) |
| | Blending Weights | 16 | 24 | 24 |
| | Location Dependency | 0 | 0 | 1 |

The table shows default mode 0 and default mode 1, that each specifies a set of predetermined DIMD parameters. One or more DIMD merge candidates having predetermined default DIMD information (e.g., the DIMD parameters specified in Table 1 above) may be added to the list of DIMD merge candidates as one or more default DIMD candidates. The addition, if any, of combined DIMD merge candidates optionally followed by the default DIMD merge candidates may complete the addition of merge candidates to the list of DIMD merge candidates.

Step 2402 may further include step 2416 and/or step 2418. Steps 2416-2418 may add one or more DIMD merge candidates that derive DIMD information from neighboring spatial blocks, in addition to the DIMD merge candidates with DIMD information retrieved from previously coded (e.g., reconstructed) neighboring blocks of the current block, for example, as described herein with respect to steps 2406-2414. It should be noted that the order of steps 2406-2418 may be different than from what is shown in FIG. 24A.

At step 2416, one or more DIMD merge candidate derived using the MHoG derivation process and referred to as MHoG-based candidates may be added to the list of DIMD merge candidates. A list of MHoG merge candidates may be generated from which two or more MHoG merge candidates are selected to derive each of the one or more MHoG-based candidates. For example, the MHoG derivation process described herein with respect to FIGS. 21, 22A, 23A, and 23B may be used for (e.g., applied to) selected MHoG merge candidates.

The list of MHoG merge candidates may include DIMD information (e.g., DIMD parameters related to an MHoG or an HoG) of spatial neighbor blocks (e.g., CUs) of the current block (such as the spatial adjacent neighbor blocks and the spatial non-adjacent blocks) that was coded based on DIMD or another intra prediction mode using DIMD parameters, for example, as described herein with respect to FIG. 15A and FIG. 21. Redundant DIMD information may be removed or not added to the list of MHoG merge candidates. The list of MHoG merge candidates may further include one or more DIMD candidates from a history-based table of DIMD information.

A plurality of different subsets of the list of MHoG merge candidates may be selected to generate a plurality of different DIMD merge candidates to add to the list of DIMD merge candidates. The one or more MHoG-based candidates may be added to the list of DIMD merge candidates, for example, before other families of merge candidates are considered. For example, the one or more MHoG-based candidates may have the lowest indices in the list of DIMD merge candidates.

At step 2418, one or more DIMD merge candidate derived using the OBIC derivation process and referred to as OBIC-based candidates may be added to the list of DIMD merge candidates. A list of OBIC merge candidates may be generated from which two or more OBIC merge candidates are selected to derive each of the one or more OBIC-based candidates. For example, the OBIC derivation process described herein with respect to FIGS. 21, 22B, 23A, and 23C may be used for (e.g., applied to) selected OBIC merge candidates.

The list of OBIC merge candidates may include DIMD information (e.g., DIMD parameters related to an MHoG, HoG, or HoC) of spatial neighbor blocks (e.g., CUs) of the current block (such as the spatial adjacent neighbor blocks and the spatial non-adjacent blocks) that was coded based on DIMD or another intra prediction mode using DIMD parameters, for example, as described herein with respect to FIG. 15A and FIG. 21. Redundant DIMD information may be removed or not added to the list of OBIC merge candidates. The list of OBIC merge candidates may further include one or more DIMD candidates from a history-based table of DIMD information.

In some examples, a HoC may be derived from the DIMD information of two or more neighbor block corresponding to the selected OBIC merge candidates. The derived HoC may be used to derive the DIMD merge candidate to be added to the list of DIMD merge candidates. A plurality of different subsets of the list of OBIC merge candidates may be selected to generate a plurality of different DIMD merge candidates to add to the list of DIMD merge candidates.

Operations at step 2402, which may include steps 2406-2414 and may further include steps 2416-2418 and which may generate the list of DIMD merge candidates, may be performed and/or implemented in an identical manner by the encoder and decoder. At step 2404, blended modes, weights and location dependency may be derived, for example, after step 2402 is completed (i.e., the list of DIMD merge candidates is constructed). If implemented and/or performed by the encoder, the operation may include determining the best DIMD merge candidate in the list of DIMD merge candidates based on a cost (e.g., SAD, SATD, etc.) difference between a predicted block obtained using the DIMD predictor and the current block and/or based on rate distortion optimization (RDO cost) of each of the DIMD merge candidates starting from the top (e.g., the lowest SAD, SATD cost) of the list of DIMD merge candidates. The index to the position of the best (selected) DIMD merge candidate in the list of DIMD merge candidates may be determined. Subsequently, the selected predictor may be added to the MPM list. A DIMD enabled flag and the index may be transmitted in the bitstream, for example, if the current block is predicted by the DIMD predictor and encoded for transmission based on the DIMD prediction.

If implemented and/or performed by the decoder, step 2404 may include parsing the bitstream for one or both of a DIMD enabled flag or index to the list of DIMD merge candidates. The index may be used to obtain the selected DIMD merge candidate from which to derive the DIMD predictor.

The DIMD merge mode may have the benefit of the use of available neighbor information (e.g., in particular, the DIMD information derived for the spatial neighbor blocks) to better suit the signal characteristics of the current block to be predicted. The DIMD mode, MIMD mode, OBIC mode, DIMD merge mode, and any other mode derived from the DIMD mode may collectively be referred to as "DIMD-based modes or sub-modes."

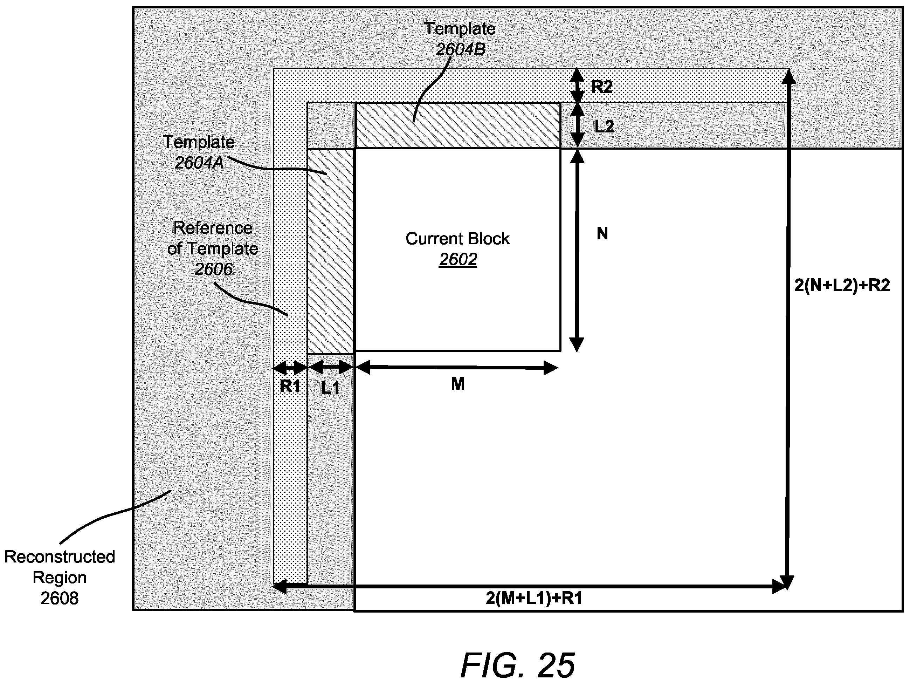

FIG. 25 shows an example of template-based intra mode derivation (TIMD) for coding a current block. The TIMD mode may be a type of intra prediction in which an intra prediction mode (IPM) may be identically determined (e.g., independently derived) by an encoder (e.g., encoder 114) and a decoder (e.g., decoder 120) such that the IPM determined (e.g., selected) by the encoder does not need to be signaled to the decoder. Hence signaling bandwidth may be reduced and TIMD may be considered as a type of decoder-side intra mode derivation process.

As shown for example in FIG. 25, a video coder (e.g., encoder 114 or decoder 120), in the TIMD mode, may determine a template 2504 for current block 2502. Template 2504 may comprise one or more regions of samples in a reconstructed region 2508 of a current picture (or frame) of current block 2502. The one or more regions may include reconstructed samples neighboring (e.g., adjacent to) current block 2502. The one or more regions of template 2504 may comprise a template region 2504A to the left of current block 2502 (e.g., a left template) and a template region 2504B above current block 2502 (e.g., an above template). Template 2504 may include a region that is above and to the left of current block 2502 (e.g., the region enclosed by reference of template 2506 and template regions 2504A-B). Template regions 2504A and 2504B may have a thickness (e.g., width and height respectively) of R1 and R2 samples, respectively. For example, R1 and/or R2 may be 2 samples, 4 samples, 8 samples, etc. Template region 2504A may have a height of N samples, which may be a height of current block 2502. Template region 2504B may have a width of M samples, which may be a width of current block 2502.

In TIMD mode, reference of template 2506 may be used to derive a template predictor for template 2504. The video coder may determine (e.g., select and obtain) reference of template 2506 as a region of samples (in reconstructed region 2508) neighboring (e.g., adjacent to) template 2504. For example, reference of template 2506 may comprise reconstructed samples left and above template 2504. Reference of template 2506 may have a thickness to the left of template region 2504A of R1 samples and a thickness above template region 2504B of R2 samples. For example, R1 and/or R2 may be 1 sample, 2 samples, 4 samples, etc. Reference of template 2506 may include an upper region having a width greater than template region 2504B (e.g., a width that is greater or equal to twice the width of template region 2504B, 2(M+L1) samples, 2(M+L1)+R1 samples, etc.). Reference of template 2506 may include a left region having a height greater than template region 2504A (e.g., a height that is greater or equal to twice the height of template region 2504A, 2(N+L1) samples, 2(N+L 1)+R2 samples, etc.).

A TIMD mode predictor may be determined using a list of candidate intra prediction modes (IPMs). For example, the list may include IPMs from a most probable mode (MPM) list. One or more of a DC mode, a planar mode, a horizontal and/or vertical DC mode, or a horizontal and/or vertical planar, may be added to the list of candidate IPMs. A cost (e.g., SAD or SATD) for each candidate IPM in the list may be determined based on differences between reconstructed samples in template 2504 and predicted samples of template 2504 generated based on reference of template 2506 and using the candidate IPM. The video coder may determine the predicted samples by using (e.g., applying) the candidate IPM to samples of reference of template 2506.

A first IPM and a second IPM, from the list, with the lowest costs of costs (determined for candidate IPMs in the list) may be selected to determine (e.g., derive) a first TIMD mode and a second TIMD mode. The first and second TIMD modes may be determined as the first and second IPMs, respectively.

The first and second TIMD modes may be determined by refining the first and second IPMs. For example, an angular mode range may be extended from a first range of the list (e.g., 67 modes) to a second range (e.g., 131 modes), and costs of the two adjacent modes (i.e., +/-1 mode) of each selected IPM may be determined. For example, the first TIMD mode may be determined as an IPM having the smallest cost among costs of the first IPM and its two adjacent modes in the second range. The second TIMD mode may be determined as an IPM having the smallest cost among costs of the second IPM and its two adjacent modes in the second range.

A TIMD mode predictor may be determined based on combining (e.g., blending or fusing) the first TIMD mode and the second TIMD mode. For example, the TIMD mode predictor may be a linear combination of the first TIMD mode and the second TIMD mode. Each weight of the first and second TIMD modes, in the linear combination, may be determined. Each weight of the first and second TIMD modes, in the linear combination, may be determined for example based on costs of the first and second TIMD modes, respectively. A weight, for a TIMD mode, may be determined as being inversely proportional to a cost of the TIMD mode. The TIMD mode predictor may be used for (e.g., applied to) template 2504 to determine a prediction block for current block 2502. An encoder may generate a residual (e.g., prediction error), for example, based on a difference between the prediction block and current block 2502. A decoder may reconstruct current block 2502, for example, based on the reciprocally generated prediction block and the residual received from the encoder in a bitstream.

The TIMD modes may be stored as corresponding (refined) IPMs in DIMD information used in coding current block 2502. Additionally, the DIMD information may include parameters such as the costs and/or derived weights for the IPMs corresponding to the TIMD modes. The DIMD information stored for the TIMD mode, different from the DIMD information stored for intra coding modes such as DIMD, MIMD, OBIC, DIMD Merge List, may not include amplitudes of histograms. The DIMD information may also include parameters such as indications of location-dependency, referred to as directionalities, determined for the IPMs corresponding to the TIMD modes.

Directionalities (e.g., first and second directionality) of the TIMD modes (e.g., first and second TIMD modes) may be determined based on costs of the TIMD modes. For example, a directionality or indication of location dependency may include horizontal indicating prediction samples closer to the left boundary of the current block are likely to be more spatially correlated with the parameters (e.g., weight) for the determined TIMD mode, vertical indicating prediction samples closer to the above boundary of the current block are likely to be more spatially correlated with the parameters (e.g., weight) for the determined TIMD mode, no direction, and/or diagonal indicating a combination of horizontal and vertical. No direction may correspond to and indicate the diagonal direction.

The directionality (indicating location-dependency), for a selected TIMD mode (e.g., a candidate minimizing SATD cost computed in the template area), may be determined based on which portion(s) of the current template contributes the most to the selection of the TIMD mode. There may be as many location-dependency directionalities as regions of the current template. For instance, a current template may comprise a first region (e.g., template region 2504B) and a second region (e.g., template region 2504A). The location-dependency state associated to the TIMD mode may be set to "vertical" (e.g., sample-wise vertical fusion may be operated for blending this TIMD mode), for example, if it is determined that the above template is the most impactful template for the selection of the TIMD mode. The location-dependency state associated to said selected predictor may be set to "horizontal" (e.g., sample-wise horizontal fusion may be operated for blending this TIMD mode), for example, if it is determined that left template is the most impactful template for the selection of the TIMD mode. The associated location-dependency state may be set to "non-location-dependent" and neither sample-wise process may be operated (meaning regular block-wise weight blending is achieved) or a sample-wise diagonal fusion may be operated for blending this TIMD mode, for example, if templates participation in the selection of the TIMD mode is balanced. Thus, location-dependency state associated to selected TIMD mode may impact directionality of the sample-wise TIMD fusion process. The first region and the second region may not overlap. In other examples, the first region and the second region may overlap.

The directionality may be determined according to availability of template samples and/or template regions. For example, only one template region may be available at the picture border. A first directionality may be determined (e.g., location-dependency being set to 2 indicating horizontal) corresponding to that first region, for example, if only the first region (e.g., left template) is present or available. A second directionality may be determined (e.g., location-dependency being set to 1 indicating vertical) corresponding to that second region, for example, if only the second region (e.g., above template) is present or available. The value may be set to 0 which may indicate a diagonal direction, for example, if the location dependency is determined as being not enabled (e.g., disabled).

The impact may be determined based on comparing a first cost of the first region with a second cost of the second region. The cost may be calculated much like how TIMD costs are calculated, for example, using SATD, SSE, or SAD. A lower cost may indicate higher impact. A ratio may be calculated between the first cost and the second cost to determine which region has greater impact and may thus determine the directionality of the TIMD mode.

For example, determination of the directionality of the TIMD mode, for the first cost for the first region (e.g., a left template region/area) and the second cost for the second region (e.g., an above template region/area), may be determined as follows:

$$\text{If } SATD_A < k.SATD_L, locDep_i = 1$$

$$\text{Else if } SATD_L < k.SATD_A, locDep_i = 2$$

$$\text{Otherwise, } locDep_i = 0$$

The costs may be represented as SATD costs, but other costs may be possible. $SATD_A$ may be the SATD cost associated to a selected TIMD mode, and may be computed in the second region (e.g., above template). $SATD_A$ may be the SATD cost associated to a selected TIMD mode, and may be computed in the first region (e.g., left template). $locDep_i$ may be the location-dependent parameter value associated with the i-th selected TIMD mode (e.g., i belongs to [0;2]). A value of 0 may indicate no location-dependency; a value of 1 may indicate vertical location-dependency of the i-th selected TIMD mode; and a value of 2 may indicate horizontal location-dependency of the i-th selected TIMD mode. k may be a scaling factor, and may be a value less than 1. For example, k may be a value comprised in the range [1/10; 1/6] such as 1/8.

The associated location-dependency state (e.g., directionality) may be set to 0 (e.g., indicating no-location-dependency) as expected that these selected "flat" modes do not exhibit large differences in terms of relative template SATD, for example, if a candidate TIMD mode is non-angular (e.g. DC or Planar mode). A location-dependency state may be determined (e.g., derived) for the candidate non-angular TIMD mode similar to how the location-dependency state is determined for an angular TIMD mode.

A directionality of a non-angular mode may be derived/determined based on a plurality of directional non-angular modes (e.g., directional DC, directional planar) corresponding to that non-angular mode. For example, the directionality may be determined as being corresponding to direction of the lowest cost (e.g., SATD cost) of the directional non-angular modes (e.g., among vertical, horizontal and original modes). For instance, template SATD cost may be computed for original, horizontal and vertical Planar modes. Location-dependency or the directionality for the planar mode may be to horizontal, for example, if horizontal planar mode has the minimum SATD among the three planar modes. Location-dependency or the directionality for the planar mode may be to vertical, for example, if vertical planar mode has the minimum SATD among the three planar modes. The directionality may be set to diagonal (or possibly sample-wise fusion is deactivated), for example, if the original planar mode has the minimum SATD. The regular original non-angular mode may be used although a directional non-angular mode has a lowest SATD. The regular original non-angular mode may be used, for example, if the fusion process occurs.

Another intra mode prediction technique may propose to combine the benefits of TIMD and inter-prediction merge modes to obtain a new efficient intra-prediction mode referred to herein as the "TIMD merge mode." TIMD merge mode, for each CU predicted, may include building a list of TIMD information, and selecting one to be used to reconstruct the current block. This list, referred to as "list of TIMD merge candidates," may be built from the TIMD information from various spatial neighbors (e.g., neighboring blocks in the current frame). The TIMD information may already be available for several of the intra neighboring CUs (i.e., spatial neighboring blocks) coded in TIMD mode or non-TIMD mode as many intra coding modes require TIMD information to increase the coding speed. The TIMD information may include prediction modes, fusion flag, fusion weights, and wide-angle conditions of TIMD modes.

An initial list of TIMD merge candidates may be constructed according to a given checking order of respective TIMD merge candidate families, such as TIMD information of spatial adjacent candidates, TIMD information of spatial non-adjacent candidates as illustrated for example in FIG. 21. The list of TIMD merge candidates may have a predetermined maximal quantity/number of TIMD merge candidates (e.g., 10). The generation process may be stopped, for example, if the maximal quantity/number is reached (i.e., if the list is full). Moreover, the generation of the list may ensure that no TIMD merge candidates with duplicate TIMD information is added to the list.

The merge candidates may be sorted based on the SATD cost over the template of the current block, for example, after forming the TIMD merge list. The SATD costs of the pair TIMD modes, for the weight calculation, may be normalized using their respective fusion weights. For example, the candidate's cost may be calculated as:

$$\text{Cost} = (SATD(IPM_1) * W_1 + SATD(IPM_2) * W_2) >> \text{shift}.$$

if a merge candidate has two intra modes (IPM1, IPM2) with fusion weights (W1, W2).

The template size and the template cost calculation aspects may be the same as the template size and the template cost calculation in the TIMD mode. The two best candidates from the list may be selected to be used in encoder RDO algorithm, for example, after sorting the TIMD merge candidates.

Usage of the mode may be signaled with a CABAC-coded CU-level flag. The TIMD merge mode may be used as a sub-mode of the TIMD tool. A CABAC-coded index may also be signaled to indicate whether the first or the second candidate is used from the merge, for example, if the TIMD merge mode is enabled.

The TIMD merge list may be extended to consider TIMD information of history-based spatial candidates, TIMD information of combined candidates, and default TIMD information candidates. Furthermore, the maximal quantity/number of candidates per family may be bounded.

The TIMD mode, the TIMD merge mode, and any other mode derived from TIMD mode may be collectively referred to as "TIMD-based modes or sub-modes." The process involved in a TIMD-based mode or a DIMD-based mode may be referred to as the "intra coding sub-mode derivation process."

The TIMD-based and DIMD-based modes/sub-modes described herein may be designed to improve compression efficiency. The predictor generation process for a first sub-mode (e.g., the DIMD mode) may substantially be the same as another sub-mode (e.g., DIMD merge mode). Consequently, the parameters derived from each sub-mode may be similar, resulting in identical or similar predicted samples even though an additional syntax element was added into a bitstream to switch between these sub-modes. This may cause redundancy in the output bitstream, which may reduce the compression performance of the intra-prediction schemes of the video codec.

Examples described herein relate to evaluating similarities between intra coding sub-modes allowing at least one of the sub-modes to be modified or replaced to increase the diversity of predictors. By allowing at least one of the sub-modes to be modified or replaced, this results in an improvement of compression efficiency. For example, the level of similarity between two intra coding sub-modes may be evaluated by comparing the parameters derived during the selection of the IPMs for blending or fusion (referred to as "mode derivation parameters"), such as blending modes (e.g., IPMs), blending weights (or weights), and location dependencies. The two intra coding sub-modes may be the same type of modes (e.g., two DIMD-based sub-modes or two TIMD-based sub-modes) or different types of modes (e.g., a DIMD-based sub-mode and a TIMD-based sub-mode).

Each of the intra coding sub-modes discussed herein may involve selecting multiple blending modes (e.g., IPMs) to be used for fusion to generate the final prediction of the current block. These selected blending modes may have different impacts on the final predicted block. For example, a blending mode having a higher amplitude in the HoG (HoG or MHoG) may have more impact on the final predicted block than another blending mode with a lower amplitude. This blending mode may also have a higher impact on the similarity level between two sub-modes than the other blending mode, and thus may have a higher priority than the other blending mode, for example, if/when determining the similarity level between two intra coding sub-modes. The angular blending modes selected through the intra coding sub-mode derivation process may be ranked according to their priorities from the highest to the lowest. The priorities of the blending modes may be determined according to their respective blending weights. Likewise, the priorities of the blending modes may also be determined according to the respective amplitudes in the HoG (for DIMD-based sub-modes) or the respective template matching costs (for TIMD-based sub-modes).

Each mode derivation parameter of a sub-mode may not have the same impact on the final predicted block for the current block. The blending mode may have more impact than the blending weights, and the blending weights may be more impactful than the location dependency on the predicted block. The similarity level between two sub-modes may be measured, for example, by taking into account the different priorities of the blending modes and different impact levels of the mode derivation parameters.

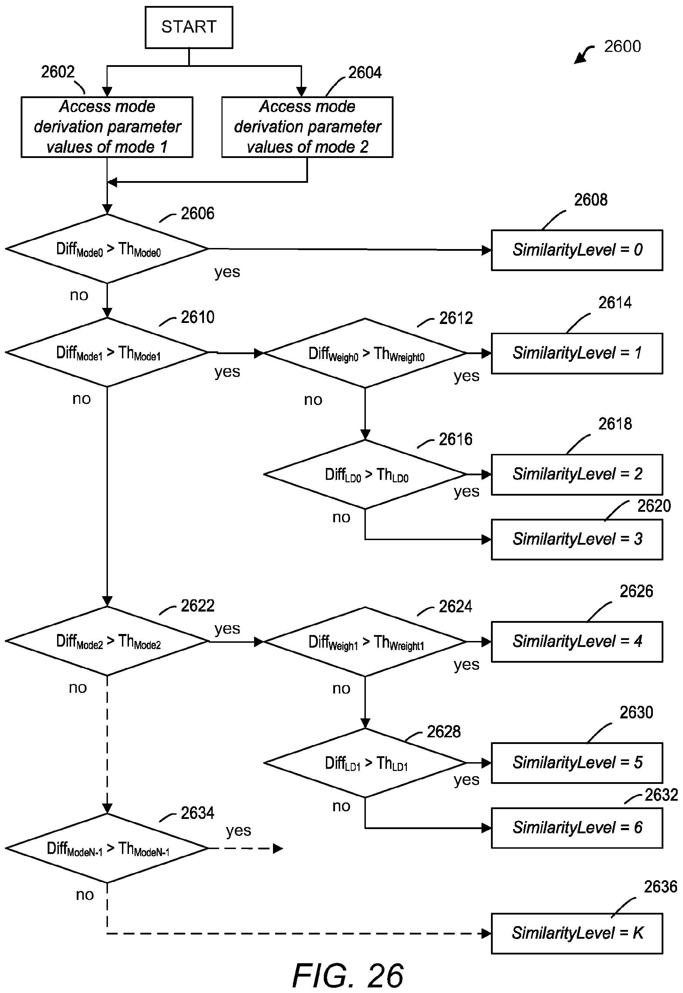

FIG. 26 shows an example method for determining a similarity metric between two intra coding modes (or sub-modes) based on mode derivation parameters of the two modes. More specifically, FIG. 26 shows an example flowchart 2600 showing an example method for determining a similarity metric between two intra coding modes (or sub-modes) based on mode derivation parameters of the two modes. The mode derivation parameters may include, for example, blending modes (e.g., angular IPMs), blending weights, and location dependency. The operations of the flowchart 2600 may be performed and/or implemented by an encoder (e.g., encoder 114), a decoder (e.g., decoder 120), an example computer system 2900 in FIG. 29, and/or an example computing device 3030 in FIG. 30. Steps of the example method of FIG. 26 may be omitted, performed in other orders, and/or otherwise modified, and/or one or more additional steps may be added.

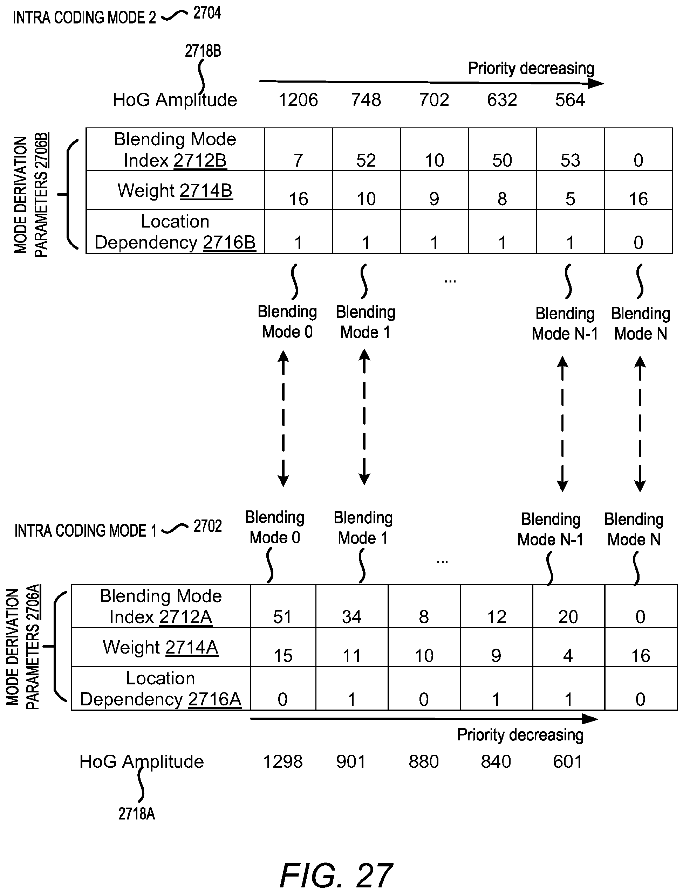

At steps 2602 and 2604, the mode derivation parameter values for mode 1 and mode 2 may be accessed, respectively. The mode derivation parameter values may have been derived previously for the current block. FIG. 27 shows an example of the mode derivation parameter values for two intra coding modes. More specifically, FIG. 27 shows an example of the mode derivation parameter values for intra coding mode 1 2702 and intra coding mode 2 2704. The mode derivation parameters 2706 for each blending mode may include the index of the blending mode 2712, the blending weight 2714 for the blending mode, and the location dependency 2716.

Each of the intra coding modes 1 and 2, in the example shown in FIG. 27, may have N+1 modes. The blending modes may be IPMs. The blending modes or a subset of the blending modes may be ordered based on the priorities of the modes, such as the first N modes being ordered in a descending order, as shown for example in FIG. 27. In this example (e.g., DIMD-based modes), the priorities may be determined based on the amplitudes of the IPMs in the HoG, where a higher amplitude leads to a higher priority of the blending mode. The priorities, for other types of intra coding modes (e.g., TIMD-based modes), may be determined, for example, based on costs (e.g., template matching costs). The priorities of the blending modes may be determined, for example, based on the weights associated with the respective modes. A blending mode with a higher weight may have a higher priority than other modes.

The ordered blending modes of intra coding mode 1 and intra coding mode 2 may have a one-to-one correspondence. For example, the first blending mode (blending mode 0) of the intra coding mode 1 may correspond to the first blending mode (blending mode 0 with index 7) of the intra coding mode 2. The mode derivation parameter values may also correspond to each other. For example, the blending mode index (with a value 51), weight (with a value 15), and the location dependency (with a value 0) of blending mode 0 of the intra coding mode 1 may correspond to, respectively, the blending mode index (with a value 7), weight (with a value 16), and the location dependency (with a value 1) of blending mode 0 of the intra coding mode 2. Similarly, the blending mode index (with a value 34), weight (with a value 11), and the location dependency (with a value 1) of blending mode 1 of the intra coding mode 1 may correspond to, respectively, the blending mode index (with a value 52), weight (with a value 10), and the location dependency (with a value 1) of blending mode 1 of the intra coding mode 2.

The two intra coding modes, for which the similarity metric is calculated, may have different quantities/numbers of blending modes. The two intra coding modes, for which the similarity metric is calculated, may have different quantities/numbers of blending modes, for example, if both intra coding modes in the example of FIG. 27 have equal quantity/number of blending modes. Intra coding mode 1 may have N blending modes, and intra coding mode 2 may have M blending modes, where $M \neq N$. Intra coding mode 1 may be a DIMD mode with 5 blending modes and intra coding 2 may be a TIMD mode with 3 blending modes. The similarity metric may be determined/calculated, for example, based on blending modes that have one-to-one correspondence. For example, the first min (M, N) blending modes in the two ordered intra coding modes may be used, and the correspondence may be built between i-th blending mode of the intra coding mode 1 and the i-th blending mode of the intra coding mode 2.

Referring back to FIG. 26, at step 2606, the difference (including an absolute difference) between the indices of the first blending mode (mode 0) of the two ordered blending modes, denoted as $Diff_{Mode0}$, may be determined/calculated. This difference (including an absolute difference) between the indices of the first blending mode (mode 0) of the two ordered blending modes, denoted as $Diff_{Mode0}$, may be compared to a threshold $Th_{Mode0}$. In the example shown in FIG. 27, $Diff_{Mode0} = |51-7|$. There is no similarity between intra coding mode 1 and intra coding mode 2, for example, if the difference $Diff_{Mode0}$ is higher than the threshold $Th_{Mode0}$. The similarity level may be assigned a value 0 at step 2608, for example, if the difference $Diff_{Mode0}$ is higher than the threshold $Th_{Mode0}$. Otherwise, the flowchart 2600 may proceed to step 2610 and the similarity metric level may be increased.

At step 2610, the difference (including an absolute difference) between the indices of the second blending mode (mode 1) of the two ordered blending modes, denoted as $Diff_{Mode1}$, may be calculated and compared to another threshold $Th_{Mode1}$. In the example shown in FIG. 27, $Diff_{Mode1} = |34-52|$. Further comparison may be performed based on other parameter values of the first blending modes (mode 0), for example, if the difference $Diff_{Mode1}$ is higher than the threshold $Th_{Mode1}$. In the example shown in FIG. 26, the difference (including an absolute difference) between the blending weights of the first mode (mode 1) of the two ordered blending modes, denoted as $Diff_{Weight0}$, may be calculated and compared to a threshold $Th_{Weight0}$ at step 2612. In the example shown in FIG. 27, $Diff_{Weight0} = |15-16|$. The similarity level may be assigned a value of 1, at step 2614, for example, if the difference $Diff_{Weight0}$ is higher than the threshold $Th_{Weight0}$.

The difference (including an absolute difference) between the location dependencies of the first blending mode (mode 0) of the two ordered blending modes, denoted as $Diff_{LD0}$, may be calculated and compared to a threshold $Th_{LD0}$ at step 2616, for example, if the difference $Diff_{Weight0}$ is no higher than the threshold $Th_{Weight0}$. The similarity level may be assigned a value of 2 at step 2618, for example, if the difference $Diff_{LD0}$ is higher than the threshold $Th_{LD0}$. Otherwise, the similarity level may be assigned a value of 3 at step 2620. A higher similarity level may indicate that the two intra coding modes are more similar to each other.

Steps 2612-2620 may be repeated for other blending modes, (e.g., mode indices of the third mode (mode 2) of the two intra coding modes and the weight 2714 and location dependency 2716 of the second mode (mode 1)) until a similarity level is determined, for example, if, at step 2610, the difference $Diff_{Mode1}$ is no higher than the threshold $Th_{Mode1}$. A process of calculating the similarity metric values (similarity levels) may be summarized, for example, as follows:

Step 1: the difference between the indices of the X-th blending modes of the two intra coding mode may be calculated and compared to a threshold $Th_{ModeX}$. The process may continue to step 2, for example, if the difference is higher than the threshold. Otherwise, step 1 may be repeated for the next blending mode (X+1) if exists, and the similarity level may be increased by n1. n1 may be a natural quantity/number, such as 3, 4, 5, 6, and so on. The process may be stopped, for example, if the last blending mode that has a correspondence between the two intra coding modes is reached,

Step 2: the difference between the (X - 1)-th blending weights may be compared to a threshold $Th_{Weight(X-1)}$. The similarity level may be assigned, and the process may be stopped, for example, if the difference is higher than the threshold. Otherwise, the process may continue to step 3, and the similarity level may be increased by n2. n2 may be any natural quantity/number such as 1, 2, 3, and so on. n2 and n1 may be different and n1 > n2. n1 and n2 may be the same.

Step 3: the difference between the (X - 1)-th location dependency may be compared to a threshold $Th_{LD(X-1)}$. The similarity level may be assigned, and the process may be stopped, for example, if the difference is higher than the threshold. Otherwise, the similarity level may be increased by n3, and the process may be stopped. n3 may be any natural quantity/number such as 1, 2, 3, and so on. n3 may be different from n2 or n1 and n1 > n3. n3 and n2 may be the same, but different from n1. In some instances, n1, n2, and n3 may be the same.

The threshold values may be adapted to the type of the data, and to the ranking of the blending mode in the list of blending modes for an intra coding mode. Two blending modes may be considered similar if the difference between their mode indices is lower than 3. Also, the thresholds may be reduced as the priority of the blending mode decreases (e.g., $Th_{ModeX-1} < Th_{ModeX}$). Furthermore, the thresholds may vary depending on the mode. The thresholds for TIMD blending modes may be higher than the corresponding thresholds for DIMD blending modes.

The mode derivation parameters may include blending mode index, blending weight, and location dependency. Fewer or more parameters may be included in the mode derivation parameters and may be used to determine the similarity metric. Further, the technologies presented herein may also be used for (e.g., applied to) other types of intra coding modes, for example, if the intra coding modes are described to be DIMD-based and/or TIMD-based modes.

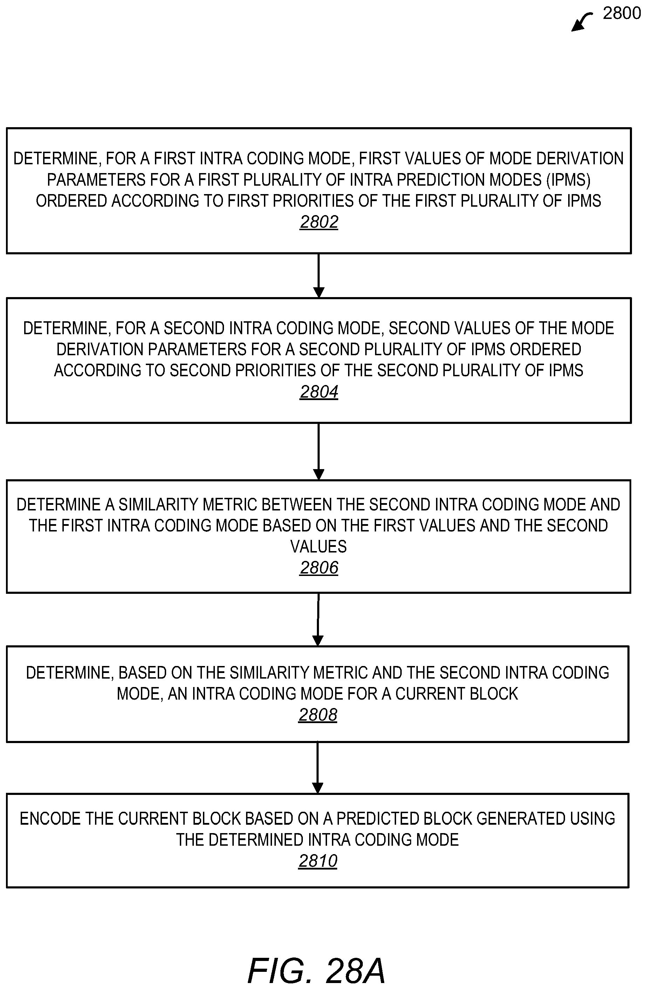

FIG. 28A shows an example method for evaluating similarities between two intra coding sub-modes for increasing the diversity of predictors. More specifically, FIG. 28A shows a flowchart 2800 of an example method for evaluating similarities between two intra coding sub-modes for increasing the diversity of predictors. The operations of the flowchart 2800 may be implemented and/or performed by a an encoder (e.g., encoder 114), an example computer system 2900 in FIG. 29, and/or an example computing device 3030 in FIG. 30. Steps of the example method of FIG. 28A may be omitted, performed in other orders, and/or otherwise modified, and/or one or more additional steps may be added.

At step 2802, the flowchart 2800 may comprise/involve determining, for a first intra coding mode, first values of mode derivation parameters for a first plurality intra prediction modes (IPMs) (blending modes). At step 2802, the flowchart 2800 may comprise/involve determining, for a first intra coding mode, first values of mode derivation parameters for a first plurality intra prediction modes (IPMs) (blending modes) ordered according to first priorities of the first plurality of IPMs. At step 2804, the flowchart 2800 may comprise/involve determining, for a second intra coding mode, second values of the mode derivation parameters for a second plurality of IPMs. At step 2804, the flowchart 2800 may comprise/involve determining, for a second intra coding mode, second values of the mode derivation parameters for a second plurality of IPMs ordered according to second priorities of the second plurality of IPMs. FIG. 27 shows an example of the first values and the second values.

Each of the first intra coding mode and the second intra coding mode may be a DIMD-based intra coding mode. Each of the first intra coding mode and the second intra coding mode may be a TIMD-based intra coding mode. The first intra coding mode may be a DIMD-based intra coding mode, and the second intra coding mode may be a TIMD-based intra coding mode or vice versa.

The first plurality of IPMs and the second plurality of IPMs may respectively be ordered in a descending order of the associated priorities. The first priorities of the first plurality of IPMs may be determined, for example, based on respective amplitudes of the first plurality of IPMs in a first HoG (HoG or MHoG). The first priorities of the first plurality of IPMs may be determined, for example, based on respective amplitudes of the first plurality of IPMs in a second HoG.

The first parameter of the mode derivation parameters for an IPM may be an IPM index of the IPM, and the second parameter may be a weight of the IPM. The mode derivation parameters may further include a third parameter which can be location dependency of the first IPM. The mode derivation parameters for each IPM may be further ordered according to a pre-determined order, such as based on the impact of the parameters. The mode derivation parameters may be ordered as IPM index, weights, and location dependency.

At step 2806, flowchart 2800 may comprise/involve determining a similarity metric between the second intra coding mode and the first intra coding mode. The similarity metric between the second intra coding mode and the first intra coding mode may be determined, for example, based on the first values and the second values. Determining the similarity metric may be performed, for example, by determining a first difference (e.g., $Diff_{Mode0}$) between a value (e.g., 51 in FIG. 27), from the first values, of a first parameter (e.g., mode index) in the mode derivation parameters for a first IPM (e.g., mode 0) of the first plurality of ordered IPMs, and a value (e.g., 7 in FIG. 27), from the second values, of the first parameter for a first IPM (e.g., mode 0) of the second plurality of ordered IPMs. The similarity metric may be set to a first similarity value (e.g., 0), for example, if the first difference is higher than a first threshold (e.g., $Th_{Mode0}$).

A second difference (e.g., $Diff_{Mode1}$) may be determined between a value (e.g., 34 in FIG. 27), from the first values, of the first parameter for the second IPM (e.g., mode 1 in FIG. 27) of the first plurality of ordered IPMs, and a value (e.g., 52 in FIG. 27), from the second values, of the first parameter for the second IPM of the second plurality of ordered IPMs, for example, if the first difference is no higher than the first threshold (e.g., (e.g., $Th_{Mode0}$). A third difference (e.g., $Diff_{Weight0}$) may be determined between: a value (e.g., 15 in FIG. 27), from the first values, of a second parameter (e.g., weights) for the first IPM (e.g., mode 0 in FIG. 27) of the first plurality of ordered IPMs, and a value (e.g., 16 in FIG. 27), from the second values, of the second parameter for the first IPM of the second plurality of ordered IPMs, for example, if the second difference is higher than a second threshold (e.g., $Th_{Mode1}$). The similarity metric may be set to a second similarity value (e.g., 1) higher than the first similarity value, for example, if the third difference is higher than a third threshold (e.g., $Th_{Weight0}$).

A fourth difference (e.g., $Diff_{LD0}$) may be determined between: a value (e.g., 0 in FIG. 27), from the first values, of a third parameter (e.g., location dependency in FIG. 27) for the first IPM (e.g., mode 0 in FIG. 27) of the first plurality of ordered IPMs, and a value (e.g., 1 in FIG. 27), from the second values, of the third parameter for the first IPM of the second plurality of ordered IPMs, for example, if the third difference is no higher than the third threshold. The similarity metric may be set to a third similarity value (e.g., 2) higher than the second similarity value, for example, if the fourth difference is higher than a fourth threshold (e.g., $Th_{LD0}$). The similarity metric may be set to a fourth similarity value (e.g., 3) higher than the third similarity value, for example, if the fourth difference is no higher than the fourth threshold (e.g., $Th_{LD0}$).

At step 2808, flowchart 2800 may comprise/involve determining an intra coding mode for a current block. At step 2808, flowchart 2800 may comprise/involve determining, based on the similarity metric and the second intra coding mode, an intra coding mode for a current block. The second intra coding mode may be selected instead of the first intra coding mode for the current block. An indication of the second intra coding mode being selected instead of the first intra coding mode for the current block may be coded (e.g. encoded) in a bitstream. An indication of the second intra coding mode being selected instead of the first intra coding mode for the current block may be obtained from the bitstream, for example, by a coder (e.g., decoder). Determining the intra coding mode for a current block may include comparing the similarity metric with a similarity threshold. The intra coding code for the current block may be determined to be the second intra coding mode, for example, if the similarity metric is no higher than the similarity threshold. The second intra coding mode may remain to be the intra coding mode of the current block, for example, if the first intra coding mode and the second intra coding mode are not similar.

The intra coding mode for the current block may be determined to be a third intra coding mode that is modified based on the second intra coding mode or a mode different from the second intra coding mode, for example, if the similarity metric is higher than the similarity threshold. The intra coding mode used to code the current block may not be similar to the first intra coding mode, and the bit(s) used to code the flag distinguishing the first and second intra coding modes may not be wasted, thereby increasing the coding efficiency.

At step 2810, flowchart 2800 may involve encoding the current block based on a predicted block generated using the determined intra coding mode. Encoding the current block based on the predicted block may include an encoder (e.g., encoder 114) encoding, in a bitstream, a prediction error based on the predicted block and the current block.

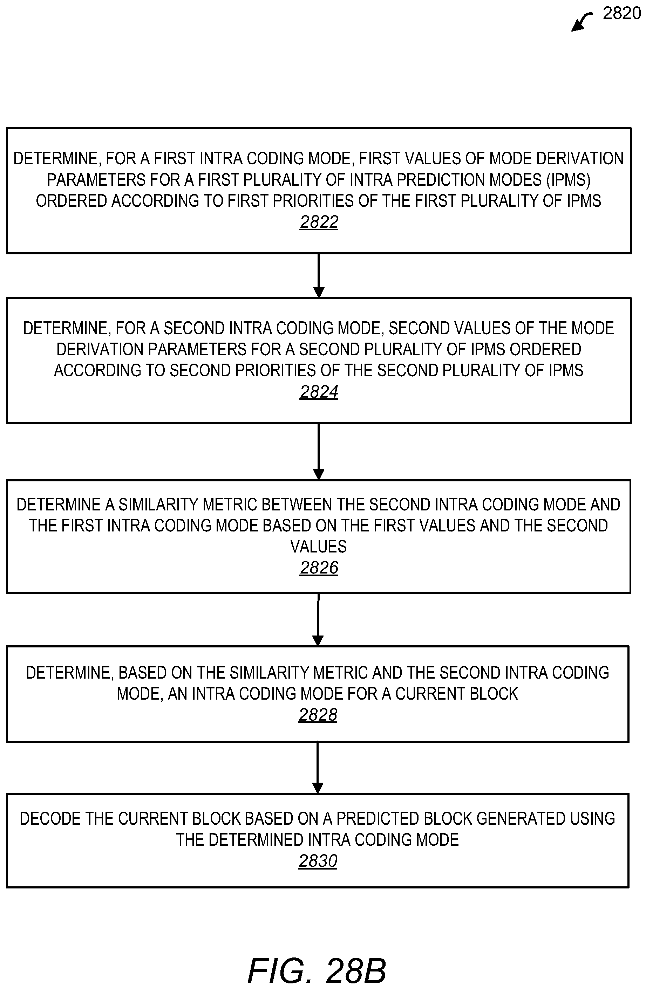

FIG. 28B shows an example method for evaluating similarities between two intra coding sub-modes for increasing the diversity of predictors. More specifically, FIG. 28B shows a flowchart of an example process 2820 for evaluating similarities between two intra coding sub-modes for increasing the diversity of predictors. The operations of the flowchart 2820 may be implemented and/or performed by a an decoder (e.g., decoder 120), an example computer system 2900 in FIG. 29, and/or an example computing device 3030 in FIG. 30. Steps of the example method of FIG. 28B may be omitted, performed in other orders, and/or otherwise modified, and/or one or more additional steps may be added.

At step 2822, the flowchart 2820 may comprise/involve determining, for a first intra coding mode, first values of mode derivation parameters for a first plurality intra prediction modes (IPMs) (blending modes). At step 2822, the flowchart 2820 may comprise/involve determining, for a first intra coding mode, first values of mode derivation parameters for a first plurality intra prediction modes (IPMs) (blending modes) ordered according to first priorities of the first plurality of IPMs. At step 2824, the flowchart 2820 may comprise/involve determining, for a second intra coding mode, second values of the mode derivation parameters for a second plurality of IPMs. At step 2824, the flowchart 2820 may comprise/involve determining, for a second intra coding mode, second values of the mode derivation parameters for a second plurality of IPMs ordered according to second priorities of the second plurality of IPMs. FIG. 27 shows an example of the first values and the second values.

Each of the first intra coding mode and the second intra coding mode may be a DIMD-based intra coding mode. Each of the first intra coding mode and the second intra coding mode may be a TIMD-based intra coding mode. The first intra coding mode may be a DIMD-based intra coding mode, and the second intra coding mode may be a TIMD-based intra coding mode or vice versa.

The first plurality of IPMs and the second plurality of IPMs may respectively be ordered in a descending order of the associated priorities. The first priorities of the first plurality of IPMs may be determined, for example, based on respective amplitudes of the first plurality of IPMs in a first HoG (HoG or MHoG). The first priorities of the first plurality of IPMs may be determined, for example, based on respective amplitudes of the first plurality of IPMs in a second HoG.

The first parameter of the mode derivation parameters for an IPM may be an IPM index of the IPM, and the second parameter may be a weight of the IPM. The mode derivation parameters may further include a third parameter which can be location dependency of the first IPM. The mode derivation parameters for each IPM may be further ordered according to a pre-determined order, such as based on the impact of the parameters. The mode derivation parameters may be ordered as IPM index, weights, and location dependency.

At step 2826, flowchart 2820 may comprise/involve determining a similarity metric between the second intra coding mode and the first intra coding mode. The similarity metric between the second intra coding mode and the first intra coding mode may be determined, for example, based on the first values and the second values. Determining the similarity metric may be performed, for example, by determining a first difference (e.g., $\text{Diff}_{Mode0}$) between a value (e.g., 51 in FIG. 27), from the first values, of a first parameter (e.g., mode index) in the mode derivation parameters for a first IPM (e.g., mode 0) of the first plurality of ordered IPMs, and a value (e.g., 7 in FIG. 27), from the second values, of the first parameter for a first IPM (e.g., mode 0) of the second plurality of ordered IPMs. The similarity metric may be set to a first similarity value (e.g., 0), for example, if the first difference is higher than a first threshold (e.g., $\text{Th}_{Mode0}$).

A second difference (e.g., $\text{Diff}_{Mode1}$) may be determined between a value (e.g., 34 in FIG. 27), from the first values, of the first parameter for the second IPM (e.g., mode 1 in FIG. 27) of the first plurality of ordered IPMs, and a value (e.g., 52 in FIG. 27), from the econd values, of the first parameter for the second IPM of the second plurality of ordered IPMs, for example, if the first difference is no higher than the first threshold (e.g., (e.g., $\text{Th}_{Mode0}$). A third difference (e.g., $\text{Diff}_{Weight0}$) may be determined between: a value (e.g., 15 in FIG. 27), from the first values, of a second parameter (e.g., weights) for the first IPM (e.g., mode 0 in FIG. 27) of the first plurality of ordered IPMs, and a value (e.g., 16 in FIG. 27), from the second values, of the second parameter for the first IPM of the second plurality of ordered IPMs, for example, if the second difference is higher than a second threshold (e.g., $\text{Th}_{Mode1}$). The similarity metric may be set to a second similarity value (e.g., 1) higher than the first similarity value, for example, if the third difference is higher than a third threshold (e.g., $\text{Th}_{Weight0}$).

A fourth difference (e.g., $\text{Diff}_{LD0}$) may be determined between: a value (e.g., 0 in FIG. 27), from the first values, of a third parameter (e.g., location dependency in FIG. 27) for the first IPM (e.g., mode 0 in FIG. 27) of the first plurality of ordered IPMs, and a value (e.g., 1 in FIG. 27), from the second values, of the third parameter for the first IPM of the second plurality of ordered IPMs, for example, if the third difference is no higher than the third threshold. The similarity metric may be set to a third similarity value (e.g., 2) higher than the second similarity value, for example, if the fourth difference is higher than a fourth threshold (e.g., $\text{Th}_{LD0}$). The similarity metric may be set to a fourth similarity value (e.g., 3) higher than the third similarity value, for example, if the fourth difference is no higher than the fourth threshold (e.g., $\text{Th}_{LD0}$).

At step 2828, flowchart 2820 may comprise/involve determining an intra coding mode for a current block. At step 2828, flowchart 2820 may comprise/involve determining, based on the similarity metric and the second intra coding mode, an intra coding mode for a current block. The second intra coding mode may be selected instead of the first intra coding mode for the current block. An indication of the second intra coding mode being selected instead of the first intra coding mode for the current block may be coded (e.g. encoded) in a bitstream. An indication of the second intra coding mode being selected instead of the first intra coding mode for the current block may be obtained from the bitstream, for example, by a coder (e.g., decoder). Determining the intra coding mode for a current block may include comparing the similarity metric with a similarity threshold. The intra coding code for the current block may be determined to be the second intra coding mode, for example, if the similarity metric is no higher than the similarity threshold. The second intra coding mode may remain to be the intra coding mode of the current block, for example, if the first intra coding mode and the second intra coding mode are not similar.

The intra coding mode for the current block may be determined to be a third intra coding mode that is modified based on the second intra coding mode or a mode different from the second intra coding mode, for example, if the similarity metric is higher than the similarity threshold. The intra coding mode used to code the current block may not be similar to the first intra coding mode, and the bit(s) used to code the flag distinguishing the first and second intra coding modes may not be wasted, thereby increasing the coding efficiency.

At step 2830, flowchart 2820 may involve decoding the current block based on a predicted block generated using the determined intra coding mode. Decoding the current block based on the predicted block may include an decoder (e.g., decoder 120) decoding, in a bitstream, a prediction error based on the predicted block and the current block.

FIG. 29 shows an example computer system in which examples of the present disclosure may be implemented. For example, the example computer system 2900 shown in FIG. 29 may implement one or more of the methods described herein. For example, various devices and/or systems described herein (e.g., in FIGS. 1, 2, and 3) may be implemented in the form of one or more computer systems 2900. Furthermore, each of the steps of the flowcharts depicted in this disclosure may be implemented on one or more computer systems 2900.

The computer system 2900 may comprise one or more processors, such as a processor 2904. The processor 2904 may be a special purpose processor, a general purpose processor, a microprocessor, and/or a digital signal processor. The processor 2904 may be connected to a communication infrastructure 2902 (for example, a bus or network). The computer system 2900 may also comprise a main memory 2906 (e.g., a random access memory (RAM)), and/or a secondary memory 2908.

The secondary memory 2908 may comprise a hard disk drive 2910 and/or a removable storage drive 2912 (e.g., a magnetic tape drive, an optical disk drive, and/or the like). The removable storage drive 2912 may read from and/or write to a removable storage unit 2916. The removable storage unit 2916 may comprise a magnetic tape, optical disk, and/or the like. The removable storage unit 2916 may be read by and/or may be written to the removable storage drive 2912. The removable storage unit 2916 may comprise a computer usable storage medium having stored therein computer software and/or data.

The secondary memory 2908 may comprise other similar means for allowing computer programs or other instructions to be loaded into the computer system 2900. Such means may include a removable storage unit 2918 and/or an interface 2914. Examples of such means may comprise a program cartridge and/or cartridge interface (such as in video game devices), a removable memory chip (such as an erasable programmable read-only memory (EPROM) or a programmable read-only memory (PROM)) and associated socket, a thumb drive and USB port, and/or other removable storage units 2918 and interfaces 2914 which may allow software and/or data to be transferred from the removable storage unit 2918 to the computer system 2900.

The computer system 2900 may also comprise a communications interface 2920. The communications interface 2920 may allow software and data to be transferred between the computer system 2900 and external devices. Examples of the communications interface 2920 may include a modem, a network interface (e.g., an Ethernet card), a communications port, etc. Software and/or data transferred via the communications interface 2920 may be in the form of signals which may be electronic, electromagnetic, optical, and/or other signals capable of being received by the communications interface 2920. The signals may be provided to the communications interface 2920 via a communications path 2922. The communications path 2922 may carry signals and may be implemented using wire or cable, fiber optics, a phone line, a cellular phone link, an RF link, and/or any other communications channel(s).

A computer program medium and/or a computer readable medium may be used to refer to tangible storage media, such as removable storage units 2916 and 2918 or a hard disk installed in the hard disk drive 2910. The computer program products may be means for providing software to the computer system 2900. The computer programs (which may also be called computer control logic) may be stored in the main memory 2906 and/or the secondary memory 2908. The computer programs may be received via the communications interface 2920. Such computer programs, when executed, may enable the computer system 2900 to implement the present disclosure as discussed herein. In particular, the computer programs, when executed, may enable the processor 2904 to implement the processes of the present disclosure, such as any of the methods described herein. Accordingly, such computer programs may represent controllers of the computer system 2900.

FIG. 30 shows example elements of a computing device that may be used to implement any of the various devices described herein, including, for example, a source device (e.g., 102), an encoder (e.g., 200), a destination device (e.g., 106), a decoder (e.g., 300), and/or any computing device described herein. The computing device 3030 may include one or more processors 3031, which may execute instructions stored in the random-access memory (RAM) 3033, the removable media 3034 (such as a Universal Serial Bus (USB) drive, compact disk (CD) or digital versatile disk (DVD), or floppy disk drive), or any other desired storage medium. Instructions may also be stored in an attached (or internal) hard drive 3035. The computing device 3030 may also include a security processor (not shown), which may execute instructions of one or more computer programs to monitor the processes executing on the processor 3031 and any process that requests access to any hardware and/or software components of the computing device 3030 (e.g., ROM 3032, RAM 3033, the removable media 3034, the hard drive 3035, the device controller 3037, a network interface 3039, a GPS 3041, a Bluetooth interface 3042, a WiFi interface 3043, etc.). The computing device 3030 may include one or more output devices, such as the display 3036 (e.g., a screen, a display device, a monitor, a television, etc.), and may include one or more output device controllers 3037, such as a video processor. There may also be one or more user input devices 3038, such as a remote control, keyboard, mouse, touch screen, microphone, etc. The computing device 3030 may also include one or more network interfaces, such as a network interface 3039, which may be a wired interface, a wireless interface, or a combination of the two. The network interface 3039 may provide an interface for the computing device 3030 to communicate with a network 3040 (e.g., a RAN, or any other network). The network interface 3039 may include a modem (e.g., a cable modem), and the external network 3040 may include communication links, an external network, an in-home network, a provider's wireless, coaxial, fiber, or hybrid fiber/coaxial distribution system (e.g., a DOCSIS network), or any other desired network. Additionally, the computing device 3030 may include a location-detecting device, such as a global positioning system (GPS) microprocessor 3041, which may be configured to receive and process global positioning signals and determine, with possible assistance from an external server and antenna, a geographic position of the computing device 3030.

The example in FIG. 30 may be a hardware configuration, although the components shown may be implemented as software as well. Modifications may be made to add, remove, combine, divide, etc. components of the computing device 3030 as desired. Additionally, the components may be implemented using basic computing devices and components, and the same components (e.g., processor 3031, ROM storage 3032, display 3036, etc.) may be used to implement any of the other computing devices and components described herein. For example, the various components described herein may be implemented using computing devices having components such as a processor executing computer-executable instructions stored on a computer-readable medium, as shown in FIG. 30. Some or all of the entities described herein may be software based, and may co-exist in a common physical platform (e.g., a requesting entity may be a separate software process and program from a dependent entity, both of which may be executed as software on a common computing device).

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1A. A method comprising: determining, by a computing device, a similarity metric, between a first intra coding mode and a second intra coding mode, based on: first values of mode derivation parameters, associated with the first intra coding mode, for a first plurality of intra prediction modes (IPMs) ordered based on first priorities of the first plurality of IPMs; and second values of mode derivation parameters, associated with the second intra coding mode, for a second plurality of IPMs ordered based on second priorities of the second plurality of IPMs.

Clause 1B. The method of clause 1A, further comprising: determining, based on the similarity metric and the second intra coding mode, a third intra coding mode for a current block of content.

Clause 1C. The method of clause 1B, further comprising: decoding, based on a block generated using the determined third intra coding mode, the current block. Reference to clause 1 herein may refer to one or each of clause 1A, clause 1B, and clause 1C.

Clause 2. The method of clause 1, wherein: the determining the similarity metric comprises: determining a first difference between: a value, from the first values, of a first parameter in the mode derivation parameters for a first IPM of the first plurality of ordered IPMs; and a value, from the second values, of the first parameter for a first IPM of the second plurality of ordered IPMs; and determining, based on the first difference being higher than a first threshold, the similarity metric to be a first similarity value.

Clause 3. The method of any one of clauses 1-2, further comprising: determining that the second intra coding mode is selected instead of the first intra coding mode for the current block.

Clause 4. The method of any one of clauses 1-3, wherein the determining the third intra coding mode further comprises: determining, based on the similarity metric being equal to or below a similarity threshold, the third intra coding mode to be the second intra coding mode.

Clause 5. The method of any one of clauses 1-4, wherein the determining the third intra coding mode further comprises: determining, based on the similarity metric being higher than a similarity threshold, the third intra coding mode to be a fourth intra coding mode modified: based on the second intra coding mode; or different from the second intra coding mode.

Clause 6. The method of any one of clauses 1-5, further comprising: obtaining, from a bitstream, an indication of the second intra coding mode being selected instead of the first intra coding mode for the current block.

Clause 7. The method of any one of clauses 1-6, wherein the decoding the current block comprises: reconstructing the block based on the block and a prediction error decoded from a bitstream.

Clause 8. The method of any one of clauses 1-7, further comprising: ordering the first plurality of IPMs in a descending order of the first priorities; ordering the second plurality of IPMs in a descending order of the second priorities; and ordering the mode derivation parameters for each IPM, of the first plurality of IPMs and the second plurality of IPMs, based on a pre-determined order.

Clause 9. The method of any one of clauses 1-8, further comprising: determining the first priorities of the first plurality of IPMs based on respective amplitudes of the first plurality of IPMs in a first histogram of gradients (HoG); and determining the first priorities of the first plurality of IPMs based on respective amplitudes of the first plurality of IPMs in a second HoG.

Clause 10. The method of any one of clauses 1-9, wherein each of the first intra coding mode and the second intra coding mode is a DIMD-based intra coding mode.

Clause 11. The method of any one of clauses 1-10, wherein each of the first intra coding mode and the second intra coding mode is a TIMD-based intra coding mode.

Clause 12. The method of any one of clauses 1-11, wherein the first intra coding mode is a DIMD-based intra coding mode and the second intra coding mode is a TIMD-based intra coding mode.

Clause 13A. A method comprising: determining, by a computing device and based on first values of mode derivation parameters for a first plurality of intra prediction modes (IPMs) and second values of the mode derivation parameters for a second plurality of IPMs, a similarity metric between a first intra coding mode and a second intra coding mode, wherein the determining the similarity metric comprises: determining a first difference between: a value, from the first values, of a first parameter in the mode derivation parameters for a first IPM of the first plurality of IPMs; and a value, from the second values, of the first parameter for a first IPM of the second plurality of IPMs; and determining, based on the first difference being higher than a first threshold, the similarity metric to be a first similarity value.

Clause 13B. The method of clause 13A, further comprising: determining, based on the similarity metric and the second intra coding mode, a third intra coding mode for a current block of content.

Clause 13C. The method of clause 13B, further comprising: decoding, based on a block generated using the determined third intra coding mode, the current block. Reference to clause 13 herein may refer to one or each of clause 13A, clause 13B, and clause 13C.

Clause 14. The method of clause 13, further comprising: ordering the first plurality of IPMs based on first priorities of the first plurality of IPMs; ordering the second plurality of IPMs based on second priorities of the second plurality of IPMs; and wherein: the first IPM in the first plurality of ordered IPMs has a same relative position as the first IPM in the second plurality of ordered IPMs.

Clause 15. The method of any one of clauses 13-14, wherein the determining the similarity metric further comprises: determining, based on the first difference being equal to or below the first threshold, a second difference between: a value, from the first values, of the first parameter for the second IPM of the first plurality of IPMs, and a value, from the second values, of the first parameter for the second IPM of the second plurality of IPMs; determining, based on the second difference being higher than a second threshold, a third difference between: a value, from the first values, of a second parameter for the first IPM of the first plurality of IPMs, and a value, from the second values, of the second parameter for the first IPM of the second plurality of IPMs; and determining, based on the third difference being higher than a third threshold, the similarity metric to be a second similarity value higher than the first similarity value.

Clause 16. The method of any one of clauses 13-15, wherein: the first parameter for the first IPM of the first plurality of IPMs is an IPM index of the first IPM of the first plurality of IPMs; and the second parameter for the first IPM of the first plurality of IPMs is a weight of the first IPM of the first plurality of IPMs.

Clause 17. The method of clause 15, wherein the determining the similarity metric further comprises: determining, based on the third difference being equal to or below the third threshold, a fourth difference between: a value, from the first values, of a third parameter for the first IPM of the first plurality of IPMs, and a value, from the second values, of the third parameter for the first IPM of the second plurality of IPMs; determining, based on the fourth difference being higher than a fourth threshold, the similarity metric to be a third similarity value higher than the second similarity value; and determining, based on the fourth difference being equal to or below the fourth threshold, the similarity metric to be a fourth similarity value higher than the third similarity value.

Clause 18. The method of clause 17, wherein the third parameter is a location dependency of the first IPM.

Clause 19A. A method comprising: determining, by a computing device and for a first intra coding mode, first values of mode derivation parameters for a first plurality of intra prediction modes (IPMs) ordered based on first priorities of the first plurality of IPMs.

Clause 19B. The method of clause 19A, further comprising: determining, for a second intra coding mode, second values of the mode derivation parameters for a second plurality of IPMs ordered based on second priorities of the second plurality of IPMs.

Clause 19C. The method of clause 19B, further comprising: determining, based on the first values and the second values, a similarity metric between the first intra coding mode and the second intra coding mode.

Clause 19D. The method of clause 19C, further comprising: determining, based on the similarity metric and the second intra coding mode, a third intra coding mode for a current block of content.

Clause 19E. The method of clause 19D, further comprising: encoding, based on a block generated using the determined third intra coding mode, the current block. Reference to clause 19 herein may refer to one or each of clause 19A, clause 19B, clause 19C, clause 19D, and clause 19E.

Clause 20. The method of clause 19, further comprising: encoding, in a bitstream, an indication of the second intra coding mode being selected over the first intra coding mode for the current block.

Clause 21. The method of any one of clauses 19-20, wherein the encoding the current block comprises: encoding, in a bitstream, and based on the block and the block, a prediction error.

Clause 22. The method of any one of clauses 19-21, wherein each of the first intra coding mode and the second intra coding mode is a DIMD-based intra coding mode.

Clause 23. The method of any one of clauses 19-22, wherein each of the first intra coding mode and the second intra coding mode is a TIMD-based intra coding mode.

Clause 24. The method of any one of clauses 19-23, wherein the first intra coding mode is a DIMD-based intra coding mode and the second intra coding mode is a TIMD-based intra coding mode.

Clause 25A. A method comprising: determining, for a first intra coding mode, first values of mode derivation parameters for a first plurality of intra prediction modes (IPMs) ordered according to first priorities of the first plurality of IPMs.

Clause 25B. The method of clause 25A, further comprising: determining, for a second intra coding mode, second values of the mode derivation parameters for a second plurality of IPMs ordered according to second priorities of the second plurality of IPMs;

Clause 25C. The method of clause 25B, further comprising: determining a similarity metric between the second intra coding mode and the first intra coding mode based on the first values and the second values.

Clause 25D. The method of clause 25C, further comprising: determining, based on the similarity metric and the second intra coding mode, an intra coding mode for a current block.

Clause 25E. The method of clause 25D, further comprising: coding the current block based on a predicted block generated using the determined intra coding mode. Reference to clause 25 herein may refer to one or each of clause 25A, clause 25B, clause 25C, clause 25D, and clause 25E.

Clause 26. The method of clause 25, wherein the first plurality of IPMs and the second plurality of IPMs are respectively ordered in a descending order of the first priorities and the second priorities, and wherein the mode derivation parameters for each IPM are ordered according to a pre-determined order.

Clause 27. The method of any one of clauses 25-26, wherein the determining the similarity metric comprises: determining a first difference between: a value, from the first values, of a first parameter in the mode derivation parameters for a first IPM of the first plurality of ordered IPMs, and a value, from the second values, of the first parameter for a first IPM of the second plurality of ordered IPMs; and determining, based on the first difference being higher than a first threshold, the similarity metric to be a first similarity value.

Clause 28. The method of clause 27, wherein the first IPM in the first plurality of ordered IPMs has a same relative position as the first IPM in the second plurality of ordered IPMs.

Clause 29. The method of clause 27, wherein the determining the similarity metric further comprises: determining, based on the first difference being no higher than the first threshold, a second difference between: a value, from the first values, of the first parameter for the second IPM of the first plurality of ordered IPMs, and a value, from the second values, of the first parameter for the second IPM of the second plurality of ordered IPMs; determining, based on the second difference being higher than a second threshold, a third difference between: a value, from the first values, of a second parameter for the first IPM of the first plurality of ordered IPMs, and a value, from the second values, of the second parameter for the first IPM of the second plurality of ordered IPMs; and determining, based on the third difference being higher than a third threshold, the similarity metric to be a second similarity value higher than the first similarity value.

Clause 30. The method of clause 29, wherein the first parameter for an IPM is an IPM index of the IPM and the second parameter is a weight of the IPM.

Clause 31. The method of clause 30, wherein the determining the similarity metric further comprises: determining, based on the third difference being no higher than the third threshold, a fourth difference between: a value, from the first values, of a third parameter for the first IPM of the first plurality of ordered IPMs, and a value, from the second values, of the third parameter for the first IPM of the second plurality of ordered IPMs; determining, based on the fourth difference being higher than a fourth threshold, the similarity metric to be a third similarity value higher than the second similarity value; and determining, based on the fourth difference being no higher than the fourth threshold, the similarity metric to be a fourth similarity value higher than the third similarity value.

Clause 32. The method of clause 31, wherein the third parameter is a location dependency of the first IPM.

Clause 33. The method of any one of clauses 25-32, wherein the first priorities of the first plurality of IPMs are determined based on respective amplitudes of the first plurality of IPMs in a first histogram of gradients (HoG) and the first priorities of the first plurality of IPMs are determined based on respective amplitudes of the first plurality of IPMs in a second HoG.

Clause 34. The method of any one of clauses 25-33, wherein each of the first intra coding mode and the second intra coding mode is a DIMD-based intra coding mode.

Clause 35. The method of any one of clauses 25-34, wherein each of the first intra coding mode and the second intra coding mode is a TIMD-based intra coding mode.

Clause 36. The method of any one of clauses 25-35, wherein the first intra coding mode is a DIMD-based intra coding mode and the second intra coding mode is a TIMD-based intra coding mode.

Clause 37. The method of any one of clauses 25-36, further comprising: determining that the second intra coding mode is selected over the first intra coding mode for the current block.

Clause 38. The method of clause 37, wherein the determining, based on the similarity metric and the second intra coding mode, an intra coding mode for a current block comprises: comparing the similarity metric with a similarity threshold; and based on the similarity metric being no higher than the similarity threshold, determining the intra coding code to be the second intra coding mode.

Clause 39. The method of clause 38, wherein the determining, based on the similarity metric and the second intra coding mode, an intra coding mode for a current block further comprises: based on the similarity metric being higher than the similarity threshold, determining the intra coding mode to be a third intra coding mode modified based on the second intra coding mode or different from the second intra coding mode.

Clause 40. The method of clause 37, further comprising: encoding, in a bitstream, an indication of the second intra coding mode being selected over the first intra coding mode for the current block.

Clause 41. The method of any one of clauses 25-40, wherein the coding the block based on the predicted block generated using the determined intra coding mode comprises encoding, in a bitstream, a prediction error based on the predicted block and the block.

Clause 42. The method of clause 37, further comprising: obtaining, from a bitstream, an indication of the second intra coding mode being selected over the first intra coding mode for the current block.

Clause 43. The method of any one of clauses 25-42, wherein the coding the block based on the predicted block generated using the determined intra coding mode comprises reconstructing the block based on a prediction error decoded from a bitstream and the predicted block.

A computing device may perform a method comprising multiple operations. The computing device may comprise a decoder. The computing device may determine, by a computing device, a similarity metric, between a first intra coding mode and a second intra coding mode, based on: first values of mode derivation parameters, associated with the first intra coding mode, for a first plurality of intra prediction modes (IPMs) ordered based on first priorities of the first plurality of IPMs; and second values of mode derivation parameters, associated with the second intra coding mode, for a second plurality of IPMs ordered based on second priorities of the second plurality of IPMs. The computing device may determine, based on the similarity metric and the second intra coding mode, a third intra coding mode for a current block of content. The computing device may decode, based on a block generated using the determined third intra coding mode, the current block, wherein: the determining the similarity metric may comprise: determining a first difference between: a value, from the first values, of a first parameter in the mode derivation parameters for a first IPM of the first plurality of ordered IPMs; and a value, from the second values, of the first parameter for a first IPM of the second plurality of ordered IPMs; and determining, based on the first difference being higher than a first threshold, the similarity metric to be a first similarity value; determining that the second intra coding mode is selected instead of the first intra coding mode for the current block; wherein the determining the third intra coding mode further may comprise: determining, based on the similarity metric being equal to or below a similarity threshold, the third intra coding mode to be the second intra coding mode; wherein the determining the third intra coding mode may further comprise: determining, based on the similarity metric being higher than a similarity threshold, the third intra coding mode to be a fourth intra coding mode modified: based on the second intra coding mode; or different from the second intra coding mode. The computing device may obtain, from a bitstream, an indication of the second intra coding mode being selected instead of the first intra coding mode for the current block, wherein the decoding the current block may comprise: reconstructing the block based on the block and a prediction error decoded from a bitstream. The computing device may order the first plurality of IPMs in a descending order of the first priorities, may order the second plurality of IPMs in a descending order of the second priorities, and may order the mode derivation parameters for each IPM, of the first plurality of IPMs and the second plurality of IPMs, based on a pre-determined order. The computing device may determine the first priorities of the first plurality of IPMs based on respective amplitudes of the first plurality of IPMs in a first histogram of gradients (HoG), and may determine the first priorities of the first plurality of IPMs based on respective amplitudes of the first plurality of IPMs in a second HoG, wherein each of the first intra coding mode and the second intra coding mode may be a DIMD-based intra coding mode; wherein each of the first intra coding mode and the second intra coding mode may be a TIMD-based intra coding mode; wherein the first intra coding mode may be a DIMD-based intra coding mode and the second intra coding mode may be a TIMD-based intra coding mode. The computing device may comprise one or more processors and memory, storing instructions that, when executed by the one or more processors, perform the method described herein. A system may comprise the computing device configured to perform the described method, additional operations, and/or include additional elements; and a second computing device configured to encode the current block. A computer-readable medium may store instructions that, when executed, cause performance of the described method, additional operations, and/or include additional elements.

A computing device may perform a method comprising multiple operations. The computing device may comprise a decoder. The computing device may determine, based on first values of mode derivation parameters for a first plurality of intra prediction modes (IPMs) and second values of the mode derivation parameters for a second plurality of IPMs, a similarity metric between a first intra coding mode and a second intra coding mode, wherein the determining the similarity metric may comprise: determining a first difference between: a value, from the first values, of a first parameter in the mode derivation parameters for a first IPM of the first plurality of IPMs; and a value, from the second values, of the first parameter for a first IPM of the second plurality of IPMs; and determining, based on the first difference being higher than a first threshold, the similarity metric to be a first similarity value; may determine, based on the similarity metric and the second intra coding mode, a third intra coding mode for a current block of content; and may decode, based on a block generated using the determined third intra coding mode, the current block. The computing device may order the first plurality of IPMs based on first priorities of the first plurality of IPMs; may order the second plurality of IPMs based on second priorities of the second plurality of IPMs, wherein: the first IPM in the first plurality of ordered IPMs may have a same relative position as the first IPM in the second plurality of ordered IPMs; wherein the determining the similarity metric may further comprise: determining, based on the first difference being equal to or below the first threshold, a second difference between: a value, from the first values, of the first parameter for the second IPM of the first plurality of IPMs, and a value, from the second values, of the first parameter for the second IPM of the second plurality of IPMs; determining, based on the second difference being higher than a second threshold, a third difference between: a value, from the first values, of a second parameter for the first IPM of the first plurality of IPMs, and a value, from the second values, of the second parameter for the first IPM of the second plurality of IPMs; and determining, based on the third difference being higher than a third threshold, the similarity metric to be a second similarity value higher than the first similarity value; wherein: the first parameter for the first IPM of the first plurality of IPMs may be an IPM index of the first IPM of the first plurality of IPMs; and the second parameter for the first IPM of the first plurality of IPMs may be a weight of the first IPM of the first plurality of IPMs; wherein the determining the similarity metric may further comprise: determining, based on the third difference being equal to or below the third threshold, a fourth difference between: a value, from the first values, of a third parameter for the first IPM of the first plurality of IPMs, and a value, from the second values, of the third parameter for the first IPM of the second plurality of IPMs; determining, based on the fourth difference being higher than a fourth threshold, the similarity metric to be a third similarity value higher than the second similarity value; and determining, based on the fourth difference being equal to or below the fourth threshold, the similarity metric to be a fourth similarity value higher than the third similarity value; wherein the third parameter may be a location dependency of the first IPM. The computing device may comprise one or more processors and memory, storing instructions that, when executed by the one or more processors, perform the method described herein. A system may comprise the computing device configured to perform the described method, additional operations, and/or include additional elements; and a second computing device configured to encode the current block. A computer-readable medium may store instructions that, when executed, cause performance of the described method, additional operations, and/or include additional elements.

A computing device may perform a method comprising multiple operations. The computing device may comprise a coder. The computing device may determine, for a first intra coding mode, first values of mode derivation parameters for a first plurality of intra prediction modes (IPMs) ordered according to first priorities of the first plurality of IPMs; may determine, for a second intra coding mode, second values of the mode derivation parameters for a second plurality of IPMs ordered according to second priorities of the second plurality of IPMs; may determine a similarity metric between the second intra coding mode and the first intra coding mode based on the first values and the second values; may determine, based on the similarity metric and the second intra coding mode, an intra coding mode for a current block; may code the current block based on a predicted block generated using the determined intra coding mode, wherein the first plurality of IPMs and the second plurality of IPMs may be respectively ordered in a descending order of the first priorities and the second priorities, and wherein the mode derivation parameters for each IPM may be ordered according to a pre-determined order; wherein the determining the similarity metric may comprise: determining a first difference between: a value, from the first values, of a first parameter in the mode derivation parameters for a first IPM of the first plurality of ordered IPMs, and a value, from the second values, of the first parameter for a first IPM of the second plurality of ordered IPMs; and determining, based on the first difference being higher than a first threshold, the similarity metric to be a first similarity value; wherein the first IPM in the first plurality of ordered IPMs may have a same relative position as the first IPM in the second plurality of ordered IPMs; wherein the determining the similarity metric further may comprise: determining, based on the first difference being no higher than the first threshold, a second difference between: a value, from the first values, of the first parameter for the second IPM of the first plurality of ordered IPMs, and a value, from the second values, of the first parameter for the second IPM of the second plurality of ordered IPMs; determining, based on the second difference being higher than a second threshold, a third difference between: a value, from the first values, of a second parameter for the first IPM of the first plurality of ordered IPMs, and a value, from the second values, of the second parameter for the first IPM of the second plurality of ordered IPMs; and determining, based on the third difference being higher than a third threshold, the similarity metric to be a second similarity value higher than the first similarity value; wherein the first parameter for an IPM is an IPM index of the IPM and the second parameter may be a weight of the IPM; wherein the determining the similarity metric may further comprise: determining, based on the third difference being no higher than the third threshold, a fourth difference between: a value, from the first values, of a third parameter for the first IPM of the first plurality of ordered IPMs, and a value, from the second values, of the third parameter for the first IPM of the second plurality of ordered IPMs; determining, based on the fourth difference being higher than a fourth threshold, the similarity metric to be a third similarity value higher than the second similarity value; and determining, based on the fourth difference being no higher than the fourth threshold, the similarity metric to be a fourth similarity value higher than the third similarity value; wherein the third parameter may be a location dependency of the first IPM; wherein the first priorities of the first plurality of IPMs may be determined based on respective amplitudes of the first plurality of IPMs in a first histogram of gradients (HoG) and the first priorities of the first plurality of IPMs are determined based on respective amplitudes of the first plurality of IPMs in a second HoG; wherein each of the first intra coding mode and the second intra coding mode may be a DIMD-based intra coding mode; wherein each of the first intra coding mode and the second intra coding mode may be a TIMD-based intra coding mode; wherein the first intra coding mode may be a DIMD-based intra coding mode and the second intra coding mode is a TIMD-based intra coding mode. The computing device may further determine that the second intra coding mode is selected over the first intra coding mode for the current block, wherein the determining, based on the similarity metric and the second intra coding mode, an intra coding mode for a current block may comprise: comparing the similarity metric with a similarity threshold; and based on the similarity metric being no higher than the similarity threshold, determining the intra coding code to be the second intra coding mode; wherein the determining, based on the similarity metric and the second intra coding mode, an intra coding mode for a current block may further comprise: based on the similarity metric being higher than the similarity threshold, determining the intra coding mode to be a third intra coding mode modified based on the second intra coding mode or different from the second intra coding mode. The computing device may encode, in a bitstream, an indication of the second intra coding mode being selected over the first intra coding mode for the current block, wherein the coding the block based on the predicted block generated using the determined intra coding mode may comprise encoding, in a bitstream, a prediction error based on the predicted block and the block. The computing device may obtain, from a bitstream, an indication of the second intra coding mode being selected over the first intra coding mode for the current block, wherein the coding the block based on the predicted block generated using the determined intra coding mode may comprise reconstructing the block based on a prediction error decoded from a bitstream and the predicted block. The computing device may comprise one or more processors and memory, storing instructions that, when executed by the one or more processors, perform the method described herein. A system may comprise the computing device configured to perform the described method, additional operations, and/or include additional elements. A computer-readable medium may store instructions that, when executed, cause performance of the described method, additional operations, and/or include additional elements.

One or more examples herein may be described as a process which may be depicted as a flowchart, a flow diagram, a data flow diagram, a structure diagram, and/or a block diagram. Although a flowchart may describe operations as a sequential process, one or more of the operations may be performed in parallel or concurrently. The order of the operations shown may be re-arranged. A process may be terminated when its operations are completed, but could have additional steps not shown in a figure. A process may correspond to a method, a function, a procedure, a subroutine, a subprogram, etc. If a process corresponds to a function, its termination may correspond to a return of the function to the calling function or the main function.

Operations described herein may be implemented by hardware, software, firmware, middleware, microcode, hardware description languages, or any combination thereof. When implemented in software, firmware, middleware or microcode, the program code or code segments to perform the necessary tasks (e.g., a computer-program product) may be stored in a computer-readable or machine-readable medium. A processor(s) may perform the necessary tasks. Features of the disclosure may be implemented in hardware using, for example, hardware components such as application-specific integrated circuits (ASICs) and gate arrays. Implementation of a hardware state machine to perform the functions described herein will also be apparent to persons skilled in the art.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein. Computer-readable medium may comprise, but is not limited to, portable or non-portable storage devices, optical storage devices, and various other mediums capable of storing, containing, or carrying instruction(s) and/or data. A computer-readable medium may include a non-transitory medium in which data can be stored and that does not include carrier waves and/or transitory electronic signals propagating wirelessly or over wired connections. Examples of a non-transitory medium may include, but are not limited to, a magnetic disk or tape, optical storage media such as compact disk (CD) or digital versatile disk (DVD), flash memory, memory or memory devices. A computer-readable medium may have stored thereon code and/or machine-executable instructions that may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, or the like.

A non-transitory tangible computer readable media may comprise instructions executable by one or more processors configured to cause operations described herein. An article of manufacture may comprise a non-transitory tangible computer readable machine-accessible medium having instructions encoded thereon for enabling programmable hardware to cause a device (e.g., an encoder, a decoder, a transmitter, a receiver, and the like) to allow operations described herein. The device, or one or more devices such as in a system, may include one or more processors, memory, interfaces, and/or the like.

Communications described herein may be determined, generated, sent, and/or received using any quantity of messages, information elements, fields, parameters, values, indications, information, bits, and/or the like. While one or more examples may be described herein using any of the terms/phrases message, information element, field, parameter, value, indication, information, bit(s), and/or the like, one skilled in the art understands that such communications may be performed using any one or more of these terms, including other such terms. For example, one or more parameters, fields, and/or information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs), and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more of the operations described herein may be conditional. For example, one or more operations may be performed if certain criteria are met, such as in computing device, a communication device, an encoder, a decoder, a network, a combination of the above, and/or the like. Example criteria may be based on one or more conditions such as device configurations, traffic load, initial system set up, packet sizes, traffic characteristics, a combination of the above, and/or the like. If the one or more criteria are met, various examples may be used. It may be possible to implement any portion of the examples described herein in any order and based on any condition.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

**Claims**

1. A method comprising:

   determining, by a computing device, a similarity metric, between a first intra coding mode and a second intra coding mode, based on:

   first values of mode derivation parameters, associated with the first intra coding mode, for a first plurality of intra prediction modes (IPMs) ordered based on first priorities of the first plurality of IPMs; and
   second values of mode derivation parameters, associated with the second intra coding mode, for a second plurality of IPMs ordered based on second priorities of the second plurality of IPMs;

   determining, based on the similarity metric and the second intra coding mode, a third intra coding mode for a current block of content; and
   decoding, based on a block generated using the determined third intra coding mode, the current block.

2. The method of claim 1, wherein the determining the similarity metric comprises:

   determining a first difference between:

   a value, from the first values, of a first parameter in the mode derivation parameters for a first IPM of the first plurality of ordered IPMs; and

a value, from the second values, of the first parameter for a first IPM of the second plurality of ordered IPMs; and

determining, based on the first difference being higher than a first threshold, the similarity metric to be a first similarity value.

3. The method of any one of claims 1-2, further comprising:
determining that the second intra coding mode is selected instead of the first intra coding mode for the current block.

4. The method of any one of claims 1-3, wherein the determining the third intra coding mode further comprises:
determining, based on the similarity metric being equal to or below a similarity threshold, the third intra coding mode to be the second intra coding mode.

5. The method of any one of claims 1-4, wherein the determining the third intra coding mode further comprises:
determining, based on the similarity metric being higher than a similarity threshold, the third intra coding mode to be a fourth intra coding mode modified:

based on the second intra coding mode; or
different from the second intra coding mode.

6. The method of any one of claims 1-5, further comprising:
obtaining, from a bitstream, an indication of the second intra coding mode being selected instead of the first intra coding mode for the current block.

7. The method of any one of claims 1-6, wherein the decoding the current block comprises:
reconstructing the block based on the block and a prediction error decoded from a bitstream.

8. The method of any one of claims 1-7, further comprising:

ordering the first plurality of IPMs in a descending order of the first priorities;
ordering the second plurality of IPMs in a descending order of the second priorities; and
ordering the mode derivation parameters for each IPM, of the first plurality of IPMs and the second plurality of IPMs, based on a pre-determined order.

9. The method of any one of claims 1-8, further comprising:

determining the first priorities of the first plurality of IPMs based on respective amplitudes of the first plurality of IPMs in a first histogram of gradients (HoG); and
determining the first priorities of the first plurality of IPMs based on respective amplitudes of the first plurality of IPMs in a second HoG.

10. A method comprising:

determining, by a computing device and based on first values of mode derivation parameters for a first plurality of intra prediction modes (IPMs) and second values of the mode derivation parameters for a second plurality of IPMs, a similarity metric between a first intra coding mode and a second intra coding mode, wherein the determining the similarity metric comprises:

determining a first difference between:

a value, from the first values, of a first parameter in the mode derivation parameters for a first IPM of the first plurality of IPMs; and
a value, from the second values, of the first parameter for a first IPM of the second plurality of IPMs; and

determining, based on the first difference being higher than a first threshold, the similarity metric to be a first similarity value;

determining, based on the similarity metric and the second intra coding mode, a third intra coding mode for a current block of content; and

decoding, based on a block generated using the determined third intra coding mode, the current block.

11. The method of claim 10, further comprising:

ordering the first plurality of IPMs based on first priorities of the first plurality of IPMs;
ordering the second plurality of IPMs based on second priorities of the second plurality of IPMs; and wherein:
the first IPM in the first plurality of ordered IPMs has a same relative position as the first IPM in the second plurality of ordered IPMs.

12. The method of any one of claims 10-11, wherein the determining the similarity metric further comprises:

determining, based on the first difference being equal to or below the first threshold, a second difference between:

a value, from the first values, of the first parameter for the second IPM of the first plurality of IPMs, and
a value, from the second values, of the first parameter for the second IPM of the second plurality of IPMs;

determining, based on the second difference being higher than a second threshold, a third difference between:

a value, from the first values, of a second parameter for the first IPM of the first plurality of IPMs, and
a value, from the second values, of the second parameter for the first IPM of the second plurality of IPMs; and

determining, based on the third difference being higher than a third threshold, the similarity metric to be a second similarity value higher than the first similarity value.

13. A computing device comprising: one or more processors; and memory storing instructions that, when executed by the one or more processors, cause the computing device to perform:

the method of any one of claims 1-9; or
the method of any one of claims 10-12.

14. A system comprising:

a computing device configured to perform:

the method of any one of claims 1-9; or
the method of any one of claims 10-12; and

a second computing device configured to encode the current block.

15. A computer-readable medium storing instructions that, when executed, cause performance of:

the method of any one of claims 1-9; or
the method of any one of claims 10-12.

FIG. 1

EP 4 676 027 A1

FIG. 2

FIG. 3

*FIG. 4*

*FIG. 5*

Vertical Binary Tree
Partition
*602*

Horizontal Binary Tree
Partition
*604*

Vertical Ternary Tree
Partition
*606*

Horizontal Ternary Tree
Partition
*608*

*FIG. 6*

EP 4 676 027 A1

*FIG. 7*

*FIG. 8*

FIG. 9

EP 4 676 027 A1

FIG. 10A

0: Planar
1: DC

FIG. 10B

0: Planar
1: DC

Reference Line #2
912

Reference Line #1
910

Reference Line #0
908

Reference Samples
902

Current Block
904

$x$

$y$

$-1$

$0$

$-1$

$s-1$

$s$

$2s-1$

$s-1$

$s$

$2s-1$

*FIG. 11*

EP 4 676 027 A1

61

FIG. 12

Search Range
1308

Reference Block
1304

Motion Vector
1312

Current Block
1300

Collocated Block
1310

Reference
Picture
1306

Current
Picture
1302

*FIG. 13A*

MVx

Motion Vector
1312

Reference Block
1304

MVy

Collocated Block
1310

*FIG. 13B*

FIG. 14

EP 4 676 027 A1

B2          B1    B0

Current
Block
1500

A1

A0

*FIG. 15A*

Current
Block
1500

C1

C0

*FIG. 15B*

The quick brown fox jumps over the lazy dog. The quick brown fox jumps over the lazy dog. The quick brown fox jumps over the lazy dog.

*FIG. 16A*

The quick brown fox jumps over the lazy dog. The quick brown fox jumps over the lazy dog. The quick brown fox jumps over the lazy dog.

Reference Block 1604

Block Vector 1606

Current Block 1602

*FIG. 16B*

*FIG. 17*

FIG. 18

1812

Template

Reconstructed area

1902

Current
Block

1810

Unavailable area

Window

1910

1908

4x4 block

1906

Window

1904

ampl (ipm)

1912

ipm

ampl (ipm)

1914

ipm

FIG. 19

FIG. 20

*FIG. 21*

2200A

Select, for a current block, a plurality of neighboring blocks to generate a
merged histogram of gradients (MHoG)
*2202*

↓

Obtain DIMD information of each block of the plurality of neighboring blocks
*2204*

↓

Determine the MHoG by combining the DIMD information of each block
according to amplitudes in the DIMD information
*2206*

# FIG. 22A

2200B

Select, for a current block, a plurality of neighboring blocks to generate a
histogram of occurrences (HoC)
*2212*

↓

Obtain DIMD information of each block of the plurality of neighboring blocks
*2214*

↓

Determine the HoC by combining the DIMD information of each block
according to a size/dimensions of each block
*2216*

# FIG. 22B

FIG. 23A

2304

Amplitude (Occurrence) of IPM

1    7    9    13    17    IPM

FIG. 23C

Graphical Representation of Combined DIMD Information from Blocks 1-3 in Histogram of Occurrences (HoC) for Block 0

2302

Amplitude of IPM

1    7    9    13    17    IPM

FIG. 23B

Graphical Representation of Combined DIMD Information from Blocks 1-3 in Merged Histogram of Gradients (MHoG) for Block 0

*2400*

FIG. 24A

*2420*

*Input DIMD candidate*

START

2422

Does DIMD
information
already exist?

yes → 2424

Remove similar candidate in
the table

no

2426

Is the table
full?

yes → 2428

Remove oldest candidate in
the table

no

2430

Add DIMD candidate to the table ← Shift candidates in the table

2432

END

FIG. 24B

*FIG. 25*

FIG. 26

INTRA CODING MODE 2 ⟿ 2704

2718B

| | | Priority decreasing → | | | | |
|---|---|---|---|---|---|---|
| HoG Amplitude | 1206 | 748 | 702 | 632 | 564 | |

MODE DERIVATION PARAMETERS 2706B

| | 1206 | 748 | 702 | 632 | 564 | |
|---|---|---|---|---|---|---|
| Blending Mode Index 2712B | 7 | 52 | 10 | 50 | 53 | 0 |
| Weight 2714B | 16 | 10 | 9 | 8 | 5 | 16 |
| Location Dependency 2716B | 1 | 1 | 1 | 1 | 1 | 0 |

Blending Mode 0 | Blending Mode 1 | ... | Blending Mode N-1 | Blending Mode N

Blending Mode 0 | Blending Mode 1 | ... | Blending Mode N-1 | Blending Mode N

INTRA CODING MODE 1 ⟿ 2702

MODE DERIVATION PARAMETERS 2706A

| | Blending Mode 0 | Blending Mode 1 | ... | Blending Mode N-1 | Blending Mode N | |
|---|---|---|---|---|---|---|
| Blending Mode Index 2712A | 51 | 34 | 8 | 12 | 20 | 0 |
| Weight 2714A | 15 | 11 | 10 | 9 | 4 | 16 |
| Location Dependency 2716A | 0 | 1 | 0 | 1 | 1 | 0 |

Priority decreasing →

| HoG Amplitude | 1298 | 901 | 880 | 840 | 601 |
|---|---|---|---|---|---|

2718A

# FIG. 27

2800

DETERMINE, FOR A FIRST INTRA CODING MODE, FIRST VALUES OF MODE DERIVATION PARAMETERS FOR A FIRST PLURALITY OF INTRA PREDICTION MODES (IPMS) ORDERED ACCORDING TO FIRST PRIORITIES OF THE FIRST PLURALITY OF IPMS
*2802*

DETERMINE, FOR A SECOND INTRA CODING MODE, SECOND VALUES OF THE MODE DERIVATION PARAMETERS FOR A SECOND PLURALITY OF IPMS ORDERED ACCORDING TO SECOND PRIORITIES OF THE SECOND PLURALITY OF IPMS
*2804*

DETERMINE A SIMILARITY METRIC BETWEEN THE SECOND INTRA CODING MODE AND THE FIRST INTRA CODING MODE BASED ON THE FIRST VALUES AND THE SECOND VALUES
*2806*

DETERMINE, BASED ON THE SIMILARITY METRIC AND THE SECOND INTRA CODING MODE, AN INTRA CODING MODE FOR A CURRENT BLOCK
*2808*

ENCODE THE CURRENT BLOCK BASED ON A PREDICTED BLOCK GENERATED USING THE DETERMINED INTRA CODING MODE
*2810*

*FIG. 28A*

2820

DETERMINE, FOR A FIRST INTRA CODING MODE, FIRST VALUES OF MODE DERIVATION PARAMETERS FOR A FIRST PLURALITY OF INTRA PREDICTION MODES (IPMS) ORDERED ACCORDING TO FIRST PRIORITIES OF THE FIRST PLURALITY OF IPMS
*2822*

DETERMINE, FOR A SECOND INTRA CODING MODE, SECOND VALUES OF THE MODE DERIVATION PARAMETERS FOR A SECOND PLURALITY OF IPMS ORDERED ACCORDING TO SECOND PRIORITIES OF THE SECOND PLURALITY OF IPMS
*2824*

DETERMINE A SIMILARITY METRIC BETWEEN THE SECOND INTRA CODING MODE AND THE FIRST INTRA CODING MODE BASED ON THE FIRST VALUES AND THE SECOND VALUES
*2826*

DETERMINE, BASED ON THE SIMILARITY METRIC AND THE SECOND INTRA CODING MODE, AN INTRA CODING MODE FOR A CURRENT BLOCK
*2828*

DECODE THE CURRENT BLOCK BASED ON A PREDICTED BLOCK GENERATED USING THE DETERMINED INTRA CODING MODE
*2830*

*FIG. 28B*

Processor
2904

Main Memory
2906

Secondary Memory
2908

Hard Disk Drive
2910

Removable
Storage Drive
2912

Interface
2914

Communication
Infrastructure
2902

Removable
Storage Unit
2916

Removable
Storage Unit
2918

Communication
Interface
2920

Communication Path
2922

2900

FIG. 29

*FIG. 30*

Europäisches Patentamt

European Patent Office

Office européen des brevets

## EUROPEAN SEARCH REPORT

Application Number

EP 25 18 7320

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | YOUVALARI (XIAOMI) R G ET AL: "EE2-2.2: Occurrence-based intra coding (OBIC)", 34. JVET MEETING; 20240417 - 20240424; RENNES; (THE JOINT VIDEO EXPLORATION TEAM OF ISO/IEC JTC1/SC29/WG11 AND ITU-T SG.16 ), , no. JVET-AH0076 10 April 2024 (2024-04-10), XP030317311, Retrieved from the Internet: URL:https://jvet-experts.org/doc_end_user/documents/34_Rennes/wg11/JVET-AH0076-v1.zip JVET-AH0076_v1.docx [retrieved on 2024-04-10] * the whole document * | 1-15 | INV. H04N19/103 H04N19/11 H04N19/176 H04N19/593 |
| Y | WO 2024/131778 A1 (MEDIATEK INC [CN]) 27 June 2024 (2024-06-27) * paragraph [0088] - paragraph [0092] * | 1-15 | |
| Y | J-R OHM: "Meeting Report of the 34th JVET Meeting", 34. JVET MEETING; 20240417 - 20240424; RENNES; (THE JOINT VIDEO EXPLORATION TEAM OF ISO/IEC JTC1/SC29/WG11 AND ITU-T SG.16 ), , no. JVET-AH1000 ; m68130 22 May 2024 (2024-05-22), XP030319744, Retrieved from the Internet: URL:https://jvet-experts.org/doc_end_user/documents/34_Rennes/wg11/JVET-AH1000-v1.zip JVET-AH1000-v1.docx [retrieved on 2024-05-22] * page 161, line 1 - page 168, paragraph Test 3.1 * | 1-15 | TECHNICAL FIELDS SEARCHED (IPC) H04N |

-/--

The present search report has been drawn up for all claims

| Place of search | Date of completion of the search | Examiner |
|---|---|---|
| Munich | 24 October 2025 | Schoeyer, Marnix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EUROPEAN SEARCH REPORT

Application Number

EP 25 18 7320

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2024/008611 A1 (INTERDIGITAL CE PATENT HOLDINGS SAS [FR]) 11 January 2024 (2024-01-11) * paragraph [0177] - paragraph [0178] * * paragraph [0193] - paragraph [0200] * * paragraph [0229] - paragraph [0231] * ----- | 1-15 | |
| A | ZHAO (BYTEDANCE) L ET AL: "EE2-4.1 related: Alternative intra mode derivation for LFNST/NSPT", 34. JVET MEETING; 20240417 - 20240424; RENNES; (THE JOINT VIDEO EXPLORATION TEAM OF ISO/IEC JTC1/SC29/WG11 AND ITU-T SG.16 ), , no. JVET-AH0218 11 April 2024 (2024-04-11), XP030317665, Retrieved from the Internet: URL:https://jvet-experts.org/doc_end_user/documents/34_Rennes/wg11/JVET-AH0218-v1.zip JVET-AH0218-v1.docx [retrieved on 2024-04-11] * the whole document * ----- | 1-15 | TECHNICAL FIELDS SEARCHED (IPC) |
| X,P | WO 2025/098821 A1 (KONINKLIJKE PHILIPS NV [NL]) 15 May 2025 (2025-05-15) * paragraph [0279] - paragraph [0346] * ----- | 1-15 | |

The present search report has been drawn up for all claims

| Place of search | Date of completion of the search | Examiner |
|---|---|---|
| Munich | 24 October 2025 | Schoeyer, Marnix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.............................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 7320

This annex lists the patent family members relating to the patent documents cited in the above-mentioned European search report.
The members are as contained in the European Patent Office EDP file on
The European Patent Office is in no way liable for these particulars which are merely given for the purpose of information.

24-10-2025

| Patent document cited in search report | Publication date | Patent family member(s) | | Publication date |
|---|---|---|---|---|
| WO 2024131778 A1 | 27-06-2024 | NONE | | |
| WO 2024008611 A1 | 11-01-2024 | CN | 119631399 A | 14-03-2025 |
| | | EP | 4529728 A1 | 02-04-2025 |
| | | KR | 20250030967 A | 05-03-2025 |
| | | TW | 202404367 A | 16-01-2024 |
| | | WO | 2024008611 A1 | 11-01-2024 |
| WO 2025098821 A1 | 15-05-2025 | NONE | | |

EPO FORM P0459

For more details about this annex : see Official Journal of the European Patent Office, No. 12/82

**REFERENCES CITED IN THE DESCRIPTION**

**Patent documents cited in the description**

- US 63667220